# EUROPEAN PATENT APPLICATION

(11) **EP 4 769 630 A1**
(43) Date of publication of application: **01.07.2026**
(21) Application number: 24871064.2
(22) Date of filing: 28.09.2024
(51) Int. Cl.: H01M 10/0587, H01M 10/058, H01M 10/04

(54) **WINDING DEVICE, BATTERY PROCESSING DEVICE, AND BATTERY PRODUCTION LINE**

(30) Priority: 28.09.2023 CN 202322664538 U; 10.11.2023 CN 202311498575; 11.01.2024 CN 202410043912; 11.01.2024 CN 202420072183 U; 07.05.2024 CN 202410557866; 07.05.2024 CN 202410557506
(71) Applicant: Contemporary Amperex Technology Co., Limited, Ningde, Fujian 352100 (CN)
(72) Inventor: LUO, Zhongping, Fujian 352100 (CN); XIE, Ming, Fujian 352100 (CN); ZHANG, Xin, Fujian 352100 (CN); LI, Zhibin, Fujian 352100 (CN); TANG, Minghao, Fujian 352100 (CN); ZHANG, Shengwu, Fujian 352100 (CN)
(74) Representative: Gong, Jinping
(86) International application number: PCT/CN2024/122087
(87) International publication number: WO 2025/067529

(57) **Abstract**

A winding device, a battery processing device, and a battery production line are provided, belonging to the technical field of battery manufacturing. The winding device is used for producing an electrode assembly, the electrode assembly comprising a first electrode plate, a second electrode plate, a first separator and a second separator. The winding device comprises: a first feeding mechanism, a second feeding mechanism, a third feeding mechanism, a fourth feeding mechanism, a first combining mechanism, a winding mechanism and a first detection apparatus. The first combining mechanism is used for combining incoming materials comprising at least the first electrode plate, the first separator and the second electrode plate into a first composite plate. The winding mechanism is located downstream of the first combining mechanism, and is used for winding an incoming material comprising at least the first composite plate to form the electrode assembly. The first detection apparatus is located between the first combining mechanism and the winding mechanism, and is used for detecting the first composite plate.

## Description

### CROSS-REFERENCE TO RELATED APPLICATION

This application is proposed based on Chinese patent application No.202322664538.X filed on September 28, 2023, Chinese patent application No.202311498575.6 filed on November 10, 2023, Chinese patent application No.202410043912.0 filed on January 11, 2024, Chinese patent application No.202420072183.7 filed no January 11, 2024, Chinese patent application No.202410557866.6 filed on May 7, 2024, and Chinese patent application No.202410557506.6 filed on May 7, 2024, and claims the priority of the above Chinese patent applications, and the entire contents of the above Chinese patent applications are hereby incorporated into this application by reference.

### TECHNICAL FIELD

The present application relates to the technical field of battery manufacturing, and in particular, to a winding device, a battery processing device, and a battery production line.

### BACKGROUND

In the related art, in a process of producing electrode assemblies using a winding device, a cathode electrode plate, an anode electrode plate and a separator are fed into the winding device separately, and a detector is disposed at a winding mechanism to acquire the offset between layers. This method is prone to having an overhang (OH) missed detection problem.

### SUMMARY OF THE INVENTION

Embodiments of the present application provide a winding device, a battery processing device, and a battery production line, and the winding device can mitigate an OH missed detection problem.

In a first aspect, an embodiment of the present application provides a winding device, configured to produce an electrode assembly. The electrode assembly includes a first electrode plate, a second electrode plate, a first separator and a second separator. The winding device includes: a first feeding mechanism, a second feeding mechanism, a third feeding mechanism, a fourth feeding mechanism, a first combining mechanism, a winding mechanism and a first detection apparatus. The first feeding mechanism is configured to release the first electrode plate; the second feeding mechanism is configured to release the second electrode plate; the third feeding mechanism is configured to release the first separator; and the fourth feeding mechanism is configured to release the second separator. The first combining mechanism is disposed downstream of the first feeding mechanism, the second feeding mechanism, and the third feeding mechanism, and configured to combine incoming materials including at least the first electrode plate, the first separator, and the second electrode plate into a first composite plate. The winding mechanism is located downstream of the first combining mechanism, and configured to wind an incoming material including at least the first composite plate to form the electrode assembly. The first detection apparatus is located between the first combining mechanism and the winding mechanism and configured to detect the first composite plate.

In the above technical solution, by disposing the first combining mechanism, the combining of the first electrode plate, the second electrode plate and the first separator is completed in advance before the electrode plate is wound, and by disposing the first detection apparatus, the first composite plate is detected before the first composite plate enters the winding mechanism. Possible defects in the electrode plate and the separator can be discovered in time, such as OH missed detection (OH between a cathode electrode plate and an anode electrode plate, or OH between the separator and the electrode plate), wrinkling of the separator head, crushing and damage of the electrode plate, head and tail swinging and other defects, and detection blind zones are reduced, so that unqualified products can be eliminated in time, thereby helping to improve the quality of the electrode assembly.

In some embodiments, the fourth feeding mechanism is disposed upstream of the first combining mechanism, and the first combining mechanism is configured to combine incoming materials including at least the first electrode plate, the first separator, the second electrode plate and the second separator into the first composite plate.

In the above technical solution, when the fourth feeding mechanism is disposed upstream of the first combining mechanism such that the second separator is further combined in the first composite plate, at this time, the first composite plate detected by the first detection apparatus includes at least the first electrode plate, the first separator, the second electrode plate and the second separator that are stacked, which is conducive to more comprehensive detection. Moreover, the first combining mechanism can combine at least the first electrode plate, the first separator, the second electrode plate and the second separator to obtain the first composite plate. Compared with a solution of combining the first electrode plate, the first separator, the second electrode plate and the second separator at a winding needle, the functional requirements of the winding needle can be reduced, which facilitates increasing a winding speed of the winding needle, and improves production efficiency. Moreover, the combining of the electrode plate and the separator can be completed before winding, so as to reduce displacement of the electrode plate and the separator in a winding process, thereby improving the quality of the electrode assembly.

In some embodiments, the first combining mechanism is an edge sealing mechanism, and is configured to seal and connect at least one of two side edges of the first separator and the second separator in a width direction.

In the above technical solution, the edge sealing mechanism can connect edges of the first separator and the second separator together to achieve edge sealing. When an external force is removed, the first separator and the second separator are not separated, causing the second electrode plate to be exposed. In the winding process of the electrode assembly, the separator is not prone to folding, and is not prone to being disturbed by holes in a solution injection process, so that the risk of overlapping of the second electrode plate with the first electrode plate and overlapping of the second electrode plate with a shell of a battery cell is effectively reduced, thereby mitigating a lithium plating problem.

In some embodiments, the winding device further includes a second combining mechanism, the second combining mechanism is located upstream of the first combining mechanism and located downstream of the first feeding mechanism and the third feeding mechanism, and the second combining mechanism is configured to combine the first electrode plate and the first separator into a second composite plate.

In the above technical solution, by disposing the second combining mechanism upstream of the first combining mechanism, the first electrode plate and the first separator can be combined preferentially. The number of layers of materials combined here is relatively small, the combining quality can be well controlled, and the relative position of the first electrode plate and the first separator, as well as the respective states of the first electrode plate and the first separator can be well guaranteed, thereby improving the product quality.

In some embodiments, the second combining mechanism is a composite mechanism, and is configured to fixedly connect the first electrode plate with the first separator in the second composite plate.

In the above technical solution, by disposing the second combining mechanism as a composite mechanism, the offset of the first electrode plate relative to the first separator in the winding and use processes can be reduced, which is beneficial to improving the accuracy of the relative position between the materials, thereby improving the product quality.

In some embodiments, the winding device further includes a second detection apparatus, and the second detection apparatus is located between the second combining mechanism and the first combining mechanism and configured to detect the second composite plate.

In the above technical solution, by disposing the second detection apparatus between the second combining mechanism and the first combining mechanism, the second detection apparatus can be used to detect the second composite plate obtained by combining by the second combining mechanism and not entering the first combining mechanism, so as to timely discover defects and abnormalities of the second composite plate, and facilitate timely response when problems occur in the second composite plate, thereby reducing the negative impact on subsequent processes and improving the product quality.

In some embodiments, the winding device further includes a first temporary storage mechanism, and the first temporary storage mechanism is disposed between the second combining mechanism and the first combining mechanism and configured to temporarily store the second composite plate.

In the above technical solution, the first temporary storage mechanism is disposed between the second combining mechanism and the first combining mechanism. The first temporary storage mechanism may temporarily store part of the second composite plate after the first electrode plate and the first separator are combined. The first temporary storage mechanism can temporarily store part of the second composite plate when the winding needle switches or other pulling force is reduced, and release the temporarily stored second composite plate when the pulling force is normal, so as to reduce the negative impact of winding needle switching, electrode plate cutting-off or other situations on the feeding of the first feeding mechanism and the third feeding mechanism, and reduce the occurrence of deceleration or shutdown of the first feeding mechanism and the third feeding mechanism, so that the first feeding mechanism and the third feeding mechanism can continue feeding, and the production efficiency is improved.

In some embodiments, the winding device includes a first cut-off mechanism for cutting off the first electrode plate, and the first cut-off mechanism is disposed between the first feeding mechanism and the second combining mechanism.

In the above technical solution, during the production process, the first temporary storage mechanism temporarily stores the materials and can continuously convey the materials downstream, so that the winding needle can operate without deceleration and is not affected by the operation of the first cut-off mechanism upstream of the first temporary storage mechanism. By temporary storage through the first temporary storage mechanism, the first temporary storage mechanism can still deliver the second composite plate to the first combining mechanism without reducing a rate of the winding needle in a process that the first cut-off mechanism cuts off the first electrode plate, thereby improving the winding efficiency and thus improving the overall production capacity. Moreover, the first cut-off mechanism can be disposed spatially away from the winding mechanism, so as to alleviate the adverse effect on the quality of the electrode assembly caused by chips formed by cutting falling into the electrode assembly wound on the winding needle, thereby helping to further improve the quality of the electrode assembly.

In some embodiments, the second electrode plate and the second separator are fed into the first combining mechanism separately, the winding device includes a second cut-off mechanism for cutting off the second electrode plate, and the second cut-off mechanism is disposed between the second feeding mechanism and the first combining mechanism.

In the above technical solution, the second cut-off mechanism can be disposed spatially away from the winding mechanism, so as to alleviate the adverse effect on the quality of the electrode assembly caused by chips formed by cutting falling into the electrode assembly wound on the winding needle, thereby helping to further improve the quality of the electrode assembly.

In some embodiments, the second cut-off mechanism includes a cam cutter.

In the above technical solution, the second cut-off mechanism does not need to perform follow-up cut on the second electrode plate, and the second electrode plate does not need to decelerate in response to the cutting-off, so that the second cut-off mechanism can cut off the second electrode plate without deceleration, which can improve the production capacity. Moreover, because the space requirement for performing the follow-up cut is eliminated, it is helpful to reduce space occupancy.

In some embodiments, the winding device further includes a third combining mechanism, the third combining mechanism is located upstream of the first combining mechanism and located downstream of the second feeding mechanism and the fourth feeding mechanism, and the third combining mechanism is configured to combine the second electrode plate and the second separator into a third composite plate.

In the above technical solution, by disposing the third combining mechanism upstream of the first combining mechanism, the second electrode plate and the second separator can be combined preferentially. The number of layers of materials combined here is relatively small, the combining quality can be well controlled, and the relative position of the second electrode plate and the second separator, as well as the respective states of the second electrode plate and the second separator can be well guaranteed, thereby improving the product quality.

In some embodiments, the third combining mechanism is a composite mechanism, and is configured to fixedly connect the second electrode plate with the second separator in the third composite plate.

In the above technical solution, the offset of the second electrode plate relative to the second separator in the winding and use processes can be reduced, which is beneficial to improving the accuracy of the relative position between the materials, thereby improving the product quality.

In some embodiments, the winding device further includes a third detection apparatus, and the third detection apparatus is located between the third combining mechanism and the first combining mechanism and configured to detect the third composite plate.

In the above technical solution, by disposing the third detection apparatus between the third combining mechanism and the first combining mechanism, the third detection apparatus can be used to detect the third composite plate obtained by combining by the third combining mechanism and not entering the first combining mechanism, so as to timely discover defects and abnormalities of the third composite plate, and facilitate timely response when problems occur in the third composite plate, thereby reducing the negative impact on subsequent processes and improving the product quality.

In some embodiments, the winding device further includes a second temporary storage mechanism, and the second temporary storage mechanism is disposed between the third combining mechanism and the first combining mechanism and configured to temporarily store the third composite plate.

In the above technical solution, the second temporary storage mechanism can play a role in temporarily storing the third composite plate. When there is a speed difference before and after the second temporary storage mechanism, the second temporary storage mechanism can temporarily store and release part of the third composite plate in time, thereby solving a speed reduction problem or a wrinkle problem caused by insufficient tension, and improving the production capacity and the product quality. Moreover, the second temporary storage mechanism can temporarily store part of the third composite plate after the second electrode plate and the second separator are combined. The second temporary storage mechanism can temporarily store part of the third composite plate when the winding needle switches or other tension is reduced, and release the temporarily stored third composite plate when the tension is normal, so as to reduce the negative impact of winding needle switching, electrode plate cutting-off or other situations on the feeding of the second feeding mechanism and the fourth feeding mechanism, and reduce the occurrence of deceleration or shutdown of the second feeding mechanism and the fourth feeding mechanism, so that the second feeding mechanism and the fourth feeding mechanism can continue feeding, and the production efficiency is improved.

In some embodiments, the winding device includes a second cut-off mechanism for cutting off the second electrode plate, and the second cut-off mechanism is disposed between the second feeding mechanism and the third combining mechanism.

In the above technical solution, during the production process, the second temporary storage mechanism temporarily stores the materials and can continuously convey the materials downstream, so that the winding needle can operate without deceleration and is not affected by the operation of the second cut-off mechanism upstream of the second temporary storage mechanism. By temporary storage through the second temporary storage mechanism, the second temporary storage mechanism can still deliver the third composite plate to the third combining mechanism without reducing a rate of the winding needle in a process that the second cut-off mechanism cuts off the second electrode plate, thereby improving the winding efficiency and thus improving the overall production capacity. Moreover, the second cut-off mechanism can be disposed spatially away from the winding mechanism, so as to alleviate the adverse effect on the quality of the electrode assembly caused by chips formed by cutting falling into the electrode assembly wound on the winding needle, thereby helping to further improve the quality of the electrode assembly.

In some embodiments, the winding device further includes a fifth combining mechanism, the fifth combining mechanism is located upstream of the first combining mechanism and located downstream of the third feeding mechanism, the second feeding mechanism and the fourth feeding mechanism, and the fifth combining mechanism is configured to combine the first separator, the second electrode plate and the second separator into a fifth composite plate.

In the above technical solution, by disposing the fifth combining mechanism and the first combining mechanism, the second separator, the second electrode plate, the first separator and the first electrode plate are formed into the first composite plate through two steps in succession. In this way, the operation of forming the first composite plate from the second separator, the second electrode plate, the first separator and the first electrode plate can be more strictly controlled, which helps to improve the quality of the first composite plate and further helps to improve the quality of the electrode assembly. By adopting the above technical solution, the fifth composite plate including the second electrode plate can be formed by the fifth combining mechanism first, and then the first composite plate including the first electrode plate can be formed by the first combining mechanism. The second electrode plate and the first electrode plate are combined successively. In this way, the combining quality of the second electrode plate and the first electrode plate can be controlled separately, which can help improve the quality of the first composite plate and thus improve the quality of the electrode assembly.

In some embodiments, the fifth combining mechanism is an edge sealing mechanism, and is configured to seal and connect at least one of two side edges of the first separator and the second separator in a width direction.

In the above technical solution, the edge sealing mechanism can connect edges of the first separator and the second separator together to achieve edge sealing. When an external force is removed, the first separator and the second separator are not separated, causing the second electrode plate to be exposed. In the winding process of the electrode assembly, the separator is not prone to folding, and is not prone to being disturbed by holes in a solution injection process, so that the risk of overlapping of the second electrode plate with the first electrode plate and overlapping of the second electrode plate with a shell of a battery cell is effectively reduced, thereby mitigating a lithium plating problem. For example, the edge sealing mechanism may include two edge sealing rollers disposed opposite to each other, and the two edge sealing rollers can heat the two side edges of the first separator and the second separator and apply a predetermined pressure in a thickness direction to achieve edge sealing and connection of the first separator and the second separator.

In some embodiments, the fifth combining mechanism is a composite mechanism, and is configured to fixedly connect the second electrode plate in the fifth composite plate with the first separator and the second separator respectively.

In the above technical solution, the offset of the first electrode plate relative to the first separator and the second separator in the winding and use processes can be reduced, which is beneficial to improving the accuracy of the relative position between the materials, thereby improving the product quality.

In some embodiments, the first combining mechanism is a composite mechanism, and is configured to fixedly connect the fifth composite plate with the first electrode plate.

In the above technical solution, when the first combining mechanism is the composite mechanism, and is configured to fixedly connect the fifth composite plate with the first electrode plate, the offset of the first electrode plate relative to the fifth composite plate in the winding and use processes can be reduced, which is beneficial to improving the accuracy of the relative position between the materials, thereby improving the product quality.

In some embodiments, the winding device further includes a fifth detection apparatus, and the fifth detection apparatus is located between the fifth combining mechanism and the first combining mechanism and configured to detect the fifth composite plate.

In the above technical solution, the fifth detection apparatus can detect the fifth composite plate, so as to obtain the combining status of the first separator, the second electrode plate, and the second separator, and thus strictly control the quality of the fifth composite plate, which can help improve the quality of the electrode assembly.

In some embodiments, the winding device further includes a fourth temporary storage mechanism, and the fourth temporary storage mechanism is disposed between the fifth combining mechanism and the first combining mechanism and configured to temporarily store the fifth composite plate.

In the above technical solution, the fourth temporary storage mechanism can play a role in temporarily storing the fifth composite plate. When there is a speed difference before and after the fourth temporary storage mechanism, the fourth temporary storage mechanism can temporarily store and release part of the fifth composite plate in time, thereby solving a speed reduction problem or a wrinkle problem caused by insufficient tension, and improving the production capacity and the product quality.

In some embodiments, the winding device includes a second cut-off mechanism for cutting off the second electrode plate, and the second cut-off mechanism is disposed between the second feeding mechanism and the fifth combining mechanism.

In the above technical solution, when the second cut-off mechanism needs to decelerate to cut off the second electrode plate, the fourth temporary storage mechanism can release the temporarily stored fifth composite plate to be supplied to the first combining mechanism, so that the first combining mechanism can continuously and uninterruptedly composite the fifth composite plate and the first electrode plate to form the first composite plate without stopping, and further the winding mechanism can continuously and uninterruptedly wind the first composite plate without stopping. In this way, the winding efficiency of the winding device can be improved, thereby improving the production efficiency of the electrode assembly. Moreover, the second cut-off mechanism can be disposed spatially away from the winding mechanism, so as to alleviate the adverse effect on the quality of the electrode assembly caused by chips formed by cutting falling into the electrode assembly wound on the winding needle, thereby helping to further improve the quality of the electrode assembly.

In some embodiments, the winding device further includes a fifth temporary storage mechanism, and the fifth temporary storage mechanism is disposed between the first combining mechanism and the winding mechanism and configured to temporarily store the first composite plate.

In the above technical solution, the fifth temporary storage mechanism can temporarily store the first composite plate located between the first combining mechanism and the winding mechanism. When there is a speed difference before and after the fifth temporary storage mechanism, the fifth temporary storage mechanism can temporarily store and release part of the first composite plate in time, thereby solving a speed reduction problem or a wrinkle problem caused by insufficient tension, and improving the production capacity and the product quality.

In some embodiments, the winding device includes a first cut-off mechanism for cutting off the first electrode plate, and the first cut-off mechanism is disposed between the first feeding mechanism and the first combining mechanism.

In the above technical solution, when the first cut-off mechanism needs to decelerate to cut off the first electrode plate, the fifth temporary storage mechanism can release the temporarily stored first composite plate to be supplied to the winding mechanism, so that the winding mechanism can continuously and uninterruptedly wind the first composite plate without stopping. In this way, the winding efficiency of the winding device can be improved, thereby improving the production efficiency of the electrode assembly. Moreover, the first cut-off mechanism can be disposed spatially away from the winding mechanism, so as to alleviate the adverse effect on the quality of the electrode assembly caused by chips formed by cutting falling into the electrode assembly wound on the winding needle, thereby helping to further improve the quality of the electrode assembly.

In some embodiments, the winding device includes a third cut-off mechanism for cutting off the first separator and the second separator, and the third cut-off mechanism is disposed between the first combining mechanism and the winding mechanism.

In the above technical solution, a length of the separator can be made longer than a length of the electrode plate relatively easily, thereby meeting the design requirements of the electrode assembly, and only one third cut-off mechanism needs to be disposed, which can simplify the device, reduce costs and save space.

In some embodiments, a position where the second separator and the first composite plate are combined is located downstream of the first detection apparatus.

In the above technical solution, disposing the first detection apparatus upstream of the winding mechanism can more comprehensively detect the first composite plate formed by three-in-one stacking of the first electrode plate, the first separator and the second electrode plate, thereby reducing the detection blind zones and improving the detection accuracy. In addition, both sides of the first composite plate are electrode plates. During the conveying of the first composite plate, friction force on both sides of the first composite plate in its thickness direction is consistent is size. When passing through a conveying roller, it is not prone for the roller to detach from the electrode plate.

In some embodiments, the first combining mechanism is a composite mechanism, and is configured to fixedly connect both the first electrode plate and the second electrode plate in the first composite plate with the first separator.

In the above technical solution, the offset of the first electrode plate relative to the first separator, the offset of the second electrode plate relative to the first separator, and the offset of the first electrode plate relative to the second electrode plate in the winding and use processes can be reduced, which is beneficial to improving the accuracy of the relative position between the materials, thereby improving the product quality.

In some embodiments, the winding device further includes a sixth combining mechanism, the sixth combining mechanism is located between the first combining mechanism and the winding mechanism, the fourth feeding mechanism is located upstream of the sixth combining mechanism, and the sixth combining mechanism is configured to combine the first composite plate and the second separator into a sixth composite plate.

In the above technical solution, by disposing the sixth combining mechanism downstream of the first combining mechanism, the second separator provided by the sixth combining mechanism can be first combined with the first composite plate and then fed into the winding mechanism together, so that the relative position of the second separator and the sixth composite plate is more reliable and not prone to moving, which is beneficial to improving the reliability of insulating the first electrode plate from the second electrode plate by the second separator in the electrode assembly after winding. Furthermore, by disposing the sixth combining mechanism and the winding mechanism in a spacing mode, a problem of crowded space around the winding mechanism can be avoided. In addition, the winding device separates unwinding mechanisms from the winding mechanism, making the layout flexible and convenient.

In some embodiments, the sixth combining mechanism is an edge sealing mechanism, and is configured to seal and connect two side edges of the first separator and the second separator in a width direction.

In the above technical solution, the first separator and the second separator are not separated, causing the second electrode plate to be exposed. In the winding process of the electrode assembly, the separator is not prone to folding, and is not prone to being disturbed by holes in a solution injection process, so that the risk of overlapping of the second electrode plate with the first electrode plate and overlapping of the second electrode plate with a shell of a battery cell is effectively reduced, thereby mitigating a lithium plating problem.

In some embodiments, the winding device further includes a sixth detection apparatus, and the sixth detection apparatus is located between the sixth combining mechanism and the winding mechanism and configured to detect the sixth composite plate.

In the above technical solution, the sixth detection apparatus is disposed between the sixth combining mechanism and the winding mechanism, and can comprehensively detect a state of the sixth composite plate, and the detection result can have a high accuracy. When the sixth combining mechanism is an edge sealing mechanism, the sixth detection apparatus can be used to detect an edge sealing state of the sixth composite plate, thereby improving the reliability of edge sealing and enabling the separator to reliably limit and protect the second electrode plate.

In some embodiments, the winding device includes a third cut-off mechanism for cutting off the first separator and the second separator, and the third cut-off mechanism is disposed between the sixth combining mechanism and the winding mechanism.

In the above technical solution, a length of the separator can be made longer than a length of the electrode plate relatively easily, thereby meeting the design requirements of the electrode assembly, and only one third cut-off mechanism needs to be disposed, which can simplify the device, reduce costs and save space.

In some embodiments, the winding device further includes a sixth temporary storage mechanism, and the sixth temporary storage mechanism is disposed between the first combining mechanism and the winding mechanism and configured to temporarily store the first composite plate.

In the above technical solution, the sixth temporary storage mechanism can temporarily store the first composite plate located between the first combining mechanism and the winding mechanism. When there is a speed difference before and after the sixth temporary storage mechanism, the sixth temporary storage mechanism can temporarily store and release part of the first composite plate in time, thereby solving a speed reduction problem or a wrinkle problem caused by insufficient tension, and improving the production capacity and the product quality.

In some embodiments, the winding device includes a first cut-off mechanism for cutting the first electrode plate and a second cut-off mechanism for cutting off the second electrode plate, the first cut-off mechanism is disposed between the first feeding mechanism and the first combining mechanism, and the second cut-off mechanism is disposed between the second feeding mechanism and the first combining mechanism.

In the above technical solution, when the first electrode plate and the second electrode plate are cut off in advance before the first combining mechanism, the sixth temporary storage mechanism can temporarily store and release the first composite plate, thereby ensuring that winding of electrode plate by the winding mechanism is not affected when the electrode plate is cut off, thereby significantly improving the winding efficiency. Moreover, both the first cut-off mechanism and the second cut-off mechanism can be disposed spatially away from the winding mechanism, so as to alleviate the adverse effect on the quality of the electrode assembly caused by chips formed by cutting falling into the electrode assembly wound on the winding needle, thereby helping to further improve the quality of the electrode assembly.

In some embodiments, the first electrode plate, the first separator and the second electrode plate are fed into the first combining mechanism separately.

In the above technical solution, the mechanism can be simplified, and the need to dispose a combining mechanism upstream of the first combining mechanism is eliminated, thereby saving space occupation.

In some embodiments, the fourth feeding mechanism and the first composite plate are combined at the winding mechanism.

In the above technical solution, the mechanism can be simplified, and the need to dispose a combining mechanism downstream of the first combining mechanism is eliminated, thereby saving space occupation.

In a second aspect, an embodiment of the present application provides a battery processing device, including a winding device.

The battery processing device provided by the embodiment of the present application, by adopting the winding device involved in the above embodiments, can improve the layout rationality of the winding device, so as to improve the layout rationality of the battery processing device, and is beneficial to the layout of functional apparatuses such as a first temporary storage apparatus, a second temporary storage apparatus, a first detection apparatus, and a second detection apparatus, thereby helping to improve the quality of an electrode assembly, so as to improve the quality of a battery.

In a third aspect, an embodiment of the present application provides a battery production line, including a winding device or a battery processing device.

The battery production line provided by the embodiment of the present application, by adopting the winding device or the battery processing device involved in the above embodiments, can improve the layout rationality of the winding device, so as to improve the layout rationality of the battery processing device, and is beneficial to the layout of functional apparatuses such as a first temporary storage apparatus, a second temporary storage apparatus, a first detection apparatus, and a second detection apparatus, thereby helping to improve the quality of an electrode assembly, so as to improve the quality of a battery.

The foregoing description is merely an overview of the technical solutions of the present application. In order that technical means of the present application can be understood more clearly so that the technical means can be implemented according to content of the specification, and in order that the foregoing and other objectives, features, and advantages of the present application can be understood more clearly, specific implementations of the present application are described below.

### BRIEF DESCRIPTION OF DRAWINGS

In order to more clearly illustrate the technical solutions of the embodiments of the present application, the accompanying drawings that need to be used in the embodiments will be briefly introduced below, and it is to be understood that the following accompanying drawings only show some embodiments of the present application and therefore should not be regarded as limiting the scope. For those of ordinary skill in the art, other relevant accompanying drawings can also be obtained based on these accompanying drawings without creative work.
FIG. 1 is a schematic diagram of a battery provided by some embodiments of the present application.
FIG. 2 is a schematic diagram of a battery cell provided by some embodiments of the present application.
FIG. 3 is a schematic diagram of an electrode assembly provided by some embodiments of the present application.
FIG. 4 is a schematic diagram of a winding device provided by some embodiments of the present application.
FIG. 5 is a schematic diagram of a winding device provided by some embodiments of the present application.
FIG. 6 is a schematic detection diagram of a first detection mechanism provided by some embodiments of the present application.
FIG. 7 is a schematic detection diagram of a first detection mechanism provided by some embodiments of the present application.
FIG. 8 is a schematic detection diagram of a second detection mechanism provided by some embodiments of the present application.
FIG. 9 is a schematic detection diagram of a second detection mechanism provided by some embodiments of the present application.
FIG. 10 is a schematic diagram of a winding device provided by some embodiments of the present application.
FIG. 11 is a schematic diagram of a winding device provided by some embodiments of the present application.
FIG. 12 is a schematic diagram of a winding device provided by some embodiments of the present application.
FIG. 13 is a partial enlarged view of FIG. 12.
FIG. 14 is a schematic diagram of a winding device provided by some embodiments of the present application.
FIG. 15 is a schematic diagram of a winding device provided by some embodiments of the present application.
FIG. 16 is a schematic diagram of a winding device provided by some embodiments of the present application.
FIG. 17 is a schematic diagram of a winding device provided by some embodiments of the present application.
FIG. 18 is a schematic diagram of a winding device provided by some embodiments of the present application.
FIG. 19 is a schematic diagram of a winding device provided by some embodiments of the present application.
FIG. 20 is a schematic diagram of a winding device provided by some embodiments of the present application.
FIG. 21 is a schematic diagram of a winding device provided by some embodiments of the present application.
FIG. 22 is a schematic diagram of a winding mechanism provided by some embodiments of the present application.
FIG. 23 is a schematic detection diagram of a seventh detection apparatus provided by some embodiments of the present application.
FIG. 24 is a schematic detection diagram of a tenth detection apparatus provided by some embodiments of the present application.
FIG. 25 is a schematic diagram of a first composite plate provided by some embodiments of the present application.
FIG. 26 is a schematic detection diagram of a sixth detection apparatus provided by some embodiments of the present application.
FIG. 27 is a schematic detection diagram of an eighth detection apparatus provided by some embodiments of the present application.
FIG. 28 is a schematic detection diagram of an eighth detection apparatus provided by some embodiments of the present application.
FIG. 29 is a schematic diagram of a battery production line provided by some embodiments of the present application.

Reference numerals:
Battery production line 1000; battery processing device 1001;
Winding device 100; assembly device 400; stacking device 500;
First device 101; second device 102;
First feeding mechanism 11; second feeding mechanism 12; first conveyor belt 14; second conveyor belt 15;
Third feeding mechanism 21; fourth feeding mechanism 22;
First combining mechanism 31; first composite roller of first mechanism 311; second composite roller of first mechanism 312; first composite gap 313;
Second combining mechanism 32; third combining mechanism 33; fourth combining mechanism 34;
Fifth combining mechanism 35; first composite roller of fifth mechanism 351; second composite roller of fifth mechanism 352; fifth composite gap 353;
Sixth combining mechanism 36;
Winding mechanism 40; turret 41; workstation 401; winding workstation 4101; finishing workstation 4102;
Taping workstation 4103; unloading workstation 4104; retraction workstation 4105; winding needle 42;
Finishing assembly 43; finishing roller 431; taping roller 432;
Unloading mechanism 50; clamping jaw 51; platform 52;
First cut-off mechanism 61; first cutter 611; first abutting member 612;
Second cut-off mechanism 62; first cam cutter 621; second abutting member 622;
Third cut-off mechanism 63; third cam cutter 631; third abutting member 632;
First deviation-rectifying apparatus 66; second deviation-rectifying apparatus 67;third deviation-rectifying apparatus 68;
First detection apparatus 71; second detection apparatus 72; third detection apparatus 73;
Fifth detection apparatus 75; sixth detection apparatus 76;first detector 761; second detector 762;
Seventh detection apparatus 77; eighth detection apparatus 78; ninth detection apparatus 791; tenth detection apparatus 792;
First temporary storage mechanism 81; first fixed roller 811; first floating roller 812;
Second temporary storage mechanism 82;
Fourth temporary storage mechanism 84; fourth fixed roller 841; fourth floating roller 842;
Fifth temporary storage mechanism 85; fifth fixed roller 851; fifth floating roller 852;
Sixth temporary storage mechanism 86; sixth fixed roller 861; sixth floating roller 862;
First transmission member 91; second transmission member 92; third transmission member 93;
Fourth transmission member 94; fifth transmission member 95; sixth transmission member 96;
First insert feeding mechanism 97; second insert feeding mechanism 98;
Electrode assembly 200;
First electrode plate a; second electrode plate b; first separator c; second separator d;
First composite plate e; second composite plate f; third composite plate g;
Fourth composite plate h; fifth composite plate j; sixth composite plate k; seventh composite plate m;
Battery 300; battery cell 301; and shell 3011.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

The appearance of "plurality" in the present application refers to two or more (including two).

At present, from the perspective of the development of the market situation, batteries are increasingly more widely used. Batteries are not only used in energy storage power systems such as hydropower, thermal power, wind power, and solar power stations, but also widely used in electric vehicles such as electric bicycles, electric motorcycles, and electric cars, as well as aerospace and other fields. With the continuous expansion of the application field of the batteries, the demand in the market is also constantly expanding.

A battery cell includes an electrode assembly, and the electrode assembly includes a cathode electrode plate, an anode electrode plate and a separator. In the related art, in a process of producing electrode assemblies using a winding device, the cathode electrode plate, the anode electrode plate and the separator are fed into the winding device separately, and a detector is disposed at a winding mechanism to acquire the offset between layers. However, this method is prone to having an overhang (OH) missed detection problem.

Based on this, the present application proposes a winding device, in which a cathode electrode plate and an anode electrode plate are first combined with a separator and detected before entering a winding mechanism, and then wound through the winding mechanism, thereby solving an OH missed detection problem.

The winding device in the embodiment of the present application is configured to produce an electrode assembly, the electrode assembly can be used for a battery cell, and the battery cell can be used for a battery. An electrical device may include the battery cell or the battery in any of the following implementations. Specifically, the electrical device may use the battery or the battery cell as a power source. The electrical device may be, but is not limited to, a mobile phone, a tablet, a laptop, an electric toy, an electric tool, a battery vehicle, an electric car, a ship, a spacecraft, and so on. The electric toy may include fixed or mobile electric toys, such as game consoles, electric car toys, electric ship toys, and electric airplane toys. The spacecraft may include airplanes, rockets, space shuttles, spaceships, and the like.

For convenience of explanation, the following embodiments are described by taking an example that the electric apparatus is a vehicle.

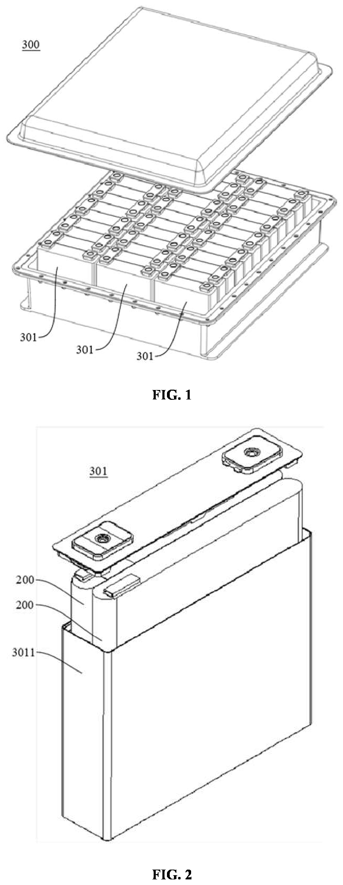

Referring to FIG. 1 and FIG. 2, an interior of the vehicle is provided with a battery 300, and the battery 300 may be disposed at a bottom or head or tail of the vehicle. The battery 300 may be used to power the vehicle. For example, the battery 300 may be used as an operating power source of the vehicle. The vehicle may further include a controller and a motor. The controller is used to control the battery 300 to power the motor. For example, the controller is used for meeting the operating power demand when the vehicle is starting, navigating and driving.

In the implementation of the present application, the battery 300 can be used not only as an operating power source of the vehicle, but also as a driving power source of the vehicle, replacing or partially replacing fuel or natural gas to supply driving power to the vehicle.

In the implementation of the present application, as shown in FIG. 1, the battery 300 refers to a single physical module including one or more battery cells 301 to provide a higher voltage and capacity. For example, the battery 300 mentioned in the present application may include a battery module, a battery pack, or the like. Some batteries 300 may include a box body for packaging one or more battery cells 301 or more battery modules. The box body can prevent liquids or other foreign matters from affecting charging or discharging of the battery cell 301. Of course, there are also some batteries 300 that do not include the above-mentioned box body and may be directly disposed in a battery installation compartment of an electrical apparatus.

In the present application, a battery cell 301 may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of the present application. The battery cell 301 may be cylindrical, flat, cuboid, or in other shapes, which is also not limited in the embodiments of the present application. The battery cell is 301 generally divided into three types according to packaging manners: a cylindrical battery cell, a square battery cell, and a pouch cell, which are not limited in the embodiments of the present application.

Exemplarily, as shown in FIG. 2. the battery cell 301 may include a shell 3011, an electrode assembly 200 and an electrolyte. The shell 3011 is configured to accommodate the electrode assembly 200 and the electrolyte. One or more electrode assemblies 200 may be accommodated in the shell 3011 of the battery cell 301.

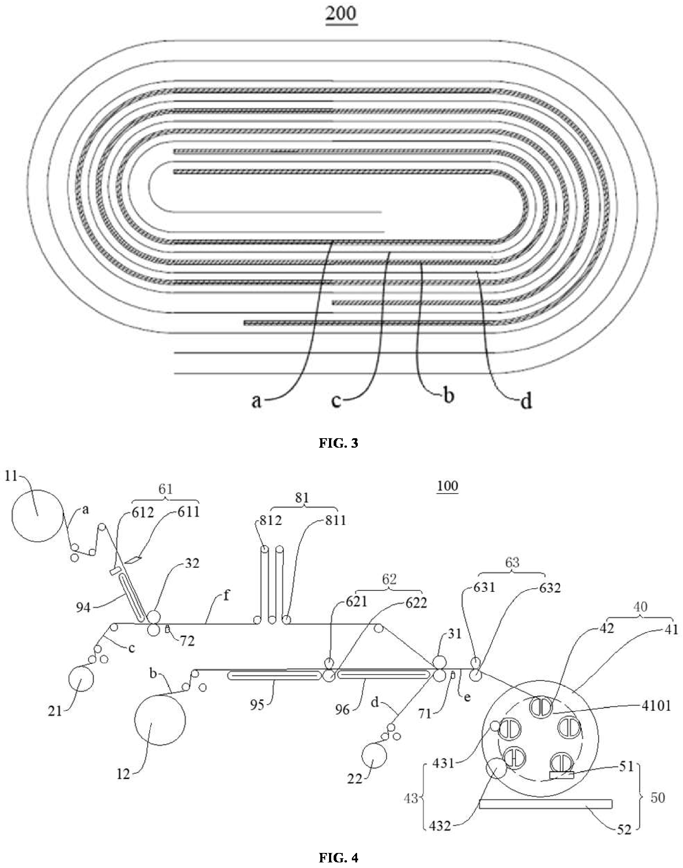

Exemplarily, as shown in FIG. 3, the electrode assembly 200 is a component where electrochemical reactions occur in the battery cell 301, and the electrode assembly 200 includes multiple layers of materials arranged in a stacked manner, such as a first electrode plate a, a second electrode plate b, a first separator c, and a second separator d. The operation of the battery cell 301 mainly relies on the movement of metal ions between the first electrode plate a and the second electrode plate b. One of the first electrode plate a and the second electrode plate b is a cathode electrode plate, and the other one is an anode electrode plate.

The cathode electrode plate includes a cathode current collector and a cathode active material layer. The cathode active material layer is coated on a surface of the cathode current collector, and the cathode current collector that is not coated with the cathode active material layer protrudes out of the cathode current collector that has been coated with the cathode active material layer and is used as a tab of the cathode electrode plate. Taking a lithium-ion battery as an example, the cathode current collector may be made of aluminum, and a cathode active material may be lithium cobalt oxide, lithium iron phosphate, ternary lithium or lithium manganate, etc.

The anode electrode plate includes an anode current collector and an anode active material layer. The anode active material layer is coated on a surface of the anode current collector, and the anode current collector that is not coated with the anode active material layer protrudes out of the anode current collector that has been coated with the anode active material layer and is used as a tab of the anode electrode plate. The anode current collector may be made of copper, and an anode active material may be carbon, silicon, etc.

In order to ensure that no fusing occurs when a large current passes, a plurality of tabs of the cathode electrode plate are provided and are stacked together, and a plurality of tabs of the anode electrode plate are provided and are stacked together. The separator (a first separator c and a second separator d) may be made of polypropylene (PP), polyethylene (PE), or the like.

A winding device 100 for producing an electrode assembly 200 according to the embodiments of the present application is described below with reference to the accompanying drawings.

As shown in FIG. 3 and FIG. 4, the winding device 100 is configured to produce the electrode assembly 200, and the electrode assembly 200 includes a first electrode plate a, a second electrode plate b, a first separator c, and a second separator d. The winding device 100 includes: a first feeding mechanism 11, a second feeding mechanism 12, a third feeding mechanism 21, and a fourth feeding mechanism 22. The first feeding mechanism 11 is configured to release the first electrode plate a; the second feeding mechanism 12 is configured to release the second electrode plate b; the third feeding mechanism 21 is configured to release the first separator c; and the fourth feeding mechanism 22 is configured to release the second separator d.

The second electrode plate b has a different polarity from the first electrode plate a. One of the first electrode plate a and the second electrode plate b is an anode electrode plate, and the other one is a cathode electrode plate. The first electrode plate a may be an anode electrode plate or a cathode electrode plate; and the second electrode plate b may be an anode electrode plate or a cathode electrode plate. For example, the first electrode plate a is an anode electrode plate, and the second electrode plate b is a cathode electrode plate. For another example, the first electrode plate a is a cathode electrode plate, and the second electrode plate b is an anode electrode plate.

The first feeding mechanism 11, the second feeding mechanism 12, the third feeding mechanism 21 and the fourth feeding mechanism 22 may all be an unwinding mechanism, and the unwinding mechanism can carry materials in a wound state and are configured to release the materials in the wound state in a strip-shaped form. Exemplarily, the unwinding mechanism may be, but is not limited to, a roller, a reel, a drum, a rotating shaft, or other structures. The specific design and features of the unwinding mechanism may be set according to a width and thickness of the strip-shaped material. The material can be pre-wound and placed directly on the unwinding mechanism, or can be wound in real time by the unwinding mechanism.

Exemplarily, the unwinding mechanism can wind and release the strip-shaped material by rotating. For example, the unwinding mechanism may be an active mechanism. That is, the rotation of the unwinding mechanism may be actively driven by an electric motor, a hydraulic system, a pneumatic system, or the like. Alternatively, for another example, the unwinding mechanism may also be a passive mechanism. For example, the rotation of the unwinding mechanism is achieved by pulling of the winding mechanism 40 described later, so that the material is released in the strip-shaped form.

The number of any one of the first feeding mechanism 11, the second feeding mechanism 12, the third feeding mechanism 21, and the fourth feeding mechanism 22 may be one or more. The plurality of unwinding mechanisms are disposed, so that the plurality of unwinding mechanisms can be used alternately to achieve continuous unwinding operations, thereby improving production efficiency.

Exemplarily, the first feeding mechanism 11 is configured to wind the first electrode plate a and release the first electrode plate a. For example, the first feeding mechanism 11 is rotatable, so that the first feeding mechanism 11 can rotate and feed the first electrode plate a wound thereon to a subsequent mechanism. For example, a shape of the first feeding mechanism 11 may be cylindrical, prismatic, or other shapes. For example, the first feeding mechanism 11 may be made of plastic, metal or other materials. Exemplarily, one or more first feeding mechanisms 11 for carrying and releasing the first electrode plate a may be provided. When there are multiple first feeding mechanisms, the multiple first feeding mechanisms 11 can be used alternately to achieve continuous unwinding operation of the first electrode plate a, thereby improving the production efficiency.

Exemplarily, the second feeding mechanism 12 is configured to wind the second electrode plate b and release the second electrode plate b. For example, the second feeding mechanism 12 is rotatable, so that the second feeding mechanism 12 can rotate and feed the second electrode plate b wound thereon to a subsequent mechanism. For example, a shape of the second feeding mechanism 12 may be cylindrical, prismatic, or other shapes. For example, the second feeding mechanism 12 may be made of plastic, metal or other materials. Exemplarily, one or more second feeding mechanisms 12 for carrying and releasing the second electrode plate b may be provided. When there are multiple second feeding mechanisms, the multiple second feeding mechanisms 12 can be used alternately to achieve continuous unwinding operation of the second electrode plate b, thereby improving the production efficiency.

Exemplarily, the third feeding mechanism 21 is configured to wind the first separator c and release the first separator c. For example, the third feeding mechanism 21 is rotatable, so that the third feeding mechanism 21 can rotate and feed the first separator c wound thereon to a subsequent mechanism. For example, a shape of the third feeding mechanism 21 may be cylindrical, prismatic, or other shapes. For example, the third feeding mechanism 21 may be made of plastic, metal or other materials. Exemplarily, one or more third feeding mechanisms 21 for carrying and releasing the first separator c may be provided. When there are multiple third feeding mechanisms, the multiple third feeding mechanisms 21 can be used alternately to achieve continuous unwinding operation of the first separator c, thereby improving the production efficiency.

Exemplarily, the fourth feeding mechanism 22 is configured to wind the second separator d and release the second separator d. For example, the fourth feeding mechanism 22 is rotatable, so that the fourth feeding mechanism 22 can rotate and feed the second separator d wound thereon to a subsequent mechanism. For example, a shape of the fourth feeding mechanism 22 may be cylindrical, prismatic, or other shapes. For example, the fourth feeding mechanism 22 may be made of plastic, metal or other materials. Exemplarily, one or more fourth feeding mechanisms 22 for carrying and releasing the second separator d may be provided. When there are multiple fourth mechanisms, the multiple fourth feeding mechanisms 22 can be used alternately to achieve continuous unwinding operation of the second separator d, thereby improving the production efficiency.

As shown in FIG. 4, the winding device 100 further includes a winding mechanism 40. The winding mechanism 40 is configured to wind the unwound electrode assembly 200 to obtain a wound electrode assembly 200. Exemplarily, the winding mechanism 40 may include a winding needle 42, and the rotation of the winding needle 42 can wind the strip-shaped electrode assembly 200 around the winding needle 42 to form the electrode assembly 200 in a specific shape, that is, the winding needle 42 can wind the strip-shaped electrode assembly 200 by rotating. Exemplarily, the winding needle 42 may be driven to rotate by an electric motor, a hydraulic system, a pneumatic system, or the like. Exemplarily, the winding needle 42 may be in a regular shape such as a cylinder or a cone, or an irregular shape. According to the different shapes of the winding needle 42, the electrode assembly 200 obtained by winding can have different shapes.

As shown in FIG. 4, the winding device 100 further includes a first combining mechanism 31, and the first combining mechanism 31 is disposed downstream of the first feeding mechanism 11, the second feeding mechanism 12, and the third feeding mechanism 21, and configured to combine incoming materials including at least the first electrode plate a, the first separator c, and the second electrode plate b into a first composite plate e. A winding mechanism 40 is located downstream of the first combining mechanism 31, and configured to wind an incoming material including at least the first composite plate e to form the electrode assembly 200.

"The first feeding mechanism 11, the second feeding mechanism 12 and the third feeding mechanism 21 being disposed upstream of the first combining mechanism 31" may be understood as that: at least the first feeding mechanism 11, the second feeding mechanism 12 and the third feeding mechanism 21 are disposed upstream of the first combining mechanism 31.

For example, the first feeding mechanism 11, the second feeding mechanism 12 and the third feeding mechanism 21 may be disposed upstream of the first combining mechanism 31, while the fourth feeding mechanism 22 is not disposed upstream of the first combining mechanism 31. Alternatively, for another example, the first feeding mechanism 11, the second feeding mechanism 12, the third feeding mechanism 21 and the fourth feeding mechanism 22 may be disposed upstream of the first combining mechanism 31.

The first feeding mechanism 11 is disposed upstream of the first combining mechanism 31, so that the first electrode plate a released by the first feeding mechanism 11 can be delivered to the first combining mechanism 31, and thus the first electrode plate a may serve as the incoming material of the first combining mechanism 31. The second feeding mechanism 12 is disposed upstream of the first combining mechanism 31, so that the second electrode plate b released by the second feeding mechanism 12 can be delivered to the first combining mechanism 31, and thus the second electrode plate b may serve as the incoming material of the first combining mechanism 31. The third feeding mechanism 21 is disposed upstream of the first combining mechanism 31, so that the first separator c released by the third feeding mechanism 21 can be delivered to the first combining mechanism 31, and thus the first separator c may serve as the incoming material of the first combining mechanism 31. The fourth feeding mechanism 22 is disposed upstream of the first combining mechanism 31, so that the second separator d released by the fourth feeding mechanism 22 can be delivered to the first combining mechanism 31, and thus the second separator d may serve as the incoming material of the first combining mechanism 31.

Exemplarily, when the first feeding mechanism 11, the second feeding mechanism 12 and the third feeding mechanism 21 are disposed upstream of the first combining mechanism 31, and the fourth feeding mechanism 22 is not disposed upstream of the first combining mechanism 31, the incoming material of the first combining mechanism 31 includes the first electrode plate a, the second electrode plate b and the first separator c. At this time, the first combining mechanism 31 can combine the first electrode plate a, the first separator c and the second electrode plate b into the first composite plate e. At this time, the first composite plate e can be defined as a three-in-one composite plate. In the three-in-one composite plate, the first separator c is stacked between the first electrode plate a and the second electrode plate b. At this time, the winding mechanism 40 is located downstream of the first combining mechanism 31, and may wind the first composite plate e and the second separator d to form the electrode assembly 200.

Exemplarily, when the first feeding mechanism 11, the second feeding mechanism 12, the third feeding mechanism 21 and the fourth feeding mechanism 22 are disposed upstream of the first combining mechanism 31, the incoming material of the first combining mechanism 31 includes the first electrode plate a, the second electrode plate b, the first separator c and the second separator d. At this time, the first combining mechanism 31 can combine the first electrode plate a, the first separator c, the second electrode plate b and the second separator d into the first composite plate e. At this time, the first composite plate e can be defined as a four-in-one composite plate. In the four-in-one composite plate, the first separator c is stacked between the first electrode plate a and the second electrode plate b, and the second electrode plate b is stacked between the second separator d and the first separator c. At this time, the winding mechanism 40 is located downstream of the first combining mechanism 31, and may wind the first composite plate e to form the electrode assembly 200.

Of course, the first composite plate e can also be designed as that the first electrode plate a is stacked between the second separator d and the first separator c. To simplify the description, the following mainly uses the second electrode plate b stacked between the second separator d and the first separator c as an example for illustration.

Of course, the present application is not limited to this. For example, in other embodiments of the present application, in addition to the first feeding mechanism 11, the second feeding mechanism 12, the third feeding mechanism 21 and the fourth feeding mechanism 22 disposed upstream of the first combining mechanism 31, other feeding mechanisms may also be disposed. For example, when other material layers are also stacked in the electrode assembly 200, whether the feeding mechanisms of the other material layers are disposed upstream of the first combining mechanism 31 may also be selected.

It is worth noting that the "combining" described herein should be understood in a broad sense, and the specific method can be selected according to the type of material to be combined. For example, it may include only stacking without connection between different layers, or it may also include a composite connection between the electrode plate and the separator, or it may further include edge sealing and connection between the separators, etc.

For example, the first combining mechanism 31 combines the incoming material into the first composite plate e. The "combining" here is understood in a broad sense. For example, the materials may be simply stacked and merged together in sequence in the thickness direction, or the materials may be not only stacked and merged together, but also an inseparable connection relationship is generated between the related layers. The connection relationship may include the aforementioned composite connection, edge sealing and connection, etc. The methods of composite connection and edge sealing and connection are not limited, and may be formed, for example, by cold pressing, hot pressing, gluing, etc.

For example, in the above-mentioned three-in-one composite plate combined by the first combining mechanism 31, the first electrode plate a and the first separator c may be in contact but not connected, or may be in contact and connected. That is, the first electrode plate a and the first separator c are partially connected, or are in an integrally-connected inseparable state, or are in a non-connected bonding state. Similarly, the second electrode plate b and the first separator c may be in contact but not connected, or may be in contact and connected. That is, the second electrode plate b and the first separator c are partially connected, or are in an integrally-connected inseparable state, or are in a non-connected bonding state.

For example, in the above-mentioned four-in-one composite plate combined by the first combining mechanism 31, the first electrode plate a and the first separator c may be in contact but not connected, or may be in contact and connected. That is, the first electrode plate a and the first separator c are partially connected, or are in an integrally-connected inseparable state, or are in a non-connected bonding state. Similarly, the second electrode plate b and the first separator c may be in contact but not connected, or may be in contact and connected. That is, the second electrode plate b and the first separator c are partially connected, or are in an integrally-connected inseparable state, or are in a non-connected bonding state. The second separator d and the adjacent electrode plate may be in contact but not connected, or may be in contact and connected. That is, the second separator d and the adjacent electrode plate are partially connected, or are in an integrally-connected inseparable state, or are in a non-connected bonding state. An edge of the first separator c extending beyond the electrode plate and an edge of the second separator d extending beyond the electrode plate may be disconnected, continuously connected, or intermittently connected.

In conjunction with FIG. 4, the winding device 100 further includes a first detection apparatus 71. The first detection apparatus 71 is located between the first combining mechanism 31 and the winding mechanism 40 and is configured to detect the first composite plate e.

It is worth noting that "the first detection apparatus 71 being located between the first combining mechanism 31 and the winding mechanism 40" is not a limitation on a spatial position (that is, in space, the relative positions of the first detection apparatus 71, the first combining mechanism 31, and the winding mechanism 40 are not limited), but a limitation on the order of workstations. That is, the first composite plate e formed by the combining of the first combining mechanism 31 can first be detected by the first detection apparatus 71 before entering the winding mechanism 40.

Exemplarily, the first detection apparatus 71 may include a camera, a machine vision detection device or other structures. Exemplarily, the first detection apparatus 71 may further include other devices such as a control device. The first detection apparatus 71 may acquire image information (such as a position, a color, and a shape) of the corresponding first composite plate e, and can convert the image information into a digital signal and send the digital signal to the control device, so that the control device judges whether the first composite plate e meets the requirements according to a preset program.

Therefore, by disposing the first detection apparatus 71 between the first combining mechanism 31 and the winding mechanism 40, the first composite plate e can be detected, thereby acquiring the quality of the first composite plate e. Specifically, the first detection device 71 is disposed at this position to detect a state of the first composite plate e after combined by the first combining mechanism 31, and can more comprehensively detect the state of the entire passed first composite plate e. Because the composited first composite plate e will enter the winding needle 42 for winding, a head end of the first composite plate e is difficult to detect after entering the winding needle 42, and because the electrode plate and the separator in the combined first composite plate e are relatively stable in position, and are not prone to be displaced or misaligned, the state of the first composite plate e detected by the first detection apparatus 71 located between the first combining mechanism 31 and the winding mechanism 40 has a small difference or is the same as the state of the first composite plate e after winding. The detection result of the first detection apparatus 71 can have higher accuracy, and the detection of the first composite plate e is more comprehensive.

Because the current stacking of the electrode plate and the separator is usually carried out at the winding needle, the head ends of the electrode plate and the separator entering the winding needle are not prone to being detected by the detection device, which is prone to leading to OH missed detection (the overhang may be the OH between the cathode electrode plate and the anode electrode plate, or the OH between the separator and the electrode plate), and missed detection of defects such as corner folding and crushing of the electrode plate. Accordingly, in this embodiment, the winding device 100 includes a first combining mechanism 31 and a first detection apparatus 71, and the first detection apparatus 71 is disposed between the first combining mechanism 31 and the winding mechanism 40. The positions of the electrode plate and the separator in the first composite plate e after combining by the first combining mechanism 31 are relatively fixed and not prone to offset. A structure of the first composite plate e after detection by the first detection apparatus 71 is not prone to changing, and the detection result is more accurate. At the same time, disposing the first detection apparatus 71 upstream of the winding mechanism 40 also enables the first detection apparatus 71 to detect the first composite plate e more comprehensively, thereby reducing an area of a blind angle or an undetectable part and improving the detection accuracy. This avoids a situation where defects are blocked and cannot be accurately detected after the first electrode plate a, the first separator c, the second electrode plate b and the second separator d are wound at the winding needle 42 to form the electrode assembly 200, thereby improving the detection accuracy and reducing the risk of missed detection of the defects during the production process of the electrode assembly 200.

For example, the detection function of the first detection apparatus 71 may include, but is not limited to, at least one of the following.

Exemplarily, the first detection apparatus 71 is located behind the first combining mechanism 31 and in front of the winding mechanism 40, and may be configured to detect the relative position of the second electrode plate b and the first electrode plate a in the first composite plate e, such as judging whether the second electrode plate b and the first electrode plate a are completely covered, and the OH of the anode electrode plate covering the cathode electrode plate (that is, a size of two side edges of an active material region of the anode electrode plate exceeding two side edges of the active material region of the cathode electrode plate in a width direction). By mitigating the OH missed detection problem, the two sides in the width direction of the second electrode plate b in the electrode assembly 200 formed by subsequent winding is ensured to exceed the edge of the first electrode plate a by a distance that meets the requirements, which is conducive to solving the lithium plating problem. Exemplarily, in the formed first composite plate e, a length and width of the anode electrode plate are both greater than those of the cathode electrode plate, so that the anode electrode plate can cover the cathode electrode plate.

Exemplarily, the first detection apparatus 71 is located behind the first combining mechanism 31 and in front of the winding mechanism 40, and may be used to detect the relative position of the first separator c and the electrode plate(the second electrode plate b and/or the first electrode plate a) in the first composite plate e, such as judging whether the first separator c can achieve insulation between the second electrode plate b and the first electrode plate a, and the OH defect of the first separator c covering the electrode plate (i.e., the size of the edge of the first separator c extending beyond the edge of the electrode plate in the width direction of the electrode plate does not meet the required size range).

Exemplarily, the first detection apparatus 71 is located behind the first combining mechanism 31 and in front of the winding mechanism 40, and may be used to detect a state of the electrode plate (the second electrode plate b and/or the first electrode plate a) in the first composite plate e, such as whether the electrode plate has folded corners, whether the electrode plate is damaged, the width of the active material layer of the electrode plate, and known defective electrode plates (such as defective products with yellow labels).

Exemplarily, the first detection apparatus 71 is located behind the first combining mechanism 31 and in front of the winding mechanism 40, and may be used to detect a state of the first separator c in the first composite plate e, such as wrinkling of the separator, corner folding of the separator, and damage of the separator.

Exemplarily, the first detection apparatus 71 is located behind the first combining mechanism 31 and in front of the winding mechanism 40, and may be used to detect whether the first composite plate e has problems such as head swing or tail swing. At the cut-off point of the electrode plate, the electrode plate is prone to swinging. The phenomenon of offset of the head of the electrode plate is called "head swing", and the phenomenon of offset of the tail of the electrode plate is called "tail swing".

In the related art, the winding device winds the first electrode plate, the first separator, the second electrode plate and the second separator at the winding needle, and uses a CCD detection apparatus for detecting. The CCD detection apparatus takes pictures toward the winding needle. Due to the angle limitation, the head of the electrode assembly is difficult to be photographed by the CCD detection apparatus when winding, the tail of the electrode assembly is also difficult to be photographed when unwinding, resulting in a blind zone in the detection of the electrode assembly, and it is difficult to detect the problem of head swing and tail swing of the electrode plate.

Therefore, in the winding device 100 provided by the embodiment of the present application, by disposing the first combining mechanism 31, the combining of the first electrode plate a, the second electrode plate b and the first separator c is completed in advance before the electrode plate is wound, and by disposing the first detection apparatus 71, the first composite plate e is detected comprehensively before the first composite plate e enters the winding mechanism 40. Possible defects in the electrode plate and the separator can be discovered in time, such as OH missed detection (OH between a cathode electrode plate and an anode electrode plate, or OH between the separator and the electrode plate), wrinkling of the separator head, crushing and damage of the electrode plate, head and tail swinging and other defects, and detection blind zones are reduced, so that unqualified products can be eliminated in time, thereby helping to improve the quality of the electrode assembly 200.

In the related art, in a manufacturing process of a battery cell, a winding machine is used to wind two electrode plates on different material lines together. The two electrode plates are separately conveyed to the winding needle of the winding mechanism. A certain relative position needs to be maintained between the two electrode plates, otherwise poor lithium plating is likely to occur. Specifically, there is an offset in the length or width direction of the two electrode plates. Lithium ions are not transferred from one electrode plate to the other, but are plated in a region outside the electrode plate, thereby generating lithium crystals, causing the electrode assembly formed by the electrode plate to be punctured, cut, and other defects, which in turn leads to safety risks in the battery cell. In order to ensure the relative position of the two electrode plates, avoid punctures, cuts and other defects in the electrode assembly formed after winding, and avoid these defects from affecting subsequent processes (such as welding), a detector may be used to detect the electrode plates during or after winding to confirm that the two electrode plates in the detection region are in a correct position. However, when the detector detects the two electrode plates during or after winding, there is a blind zone in the field of view, which may lead to missed detection. Moreover, the two electrode plates have free ends, which is specifically manifested in that the two electrode plates do not offset before entering the winding needle, but offset after entering the winding needle. Therefore, at the beginning of winding, the detection of the relative position between the two electrode plates is inaccurate.

In the embodiment of the present application, the first combining mechanism 31 in the winding device 100 combines the second electrode plate b, the first electrode plate a, and the separator before entering the winding needle 42 to form a first composite plate e in a flattened state. Since the first composite plate e is in the flattened state and is not wound, the relative position of the second electrode plate b and the first electrode plate a are relatively stable, so that the first detection apparatus 71 can accurately and easily detect the relative position between the second electrode plate b and the first electrode plate a, and there is no blind zone for photographing. The head, middle, and tail of the entire first composite plate e can be photographed, so that the relative position of the second electrode plate b and the first electrode plate a are correct, and there is no OH missed detection of the head and the tail, which helps to improve the quality of the electrode assembly 200.

Moreover, by disposing the first combining mechanism 31 and the winding mechanism 40, at least the second electrode plate b, the first separator c and the first electrode plate a are stacked and combined in sequence through the first combining mechanism 31 to form the first composite plate e, and then wound through the winding mechanism 40 to form the electrode assembly 200. In this way, the combining operation of at least the second electrode plate b, the first separator c and the first electrode plate a is separately set from the winding operation of the winding mechanism 40, so that there is no need to perform the combining of the second electrode plate b, the first separator c and the first electrode plate a intensively at the winding needle 42 of the winding mechanism 40, and thus there may be a larger space between at least the first feeding mechanism 11, the second feeding mechanism 12, as well as the third feeding mechanism 21 and the winding mechanism 40, so as to improve the layout rationality of the winding device 100, and facilitate the layout of various functional apparatuses and mechanisms, such as the layout of the above-mentioned first detection apparatus 71, which in turn helps to improve the quality of the electrode assembly 200.

In conjunction with FIG. 4, in some embodiments, the winding device 100 further includes a first cut-off mechanism 61 for cutting off the first electrode plate a and a second cut-off mechanism 62 for cutting off the second electrode plate b. Exemplarily, when the first combining mechanism 31 is disposed upstream of the winding mechanism 40, both the first cut-off mechanism 61 and the second cut-off mechanism 62 may be disposed upstream of the first combining mechanism 31. For example, the first cut-off mechanism 61 may be disposed between the first feeding mechanism 11 and the first combining mechanism 31, and the second cut-off mechanism 62 may be disposed between the second feeding mechanism 12 and the first combining mechanism 31. Therefore, both the first cut-off mechanism 61 and the second cut-off mechanism 62 can be disposed spatially away from the winding mechanism 40, so as to alleviate the adverse effect on the quality of the electrode assembly 200 caused by chips formed by cutting falling into the electrode assembly 200 wound on the winding needle 42, thereby helping to further improve the quality of the electrode assembly 200.

In conjunction with FIG. 4, in some embodiments, the winding device 100 further includes a third cut-off mechanism 63 for cutting off the separator. Since the first separator c and the second separator d are both supplied in continuous coils, the first separator c and the second separator d need to be cut off by using the third cut-off mechanism 63 after the first separator c and the second separator d are combined with the first electrode plate a and the second electrode plate b.

The number of the third cut-off mechanisms 63 is not limited, and may be, for example, one or two. For example, when one third cut-off mechanism 63 is provided, the third cut-off mechanism 63 may cut off the first separator c and the second separator d at the same time. For another example, when at least two third cut-off mechanisms 63 are provided, at least one third cut-off mechanism 63 may be configured to cut off the first separator c, and at least one third cut-off mechanism 63 may be configured to cut off the second separator d.

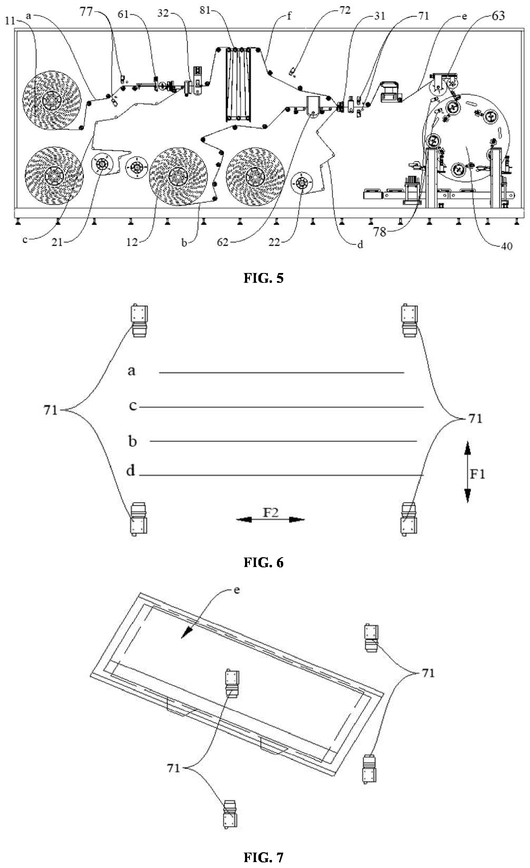

Exemplarily, when the first detection apparatus 71 is disposed between the first combining mechanism 31 and the winding mechanism 40, the specific position of the third cut-off mechanism 63 may be flexibly set. For example, the first detection apparatus 71 may be disposed between the first combining mechanism 31 and the third cut-off mechanism 63 (in conjunction with FIG. 4 and FIG. 5), or the first detection apparatus 71 may be disposed between the third cut-off mechanism 63 and the winding mechanism 40.

In conjunction with FIG. 4, in some embodiments, the fourth feeding mechanism 22 is disposed upstream of the first combining mechanism 31, so that the second separator d is further combined in the first composite plate e. That is, the first combining mechanism 31 is configured to combine incoming materials including at least the first electrode plate a, the first separator c, the second electrode plate b and the second separator d into the first composite plate e.

The fourth feeding mechanism 22 is disposed upstream of the first combining mechanism 31, so that the second separator d released by the fourth feeding mechanism 22 can be delivered to the first combining mechanism 31, and thus the second separator d may serve as the incoming material of the first combining mechanism 31. Exemplarily, the first combining mechanism 31 may combine the first electrode plate a, the first separator c, the second electrode plate b and the second separator d into the first composite plate e, so that the first composite plate e is a four-in-one composite plate. In the four-in-one composite plate, the first separator c is stacked between the first electrode plate a and the second electrode plate b, and the second separator d is stacked on one side of the first electrode plate a or the second electrode plate b away from the first separator c.

To simplify the description, the following description will be made by taking the second electrode plate b in the first composite plate e stacked between the first separator c and the second separator d as an example. Of course, the first electrode plate a may also be stacked between the first separator c and the second separator d. Exemplarily, in the first composite plate e, the first electrode plate a, the first separator c, the second electrode plate b and the second separator d are stacked in sequence, the second electrode plate b is stacked between the first separator c and the second separator d, and the first separator c is stacked between the first electrode plate a and the second electrode plate b. The first electrode plate a is the cathode electrode plate, and the second electrode plate b is the anode electrode plate.

The first electrode plate a, the second electrode plate b, the first separator c and the second separator d are all plate-shaped structures and have a thickness. For example, the second separator d, the second electrode plate b, the first separator c and the first electrode plate a are stacked in sequence, which means that the second separator d, the second electrode plate b, the first separator c and the first electrode plate a are stacked and arranged in sequence in a thickness direction of the electrode plate. At this time, the thickness direction of the second separator d, the thickness direction of the second electrode plate b, the thickness direction of the first separator c and the thickness direction of the first electrode plate a are parallel.

In the first composite plate e, the first separator c is disposed between the second electrode plate b and the first electrode plate a to achieve insulation between the second electrode plate b and the first electrode plate a. In the electrode assembly 200 formed by winding the first composite plate e, the second separator d is disposed between the second electrode plate b and the first electrode plate a to achieve insulation between the second electrode plate b and the first electrode plate a.

Thus, when the fourth feeding mechanism 22 is disposed upstream of the first combining mechanism 31 so that the second separator d is also combined in the first composite plate e, the first composite plate e detected by the first detection apparatus 71 includes at least the first electrode plate a, the first separator c, the second electrode plate b and the second separator d which are stacked, thereby facilitating a more comprehensive detection. For example, in addition to the above-mentioned detection apparatus for detecting the relative position of the second electrode plate b and the first electrode plate a in the first composite plate e, for detecting the relative position of the first separator c and the electrode plate in the first composite plate e, for detecting the state of the electrode plate (the second electrode plate b and/or the first electrode plate a) in the first composite plate e, for detecting the state of the first separator c in the first composite plate e, and for detecting whether the first composite plate e has a problem of head swing or tail swing, the detection apparatus can further be used to detect the relative position of the second separator d and the electrode plate (the second electrode plate b and/or the first electrode plate a), and can further be used to detect the state of the second separator d in the first composite plate e, and can further be used to detect the relative position of the first separator c and the second separator d, etc. There are more types of detectable information, which can more fully avoid the problem of missed detection of defects, and timely eliminate unqualified products, thereby improving the quality of the electrode assembly 200.

Moreover, the first combining mechanism 31 can combine at least the first electrode plate a, the first separator c, the second electrode plate b and the second separator d to obtain the first composite plate e. Compared with a solution of combining the first electrode plate, the first separator, the second electrode plate and the second separator at the winding needle 42, the functional requirements of the winding needle 42 can be reduced, which facilitates increasing a winding speed of the winding needle 42, and improves production efficiency. Moreover, the combining of the electrode plate and the separator can be completed beforewinding, so as to reduce displacement of the electrode plate and the separator in a winding process, thereby improving the quality of the electrode assembly 200.

In conjunction with FIG. 4 and FIG. 5, when the second separator d is further combined in the first composite plate e, the first combining mechanism 31 may be an edge sealing mechanism, and is configured to seal and connect at least one of two side edges of the first separator c and the second separator d in a width direction.

Among them, the edge sealing and connection of the edges of the two separators may be set only on a tab side in the width direction of the electrode plate, or only on a slitting side (namely, a non-tab side) in the width direction of the electrode plate, or simultaneously on two sides (namely, the tab side and the slitting side) in the width direction of the electrode plate. edge sealing of the two separators on the tab side may be continuous edge sealing or intermittent edge sealing that avoids the tab (that is, the tab region is not subjected to edge sealing), and edge sealing of the two separators on the slitting side may be continuous edge sealing or intermittent edge sealing. In addition, the model selection and function of the "edge sealing mechanism" mentioned in any subsequent embodiment of the present application may refer to the present embodiment.

In conjunction with FIG. 6, for the electrode assembly 200, a material conveying direction of the second electrode assembly b, the first electrode assembly a, the first separator c, and the second separator d refers to a traveling direction of each material in the production process, that is, the length direction of each material in the electrode assembly 200. The thickness direction F1 of the second electrode assembly b, the first electrode assembly a, the first separator c, and the second separator d refers to a direction in which the material size is smallest, that is, a stacking direction of each material in the electrode assembly 200. The width direction F2 of the second electrode assembly b, the first electrode assembly a, the first separator c, and the second separator d refers to a direction perpendicular to the thickness direction F1 and the material conveying direction. During the winding process of the electrode assembly 200, a winding axis is substantially parallel to the width direction F2.

The width of the first separator c is greater than the width of the second electrode plate b, and the width of the second separator d is greater than the width of the second electrode plate b. The edge sealing mechanism can perform the edge sealing and connection on the part of the first separator c that exceeds the edge of the second electrode plate b in the width direction F2 and the part of the second separator d that exceeds the edge of the second electrode plate b in the width direction F2. For example, the connection between the first separator c and the second separator d can be achieved by heating, pressurizing, gluing, etc. According to actual needs, the sealed edges of the first bonded c and the second bonded d may extend continuously or discontinuously in the material conveying direction, which falls within the protection scope of the present application.

For example, the part of the second separator d that extends beyond the left side edge of the second electrode plate b and the part of the first separator c that extends beyond the left side edge of the second electrode plate b shown in FIG. 6 are connected to achieve left-side edge sealing. For example, the part of the second separator d that extends beyond the right side edge of the second electrode plate b and the part of the first separator c that extends beyond the right side edge of the second electrode plate b shown in FIG. 6 are connected to achieve right-side edge sealing. The left-side edge sealing and the right-side edge sealing can be set at the same time, or only one of them can be set.

Therefore, the edge sealing mechanism can connect edges of the first separator c and the second separator d together to achieve edge sealing. When an external force is removed, the first separator c and the second separator d are not separated, causing the second electrode plate b to be exposed. In the winding process of the electrode assembly 200, the separator is not prone to folding, and is not prone to being disturbed by holes in a solution injection process, so that the risk of overlapping of the second electrode plate b with the first electrode plate a and overlapping of the second electrode plate b with a shell 3011 of a battery cell 301 is effectively reduced, thereby mitigating a lithium plating problem.

Exemplarily, in conjunction with FIG. 5, the edge sealing mechanism may include two edge sealing rollers disposed opposite to each other, and the two edge sealing rollers can heat the two side edges of the first separator c and the second separator d and apply a predetermined pressure in a thickness direction F1 to achieve edge sealing and connection of the first separator c and the second separator d.

Exemplarily, in conjunction with FIG. 4, the first combining mechanism 31 may include two rollers disposed opposite to each other and spaced apart from each other, or may include one roller and a support disposed opposite to the roller and spaced apart from the roller, or may include a plurality of rollers or other structures. The roller in the first combining mechanism 31 may be of a rotatable structure, or a fixed structure, and may further be floatable. The roller in the first combining mechanism 31 may also be an active roller or a passive roller.

In conjunction with FIG. 5 to FIG. 7, when the first combining mechanism 31 is the edge sealing mechanism, the first detection apparatus 71 may be configured to detect an edge sealing state of the first composite plate e.

The first detection apparatus 71 is disposed downstream of the edge sealing mechanism, so that the first composite plate e can be conveyed to the first detection apparatus 71 after edge sealing, so as to detect the state of the formed sealed edge by using the first detection apparatus 71. For example, edge sealing defects such as corner folding of the electrode plate, wrinkling of the first separator c and the second separator d, failure of the sealed edge, misalignment of the sealed edge, a size of the sealed edge, and grayscale difference can be detected. For example, the width and position of the sealed edge in a width direction F2 of the first separator c and the second separator d can be detected, so that the first separator c, the second separator d and the edge sealing mechanism can be adjusted according to the detection results. Thus, the width of the formed sealed edge is in a range from 0.5 mm to 1 mm, and the sealed edge is roughly in a middle of the edge part of the first separator c and the second separator d that exceeds beyond the second electrode plate b, thereby improving the reliability of the edge sealing. The first separator c and the second separator d can reliably limit and protect the second electrode plate b. For example, as shown in FIG. 6 and FIG. 7, the first detection apparatuses 71 are disposed on both sides of the electrode assembly 200 in the thickness direction F1 to detect information such as the relative position of the second electrode assembly b and the first electrode assembly a.

The first detection apparatus 71 may be a photoelectric sensor, an X-ray camera, a charge coupled device (CCD) visual sensor, etc., and the types of different detection apparatuses can be the same or different. For example, the first detection apparatus 71 may include a CCD. The CCD can acquire an optical image of the material to achieve detection. Furthermore, the CCD can also convert the optical image into a digital signal, so that the optical image is analyzed, processed and stored. For example, the first detection apparatus 71 may include the X-ray camera, and the X-ray camera can penetrate the first separator c and the second separator d to detect the position of the second electrode plate b located in the inner layer. The X-ray camera has high resolution and can penetrate objects for detection, thereby improving the detection precision.

Of course, the present application is not limited to this. In other embodiments of the present application, the first combining mechanism 31 is not limited to being the edge sealing mechanism. For example, the first combining mechanism 31 may also be a mechanism for connecting and fixing at least two layers in the first composite plate e, or the first combining mechanism 31 may also be a mechanism for making the layers in the first composite plate e onlystacked together without being connected.

In conjunction with FIG. 4 and FIG. 5, in some embodiments, when the fourth feeding mechanism 22 is disposed upstream of the first combining mechanism 31, the first electrode plate a and the first separator c may be combined first. For example, the winding device 100 may further include a second combining mechanism 32, the second combining mechanism 32 is located upstream of the first combining mechanism 31 and downstream of the first feeding mechanism 11 and the third feeding mechanism 21, and the second combining mechanism 32 is configured to combine the first electrode plate a and the first separator c into a second composite plate f.

In this way, the first electrode plate a on the first feeding mechanism 11 and the first separator c on the third feeding mechanism 21 can both be delivered to the second combining mechanism 32 and combined by the second combining mechanism 32. The second combining mechanism 32 is configured to combine the first electrode plate a and the first separator c. The combining of the first electrode plate a and the first separator c refers to that the first electrode plate a and the first separator c are stacked into the second composite plate f, and the first electrode plate a and the first separator c in the second composite plate f can be only in contact but not connected, or can be in contact and connected. That is, the first electrode plate a and the first separator c in the second composite plate f are in a connected or non-connected bonding state.

Therefore, by disposing the second combining mechanism 32 upstream of the first combining mechanism 31, the first electrode plate a and the first separator c can be combined preferentially. The number of layers of materials combined here is relatively small, the combining quality can be well controlled, and the relative position of the first electrode plate a and the first separator c, as well as the respective states of the first electrode plate a and the first separator c can be well guaranteed, thereby improving the product quality.

The type of the second combining mechanism 32 is not limited and can be specifically set according to whether the first electrode plate a and the first separator c in the second composite plate f need to be connected.

For example, in conjunction with FIG. 4 and FIG. 5, the second combining mechanism 32 is a composite mechanism, and is configured to fixedly connect the first electrode plate a with the first separator c in the second composite plate f. Therefore, the offset of the first electrode plate a relative to the first separator c in the winding and use processes is reduced, which is beneficial to improving the accuracy of the relative position between the materials, thereby improving the product quality. The method of fixed connection is not limited. For example, connection may be achieved by cold pressing, hot pressing, gluing, etc. Furthermore, the position of the fixed connection is not limited and may be the entire surface or a part thereof, such as a part in the center or a part at the edge.

Exemplarily, in conjunction with FIG. 4, the second combining mechanism 32 may press the first electrode plate a onto the first separator c by pressure, or may bond the first electrode plate a to the first separator c by gluing or other methods. For example, the second combining mechanism 32 may include two rollers disposed opposite to each other and spaced apart from each other, or may include one roller and a support disposed opposite to the roller and spaced apart from the roller, or may include a plurality of rollers or other structures. The roller in the second combining mechanism 32 may be of a rotatable structure, or a fixed structure, and may further be floatable. The roller in the second combining mechanism 32 may also be an active roller or a passive roller.

Exemplarily, in conjunction with FIG. 5, the second combining mechanism 32 can composite the first electrode plate a and the first separator c, that is, the first electrode plate a and the first separator c are connected together. For example, the connection may be achieved by heating, pressurizing, etc., thereby reducing the offset of the first electrode plate a relative to the first separator c in the winding and use processes, which is conducive to improving the accuracy of the relative position between the materials. For example, the composite mechanism may include two composite rollers disposed opposite to each other. The two composite rollers can heat the first electrode plate a and the first separator c and apply a predetermined pressure in the thickness direction F1 to bond the first electrode plate a and the first separator c together, thereby realizing a composite connection between the first electrode plate a and the first separator c.

Of course, the present application is not limited to this. In other embodiments of the present application, the second combining mechanism 32 is not limited to being the composite mechanism. For example, the second combining mechanism 32 may also be a mechanism for making the first electrode plate a and the first separator c in the second composite plate f only stacked together without being connected.

In conjunction with FIG. 4, in some embodiments, when the winding device 100 includes the second combining mechanism 32, the winding device 100 may further include a second detection apparatus 72, and the second detection apparatus 72 is located between the second combining mechanism 32 and the first combining mechanism 31 and configured to detect the second composite plate f.

It is worth noting that "the second detection apparatus 72 being located between the second combining mechanism 32 and the first combining mechanism 31" is nota limitation on a spatial position (that is, in space, the relative positions of the second detection apparatus 72, the first combining mechanism 31, and the second combining mechanism 32 are not limited), but a limitation on the order of workstations. That is, the second composite plate f formed by the combining of the second combining mechanism 32 can first be detected by the second detection apparatus 72 before entering the first combining mechanism 31.

In conjunction with FIG. 4, the second detection apparatus 72 is disposed between the second combining mechanism 32 and the first combining mechanism 31 and is configured to detect the second composite plate f. Exemplarily, the second detection apparatus 72 may include a camera, a machine vision detection device or other structures. Exemplarily, the second detection apparatus 72 may further include other devices such as a control device. The second detection apparatus 72 may acquire image information (such as a position, a color, and a shape) of the corresponding second composite plate f, and can convert the image information into a digital signal and send the digital signal to the control device, so that the control device judges whether the second composite plate f meets the requirements according to a preset program.

In conjunction with FIG. 4, by disposing the second detection apparatus 72 between the second combining mechanism 32 and the first combining mechanism 31, the second detection apparatus 72 can be used to detect the second composite plate f obtained by combining by the second combining mechanism 32 and not entering the first combining mechanism 31, so as to timely discover defects and abnormalities of the second composite plate f, and facilitate timely response when problems occur in the second composite plate f, thereby reducing the negative impact on subsequent processes and improving the product quality.

In conjunction with FIG. 5, exemplarily, the second detection apparatus 72 is configured to detect the relative position of the first separator c and the first electrode plate a in the second composite plate f. Thus, the second detection apparatus 72 can detect the OH of the first separator c exceeding beyond the first electrode plate a. "The OH of the first separator c exceeding beyond the first electrode plate a" means that a size of the edge of the first separator c exceeds the edge of the active material region of the first electrode plate a in the width direction of the electrode plate. The defective OH means that the size of the overhang does not meet the required size range.

Exemplarily, in conjunction with FIG. 5, when the second combining mechanism 32 is a composite mechanism, the second detection apparatus 72 is disposed downstream of the second combining mechanism 32 and can detect the composite state of the second composite plate f. For example, composite defects such as corner folding and damage of the first electrode plate a are detected.

For example, as shown in FIG. 5, FIG. 8 and FIG. 9, the second detection apparatus 72 is disposed on one side of the second composite plate f in the thickness direction F1 to detect information such as defects of the second composite plate f itself. The second detection apparatus 72 may detect multiple parts in the material length direction in sequence during the movement of the material, or may perform continuous detection in the material length direction.

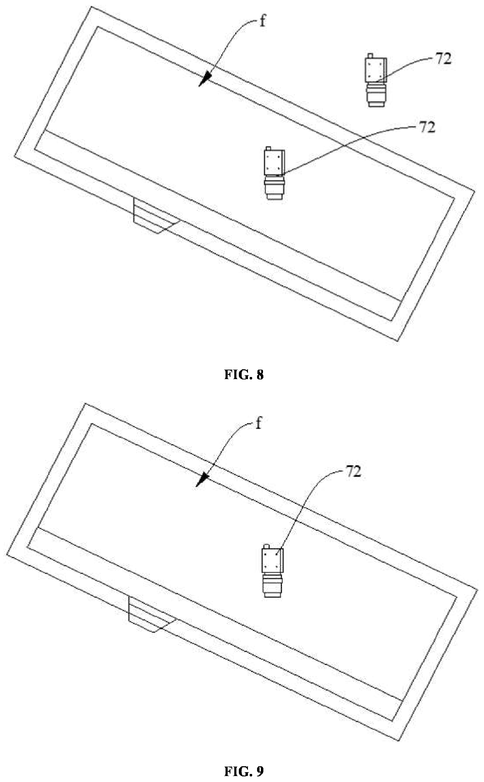

The second detection apparatus 72 may be a photoelectric sensor, an X-ray camera, a charge coupled device (CCD) visual sensor, etc., and the types of different detection apparatuses can be the same or different. For example, the second detection apparatus 72 may include a single-scanline camera or an area-array camera, wherein an image acquisition range of the single-scanline camera is narrow but the acquisition precision is high. Therefore, as shown in FIG. 8, the single-scanline cameras may be respectively disposed on both sides of the material width direction F2 to improve the detection precision. The image acquisition range of the area-array camera is large but the acquisition precision is low. Therefore, as shown in FIG. 9, the area-array camera may be disposed in the middle of the material width direction F2 to reduce costs.

When the first combining mechanism 31 is the edge sealing mechanism and the second combining mechanism 32 is the composite mechanism, the edge sealing state and the composite state are detected by the first detection apparatus 71 and the second detection apparatus 72 respectively, so that more comprehensive detection can be achieved. The second detection apparatus 72 may detect whether the relative position of the first electrode plate a and the first separator c is accurate before the edge sealing of the first separator c and the second separator d, thereby improving the position accuracy of the first separator c and the first electrode plate a. The two sides of the first separator c in the width direction F2 can exceed beyond the edge of the first electrode plate a by a sufficient size, so as to provide sufficient space for edge sealing, thereby improving an effect of the first separator c in separating the second electrode plate b and the first electrode plate a. The risk of missed detection of defects during the production of the electrode assembly 200 is reduced. The second electrode plate b and the first electrode plate a in the produced electrode assembly 200 are not prone to being overlapped and short-circuited, and the second electrode plate b is not prone to being overlapped with the shell 3011 of the battery cell 301, resulting in corrosion and liquid leakage.

In conjunction with FIG. 4 and FIG. 5, in some embodiments, when the winding device 100 includes the second combining mechanism 32, the winding device 100 may further include a first temporary storage mechanism 81. The first temporary storage mechanism 81 is disposed between the second combining mechanism 32 and the first combining mechanism 31, and is configured to temporarily store the second composite plate f.

It is worth noting that "the first temporary storage mechanism 81 being disposed between the second combining mechanism 32 and the first combining mechanism 31" is not a limitation on a spatial position (that is, in space, the relative positions of the first temporary storage mechanism 81, the first combining mechanism 31, and the second combining mechanism 32 are not limited), but a limitation on the order of workstations. That is, the second composite plate f formed by the combining of the second combining mechanism 32 can first be temporarily stored by the first temporary storage mechanism 81 before entering the first combining mechanism 31.

Therefore, the first temporary storage mechanism 81 can play a role in temporarily storing the second composite plate f. When there is a speed difference before and after the first temporary storage mechanism 81, the first temporary storage mechanism 81 can temporarily store and release part of the second composite plate f in time, thereby solving a speed reduction problem or a wrinkle problem caused by insufficient tension, and improving the production capacity and the product quality.

In conjunction with FIG. 4, the first temporary storage mechanism 81 is disposed between the second combining mechanism 32 and the first combining mechanism 31. The first temporary storage mechanism 81 may temporarily store part of the second composite plate f after the first electrode plate a and the first separator c are combined. The first temporary storage mechanism 81 can temporarily store part of the second composite plate f when the winding needle 42 switches or other pulling force is reduced, and release the temporarily stored second composite plate f when the pulling force is normal, so as to reduce the negative impact of switching of the winding needle 42, electrode plate cutting-off or other situations on the feeding of the first feeding mechanism 11 and the third feeding mechanism 21, and reduce the occurrence of deceleration or shutdown of the first feeding mechanism 11 and the third feeding mechanism 21, so that the first feeding mechanism 11 and the third feeding mechanism 21 can continue feeding, and the production efficiency is improved.

In conjunction with FIG. 4, the first temporary storage mechanism 81 is disposed between the second combining mechanism 32 and the first combining mechanism 31, and the first temporary storage mechanism 81 is configured to wind the second composite plate f formed by the first electrode plate a and the first separator c. The first temporary storage mechanism 81 refers to a structure in the winding device 100 for temporarily storing the electrode plate and the separator. The first temporary storage mechanism 81 can further release the temporarily stored electrode plate and separator. The first temporary storage mechanism 81 is disposed between the second combining mechanism 32 and the first combining mechanism 31 for winding the second composite plate f. Exemplarily, after the first composite plate e is wound on the winding needle 42, a turret 41 drives the winding needle 42 to move, so that the empty winding needle 42 moves to one side of the first combining mechanism 31. During this process, the second composite plate f lacks the pulling force provided by the winding needle 42, which can be prone to leading to insufficient tension and feed rate. At this time, the first temporary storage mechanism 81 can temporarily store part of the second composite plate f to supplement the tension of the second composite plate f and reduce the occurrence of wrinkling in the second composite plate f.

The first temporary storage mechanism 81 can store the second composite plate f composited by the second combining mechanism 32 by winding, stacking, etc.

In conjunction with FIG. 4, exemplarily, the first temporary storage mechanism 81 may include one or more rollers, and the second composite plate f can bypass the one or more rollers of the first temporary storage mechanism 81 and then enter the first combining mechanism 31. The first temporary storage mechanism 81 may include one or more movable rollers for allowing the second composite plate f to bypass. In a process that the turret 41 drives the winding needle 42 to move, the first temporary storage mechanism 81 stores the second composite plate f. Exemplarily, the roller moves in a direction away from the second combining mechanism 32 and the first combining mechanism 31 to increase the lengths of the electrode plate and the separator between the second combining mechanism 32 and the first combining mechanism 31, thereby providing tension for the second composite plate f and having an effect of temporarily storing part of the second composite plate f. After the winding needle 42 is located on one side of the first combining mechanism 31 and begins to wind the first composite plate e, the first temporary storage mechanism 81 releases the second composite plate f. Exemplarily, the roller moves in a direction close to the second combining mechanism 32 and the first combining mechanism 31, so that the second composite plate f stored in the first temporary storage mechanism 81 can be pulled by the winding needle 42 and wound onto the winding needle 42 after passing through the first combining mechanism 31.

In conjunction with FIG. 4, exemplarily, the first temporary storage mechanism 81 may include a first fixed roller 811 and a first floating roller 812. A position of the first fixed roller 811 is fixed relative to the second combining mechanism 32, and the first floating roller 812 can approach or move away from the first fixed roller 811 to change the lengths of the first electrode plate a and the first separator c wound in the first temporary storage mechanism 81.

In conjunction with FIG. 4, the first fixed roller 811 refers to a roller in the first temporary storage mechanism 81 whose position is fixed relative to the second combining mechanism 32, that is, the position of the first fixed roller 811 is also fixed relative to a casing. The first fixed roller 811 may be a cylindrical roller, or a prismatic roller or a roller in other shapes. The first fixed roller 811 may be made of plastic, metal or other materials. The first fixed roller 811 may be of a rotatable structure or a fixed structure. The first fixed roller 811 may be a passive roller and rotates with the movement of the electrode plate and the separator, and the first fixed roller 811 may also be an active roller and rotates by being driven by a driving device such as a motor.

In conjunction with FIG. 4, the first floating roller 812 refers to a roller in the first temporary storage mechanism 81 that can move relative to the first fixed roller 811, that is, the position of the movable roller can be changed on the casing. The first floating roller 812 may be a cylindrical roller, or a prismatic roller or a roller in other shapes. The first floating roller 812 may be made of plastic, metal or other materials. The first floating roller 812 may be of a rotatable structure or a fixed structure. The first floating roller 812 may be a passive roller and rotates with the movement of the electrode plate and the separator, and the first floating roller 812 may also be an active roller and rotates by being driven by a driving device such as a motor.

In conjunction with FIG. 4, the first floating roller 812 can move in a direction close to the first fixed roller 811, and can move in a direction away from the first fixed roller 811. When the first floating roller 812 moves in a direction away from the first fixed roller 811, the first temporary storage mechanism 81 stores the second composite plate f. At this time, the length of the second composite plate f between the second combining mechanism 32 and the first combining mechanism 31 increases, and the movement of the first floating roller 812 can also supplement the missing part of the pulling force on the second composite plate f. When the first floating roller 812 moves in a direction close to the first fixed roller 811, the first temporary storage mechanism 81 releases the second composite plate f.

In conjunction with FIG. 4, the floating of the first floating roller 812 may be passively floating or actively floating. In some embodiments, the floating of the first floating roller 812 is achieved by elastic parts such as a spring and a rubber strip. At this time, the first floating roller 812 is passively floating. When the winding needle 42 winds the first composite plate e, the pulling force on the second composite plate f is large and causes the first floating roller 812 to move in a direction close to the first fixed roller 811, and the elastic parts are in a deformed state. In the process that the turret 41 drives the winding needle 42 to move, the pulling force on the second composite plate f decreases, the elastic parts return to its original state and drive the first floating roller 812 to move in a direction away from the first fixed roller 811. In some other embodiments, the floating of the first floating roller 812 is achieved by active power devices such as an air cylinder and a hydraulic cylinder. At this time, the first floating roller 812 is actively floating. When the winding needle 42 winds the first composite plate e, the pulling force on the second composite plate f is large, and the power devices drive the first floating roller 812 to move in a direction close to the first fixed roller 811. In the process that the turret 41 drives the winding needle 42 to move, the pulling force on the second composite plate f decreases, the power devices drive the first floating roller 812 to move in a direction away from the first fixed roller 811.

In conjunction with FIG. 4, the number of the first fixed rollers 811 may be one, or two or more; and the number of the floating rollers may be one, or two or more. When the number of both the first fixed rollers 811 and the first floating rollers 812 is two or more, the first fixed rollers 811 and the first floating rollers 812 may be alternately disposed in sequence.

In conjunction with FIG. 4, the first floating roller 812 is used to achieve the temporarily storing and releasing effects of the second composite plate f. Exemplarily, when the second composite plate fneeds to be temporarily stored, the first floating roller 812 can move in a direction away from the first fixed roller 811 to increase the length of the second composite plate f in the first temporary storage mechanism 81. When the second composite plate f needs to be released, the first floating roller 812 can move in a direction close to the first fixed roller 811 to decrease the length of the second composite plate f in the first temporary storage mechanism 81.

In conjunction with FIG. 4, exemplarily, the first electrode plate a is a cathode electrode plate, and the first temporary storage mechanism 81 is configured to temporarily store the cathode electrode plate and the first separator c after being composited by the second combining mechanism 32. Affected by the materials, the cathode electrode plate and the first separator c can be combined more stably after being composited, so that the cathode electrode plate and the first separator c are not prone to being separated during the process of passing through the first temporary storage mechanism 81.

In conjunction with FIG. 4 and FIG. 5, in some embodiments, when the winding device 100 includes the first temporary storage mechanism 81, the first cut-off mechanism 61 for cutting off the first electrode plate a may be disposed between the first feeding mechanism 11 and the second combining mechanism 32.

It is worth noting that "the first cut-off mechanism 61 being disposed between the first feeding mechanism 11 and the second combining mechanism 32" is not a limitation on the spatial position (that is, in space, the relative positions of the first cut-off mechanism 61, the first feeding mechanism 11, and the second combining mechanism 32 are not limited), but a limitation on the order of workstations. That is, the first electrode plate a outputted by the first feeding mechanism 11 can be cut off by the first cut-off mechanism 61 before entering the second combining mechanism 32.

Exemplarily, in conjunction with FIG. 5, the first cut-off mechanism 61 may cut off the first electrode plate a, and then feed it to the second combining mechanism 32 in segments, or feed the segmented first electrode plate a to the second combining mechanism 32 in segments in an insert manner. For example, the first cut-off mechanism 61 may include components such as a feeding roller and a cutting knife.

During the production process, the first temporary storage mechanism 81 temporarily stores the materials and can continuously transmit the materials downstream, so that the winding needle 42 can operate without deceleration and is not affected by the operation of the first cut-off mechanism 61 upstream of the first temporary storage mechanism 81. For example, as shown in FIG. 5, the precision requirement for the first cut-off mechanism 61 to cut off the first electrode plate a is high, resulting in a slow operating speed. The first temporary storage mechanism 81 is configured to temporarily store the second composite plate f after the first electrode plate a and the first separator c are combined, and the winding needle 42 operates at a high rate. By temporary storage through the first temporary storage mechanism 81, the first temporary storage mechanism 81 can still deliver the second composite plate f to the first combining mechanism 31 without reducing the rate of the winding needle 42 in a process that the first cut-off mechanism 61 cuts off the first electrode plate a, thereby improving the winding efficiency and thus improving the overall production capacity. Moreover, the first cut-off mechanism 61 can be disposed spatially away from the winding mechanism 40, so as to alleviate the adverse effect on the quality of the electrode assembly 200 caused by chips formed by cutting falling into the electrode assembly 200 wound on the winding needle 42, thereby helping to further improve the quality of the electrode assembly 200.

When the winding device 100 includes the first temporary storage mechanism 81, the second detection apparatus 72 may be disposed upstream of the first temporary storage mechanism 81 (for example, the embodiment shown in FIG. 4), and the second detection apparatus 72 may further be disposed downstream of the first temporary storage mechanism 81 (for example, the embodiment shown in FIG. 5). As shown in FIG. 5, when the second detection apparatus 72 is disposed downstream of the first temporary storage mechanism 81, the second detection apparatus 72 can detect the second composite plate f released by the first temporary storage mechanism 81. Thus, defects of the second composite plate f generated during the combining process and the temporary storage process can be detected by the second detection apparatus 72, which is beneficial to improving the quality of the electrode assembly 200 used in production.

Exemplarily, in conjunction with FIG. 5, when the fourth feeding mechanism 22 is disposed upstream of the first combining mechanism 31 so that the second separator d is also combined in the first composite plate e, a third cut-off mechanism 63 may be disposed between the first combining mechanism 31 and the winding mechanism 40. The first cut-off mechanism 61 and the second cut-off mechanism 62 can cut off the first electrode plate a and the second electrode plate b before the first combining mechanism 31, and the third cut-off mechanism 63 cuts off the first separator c and the second separator d after the first combining mechanism 31. As a result, it is relatively easy to make the length of the separator greater than the length of the electrode plate, thereby meeting the design requirements of the electrode assembly 200, and only one third cut-off mechanism 63 needs to be disposed, which can simplify the device, reduce costs, and save space.

Moreover, when the first temporary storage mechanism 81 is disposed, during the production process, the first temporary storage mechanism 81 temporarily stores the materials and can continuously convey the materials downstream, so that the third cut-off mechanism 63 can perform a cut-off operation without deceleration and is not affected by the operation of the first cut-off mechanism 61 upstream of the first temporary storage mechanism 81. For example, as shown in FIG. 5, the precision requirement for the first cut-off mechanism 61 to cut off the first electrode plate a is high, resulting in a slow operating speed. The first temporary storage mechanism 81 is configured to temporarily store the second composite plate f formed by the combining of the first electrode plate a and the first separator c. The third cut-off mechanism 63 is configured to cut off the first separator c and the second separator d, which has the low precision requirement and the high operating speed. By temporary storage through the first temporary storage mechanism 81, the first temporary storage mechanism 81 can still deliver the second composite plate f to the first combining mechanism 31 in the process that the first cut-off mechanism 61 cuts off the first electrode plate a, without decreasing the rate of the first combining mechanism 31. The third cut-off mechanism 63 can cut off the strip-shaped electrode assembly 200 without deceleration, thereby improving the winding efficiency and thereby improving the overall production capacity.

The third cut-off mechanism 63 may include a variety of cut-off structures, such as a linear cutter that reciprocates along a straight line, a cam cutter that rotates around an axis, and a laser cutting structure.

In conjunction with FIG. 4, exemplarily, the first cut-off mechanism 61 is disposed between the first feeding mechanism 11 and the second combining mechanism 32, and includes a first cutter 611 and a first abutting member 612. The first cutter 611 and the first abutting member 612 are disposed opposite to each other and spaced apart from each other to allow the first electrode plate a to pass through. The first cutter 611 is configured to cut off the first electrode plate a on the first abutting member 612.

In conjunction with FIG. 4, the first cutter 611 and the first abutting member 612 are both part of an electrode plate cut-off assembly 61. The first cutter 611 and the first abutting member 612 are disposed between the first feeding mechanism 11 and the second combining mechanism 32 to cut off the first electrode plate a.

In conjunction with FIG. 4, the first cutter 611 refers to a structure in the winding device 100 for cutting off the electrode plate. According to a shape of the first cutter 611, the first cutter 611 may be a grooving knife, a cut-off knife or other types of cutters. According to driving force of the first cutter 611, the first cutter 611 may realize the cut-off action through the motor in conjunction with a cam and a rocker arm, and the first cutter 611 may also be driven by an air cylinder, a hydraulic cylinder and other devices to realize the reciprocating cut-off action. In some embodiments, the first electrode plate a is a cathode electrode plate. Because the cathode electrode plate is usually made of lithium iron phosphate, lithium cobalt oxide or silicon-based materials, vanadate materials, etc., the incision is prone to be rough or producing burrs during cutting-off, so the first cutter 611 is driven by the air cylinder to reduce the roughness of the incision and reduce the burrs.

In conjunction with FIG. 4, the first abutting member 612 refers to a structure in the winding device 100 that supports the first cutter 611. The first electrode plate a can pass through the first abutting member 612, and when the first cutter 611 cuts off the first electrode plate a, the first electrode plate a can be pressed onto the first abutting member 612 and cut off. The first abutting member 612 may be made of plastic, metal or other materials.

In conjunction with FIG. 4, the first abutting member 612 may be of a rectangular thin-plate structure, a cylindrical structure or other structures; and the first abutting member 612 may be of a fixed structure or a rotatable structure to reduce friction force between the first electrode plate a and the first abutting member 612.

In conjunction with FIG. 4, the first cutter 611 and the first abutting member 612 are disposed opposite to each other and spaced apart from each other, and the first electrode plate a can pass through a gap between the first cutter 611 and the first abutting member 612. When the first cutter 611 is raised, a distance between the first cutter 611 and the first abutting member 612 should be greater than a thickness of the first electrode plate a to reduce the negative impact of the first cutter 611 on the first electrode plate a.

In conjunction with FIG. 4, the first electrode plate a cut off by the first cutter 611 and the first abutting member 612 is combined with the first separator c through the second combining mechanism 32. At this time, the first separator c can carry the cut-off first electrode plate a to move to the first combining mechanism 31 via the first temporary storage mechanism 81.

In conjunction with FIG. 4, the first cutter 611 and the first abutting member 612 are disposed between the first feeding mechanism 11 and the second combining mechanism 32. The first abutting member 612 supports the first electrode plate a and provides support for the first cutter 611 to cut off the first electrode plate a, and the electrode plate is cut off by the first cutter 611 to achieve cut-off of the first electrode plate a.

In conjunction with FIG. 4 and FIG. 5, in some embodiments, when the winding device 100 includes a second combining mechanism 32, the second electrode plate b and the second separator d may be set to be fed separately into the first combining mechanism 31. That is, the second electrode plate b and the second separator d are not pre-combined before entering the first combining mechanism 31. Thereby, the structure can be simplified.

Exemplarily, in conjunction with FIG. 4 and Fig. 5, when the second electrode plate b and the second separator d are fed into the first combining mechanism 31 separately, the second cut-off mechanism 62 for cutting off the second electrode plate b may be disposed between the second feeding mechanism 12 and the first combining mechanism 31.

It is worth noting that "the second cut-off mechanism 62 being disposed between the second feeding mechanism 12 and the first combining mechanism 31" is not a limitation on the spatial position (that is, in space, the relative positions of the second cut-off mechanism 62, the second feeding mechanism 12, and the first combining mechanism 31 are not limited), but a limitation on the order of workstations. That is, the second electrode plate b outputted by the second feeding mechanism 12 can be cut off by the second cut-off mechanism 62 before entering the first combining mechanism 31.

Therefore, the second cut-off mechanism 62 can be disposed spatially away from the winding mechanism 40, so as to alleviate the adverse effect on the quality of the electrode assembly 200 caused by chips formed by cutting falling into the electrode assembly 200 wound on the winding needle 42, thereby helping to further improve the quality of the electrode assembly 200.

In conjunction with FIG. 4, in some embodiments, the second cut-off mechanism 62 includes a cam cutter. Therefore, the second cut-off mechanism 62 does not need to perform follow-up cut on the second electrode plate b, and the second electrode plate b does not need to decelerate in response to the cutting-off, so that the second cut-off mechanism 62 can cut off the second electrode plate b without deceleration, which can improve the production capacity. Moreover, because the space requirement for performing the follow-up cut is eliminated, it is helpful to reduce space occupancy.

In conjunction with FIG. 4, exemplarily, the second cut-off mechanism 62 includes a first cam cutter 621 and a second abutting member 622. The first cam cutter 621 and the second abutting member 622 are disposed opposite to each other and spaced apart from each other to allow the second electrode plate b to pass through, and the first cam cutter 621 can rotate and cut off the second electrode plate b on the second abutting member 622.

In conjunction with FIG. 4, the first cam cutter 621 and the second abutting member 622 are both part of an electrode plate cut-off assembly 61. The first cam cutter 621 and the second abutting member 622 are configured to cut off the second electrode plate b.

In conjunction with FIG. 4, the first cam cutter 621 can act intermittently and cut off the second electrode plate b. The length of cutting off the second electrode plate b can be adjusted by adjusting a time between two adjacent cut-offs by the first cam cutter 621. The cam cutter has the advantages of higher efficiency, higher precision, more precise intermittent indexing action, and more stable rotation, and can more accurately achieve periodic interval cutting-off of the second electrode plate b.

In conjunction with FIG. 4, the periodic interval cutting-off of the first cam cutter 621 can be achieved through a variety of structures. For example, the first cam cutter 621 may include a driving device, a cam, a rocker arm and a cutter, and the driving device drives the cam to rotate and drives the rocker arm to reciprocate, so that the cutter intermittently cuts the second electrode plate b. At this time, the intermittent time of the cutter = the required length of the second electrode plate b/the linear speed of the cam. For another example, the first cam cutter 621 can also include a driving device, a crank slider mechanism and a cutter, and the driving device drives the crank slider mechanism to move, thereby driving the cutter to reciprocate through the crank slider mechanism. At this time, the intermittent time of the cutter = the required length of the second electrode plate b/the linear speed output by the driving device. It can be understood that the periodic interval cutting-off action of the first cam cutter 621 can also be achieved through other structures, and is not limited to the above two types.

In conjunction with FIG. 4, the second abutting member 622 refers to a structure in the winding device 100 that supports the first cam cutter 621. The second electrode plate b can pass through the second abutting member 622, and when the first cam cutter 621 cuts off the second electrode plate b, the second electrode plate b can be pressed onto the second abutting member 622 and cut off. The second abutting member 622 may be made of plastic, metal or other materials.

In conjunction with FIG. 4, the second abutting member 622 may be of a rectangular thin-plate structure, a cylindrical structure or other structures; and the second abutting member 622 may be of a fixed structure or a rotatable structure to reduce friction force between the second electrode plate b and the second abutting member 622. In some embodiments, the second abutting member 622 is a roller structure rotatably connected to the casing, and when the first cam cutter 621 cuts off the second electrode plate b, the second electrode plate b can be pressed on the roller mechanism and cut off.

In conjunction with FIG. 4, the first cam cutter 621 and the second abutting member 622 are disposed opposite to each other and spaced apart from each other, and the second electrode plate b can pass through a gap between the first cam cutter 621 and the second abutting member 622. When the first cam cutter 621 is raised, a distance between the first cam cutter 621 and the second abutting member 622 should be greater than a thickness of the second electrode plate b to reduce the negative impact of the first cam cutter 621 on the first electrode plate a.

In conjunction with FIG. 4, the present embodiment provides some specific structures of the electrode plate cut-off assembly 61. The first cam cutter 621 and the second abutting member 622 are disposed between the second feeding mechanism 12 and the first combining mechanism 31. The second abutting member 622 supports the second electrode plate b and provides support for the first cam cutter 621 to cut off the second electrode plate b, and the electrode plate is cut off by the first cam cutter 621 to achieve the cut-off of the first electrode plate a. The cam cutter structure has the high precision of the intermittent indexing action and does not require other structures to control its intermittent position, which is convenient for control and can also simplify the structure of the cutter.

In conjunction with FIG. 4, exemplarily, the third cut-off mechanism 63 may include a second cam cutter 631 and a third abutting member 632 that are disposed opposite to each other and spaced apart from each other. The second cam cutter 631 can rotate and cut off the separator on the third abutting member 632. The third cam cutter 631 refers to a mechanism in the third cut-off mechanism 63 for cutting off the separator. The second cam cutter 631 can act intermittently and cut off the separator. The length of cutting off the separator can be adjusted by adjusting a time between two adjacent cut-offs by the second cam cutter 631. The cam cutter has the advantages of higher efficiency, higher precision, more precise intermittent indexing action, and more stable rotation, and can more accurately achieve periodic interval cutting-off of the separator.

In conjunction with FIG. 4, the periodic interval cutting-off of the second cam cutter 631 can be achieved through a variety of structures. For example, the second cam cutter 631 may include a driving device, a cam, a rocker arm and a cutter, and the driving device drives the cam to rotate and drives the rocker arm to reciprocate, so that the cutter intermittently cuts the separator. At this time, the intermittent time of the cutter = the required length of the separator/the linear speed of the cam. For another example, the second cam cutter 631 can also include a driving device, a crank slider mechanism and a cutter, and the driving device drives the crank slider mechanism to move, thereby driving the cutter to reciprocate through the crank slider mechanism. At this time, the intermittent time of the cutter = the required length of the separator/the linear speed output by the driving device. It can be understood that the periodic interval cutting-off action of the second cam cutter 631 can also be achieved through other structures, and is not limited to the above two types.

In conjunction with FIG. 4, the third abutting member 632 refers to a structure in the third cut-off mechanism 63 that supports the second cam cutter 631. The separator can pass through the third abutting member 632, and when the second cam cutter 631 cuts off the separator, the separator can be pressed onto the third abutting member 632 and cut off. The third abutting member 632 may be made of plastic, metal or other materials.

In conjunction with FIG. 4, the third abutting member 632 may be of a rectangular thin-plate structure, a cylindrical structure or other structures; and the third abutting member 632 may be of a fixed structure or a rotatable structure to reduce friction force between the separator and the third abutting member 632. In some embodiments, the third abutting member 632 is a roller structure rotatably connected to the casing, and when the second cam cutter 631 cuts off the separator, the separator can be pressed on the roller mechanism and cut off.

In conjunction with FIG. 4, the present embodiment provides some specific structures of the third cut-off mechanism 63, and the cutting-off of the separator is achieved by the second cam cutter 631 and the third abutting member 632. The second cam cutter 631 can perform the cutting-off action periodically and intermittently. The length of the separator can be controlled by controlling the intermittent duration of the second cam cutter 631. The cam cutter has the high precision of the intermittent indexing action and does not require other structures to control its intermittent position, which is convenient for control and can also simplify the structure of the cutter.

In some embodiments, a rotation period duration of the second cam cutter 631 is equal to a ratio of the length of the first separator c in the electrode assembly 200 to a transmission line speed of the first separator c; and/or, the rotation period duration of the second cam cutter 631 is equal to a ratio of the length of the second separator d in the electrode assembly 200 to a transmission line speed of the second separator d.

The rotation period duration of the second cam cutter 631 is a time taken for the second cam cutter 631 to rotate one circle. A membrane to be cut may be the first separator c and/or the second separator d. By cutting off the first separator c and/or the second separator d, the first separator c and/or the second separator d of a preset length can be formed in the electrode assembly 200. The transmission line speed of the membrane to be cut refers to a transmission line speed of the membrane to be cut before it enters the winding mechanism 40.

The first separator c and the second separator d are conveyed toward the winding mechanism 40 at the same time and have the same transmission line speed. The lengths of the first separator c and the second separator d in the electrode assembly 200 can be the same or different. For example, the length of the first separator c in the electrode assembly 200 is greater than the length of the second separator d. Then, the rotation period duration of the second cam cutter 631 is equal to the ratio of the length of the first separator c in the electrode assembly 200 to the transmission line speed of the first separator c.

By meeting the above conditions, the second cam cutter 631 can rotate continuously. Since the second cam cutter 631 does not need to stop, the time waiting for cutting is saved. The second cam cutter 631 can cut the membrane to be cut every time it rotates one circle. There is no need to reduce the transmission line speed of the membrane in order to cut off the membrane, and the membrane can be cut off without deceleration, which effectively increases the overall winding speed.

In other embodiments, if the second cam cutter 631 further needs to move toward the third abutting member 632 after rotating, the rotation period duration of the second cam cutter 631 may also be less than the ratio of the length of the membrane to be cut to the transmission line speed of the membrane to be cut.

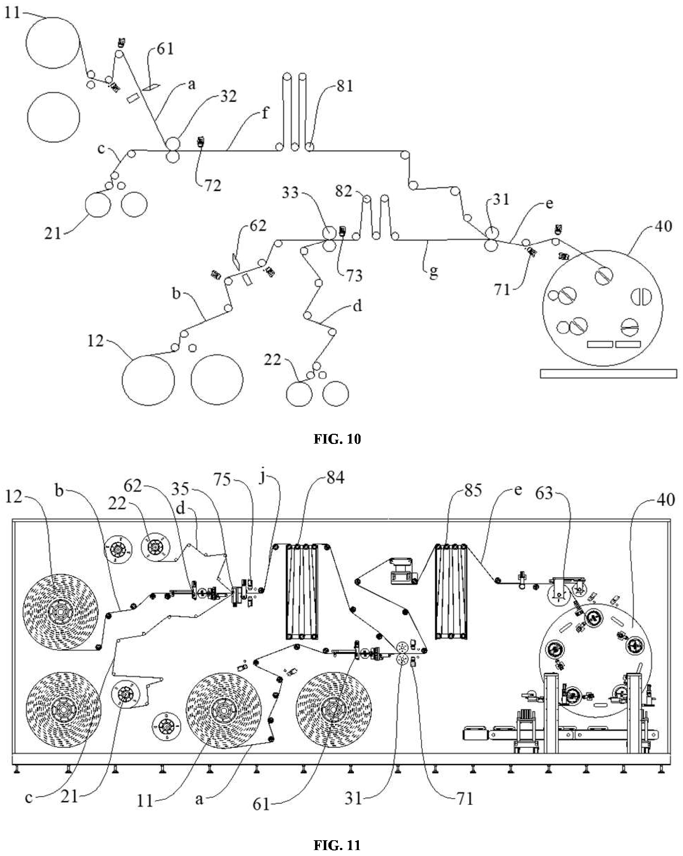

In the embodiment of the present application, the second electrode plate b and the second separator d may not be fed into the first combining mechanism 31 separately. For example, in conjunction with FIG. 10, in some embodiments of the present application, the winding device 100 further includes a third combining mechanism 33, the third combining mechanism 33 is located upstream of the first combining mechanism 31 and downstream of the second feeding mechanism 12 and the fourth feeding mechanism 22, and the third combining mechanism 33 is configured to combine the second electrode plate b and the second separator d into a third composite plate g.

At this time, the second electrode plate b and the second separator d may be combined first by the third combining mechanism 33 before entering the first combining mechanism 31. That is, the second electrode plate b on the second feeding mechanism 12 and the second separator d on the fourth feeding mechanism 22 can both be delivered to the third combining mechanism 33 and combined by the third combining mechanism 33. The third combining mechanism 33 is configured to combine the second electrode plate b and the second separator d. The combining of the second electrode plate b and the second separator d refers to that the second electrode plate b and the second separator d are stacked into the third composite plate g, and the second electrode plate b and the second separator d in the third composite plate g can be only in contact but not connected, or can be in contact and connected. That is, the second electrode plate b and the second separator d in the third composite plate g are in a connected or non-connected bonding state.

Therefore, by disposing the third combining mechanism 33 upstream of the first combining mechanism 31, the second electrode plate b and the second separator d can be combined preferentially. The number of layers of materials combined here is relatively small, the combining quality can be well controlled, and the relative position of the second electrode plate b and the second separator d, as well as the respective states of the second electrode plate b and the second separator d can be well guaranteed, thereby improving the product quality.

In conjunction with FIG. 10, the type of the third combining mechanism 33 is not limited and can be specifically set according to whether the second electrode plate b and the second separator d in the third composite plate g need to be connected. For example, the third combining mechanism 33 may be formed as a composite mechanism that is the same as or similar to the second combining mechanism 32 above. When being the composite mechanism, the third combining mechanism 33 may be configured to fixedly connect the second electrode plate b and the second separator d in the third composite plate g. Therefore, the offset of the second electrode plate b relative to the second separator d in the winding and use processes is reduced, which is beneficial to improving the accuracy of the relative position between the materials, thereby improving the product quality. The method of fixed connection is not limited. For example, connection may be achieved by cold pressing, hot pressing, gluing, etc. Furthermore, the position of the fixed connection is not limited and may be the entire surface or a part thereof, such as a part in the center or a part at the edge.

Of course, the present application is not limited to this. In other embodiments of the present application, the third combining mechanism 33 is not limited to being the composite mechanism. For example, the third combining mechanism 33 may also be a mechanism for making the second electrode plate b and the second separator d in the third composite plate g only stacked together without being connected.

In conjunction with FIG. 10, in some embodiments, when the winding device 100 includes the third combining mechanism 33, the winding device 100 may further include a third detection apparatus 73, and the third detection apparatus 73 is located between the third combining mechanism 33 and the first combining mechanism 31 and configured to detect the third composite plate g.

It is worth noting that "the third detection apparatus 73 being located between the third combining mechanism 33 and the first combining mechanism 31" is not a limitation on a spatial position (that is, in space, the relative positions of the third detection apparatus 73, the third combining mechanism 33, and the first combining mechanism 31 are not limited), but a limitation on the order of workstations. That is, the third composite plate g formed by the combining of the third combining mechanism 33 can first be detected by the third detection apparatus 73 before entering the first combining mechanism 31.

In conjunction with FIG. 10, the third detection apparatus 73 is disposed between the third combining mechanism 33 and the first combining mechanism 31 and is configured to detect the third composite plate g. Exemplarily, the third detection apparatus 73 may include a camera, a machine vision detection device or other structures. Exemplarily, the third detection apparatus 73 may further include other devices such as a control device. The third detection apparatus 73 may acquire image information (such as a position, a color, and a shape) of the corresponding second composite plate f, and can convert the image information into a digital signal and send the digital signal to the control device, so that the control device judges whether the third composite plate g meets the requirements according to a preset program.

In conjunction with FIG. 10, by disposing the third detection apparatus 73 between the third combining mechanism 33 and the first combining mechanism 31, the third detection apparatus 73 can be used to detect the third composite plate g obtained by combining by the third combining mechanism 33 and not entering the first combining mechanism 31, so as to timely discover defects and abnormalities of the third composite plate g, and facilitate timely response when problems occur in the third composite plate g, thereby reducing the negative impact on subsequent processes and improving the product quality.

In conjunction with FIG. 10, the third detection apparatus 73 is configured to detect the relative position of the second electrode plate b and the second separator d in the third composite plate g. Thus, the third detection apparatus 73 can detect the OH of the second separator c exceeding beyond the second electrode plate b. "The OH of the second separator d exceeding beyond the second electrode plate b" means that a size of the edge of the second separator d exceeds the edge of the active material region of the second electrode plate b in the width direction of the electrode plate. The defective OH means that the size of the overhang does not meet the required size range.

In conjunction with FIG. 10, when the third combining mechanism 33 is a composite mechanism, the third detection apparatus 73 is disposed downstream of the third combining mechanism 33 and can detect the composite state of the third composite plate g. For example, composite defects such as corner folding and damage of the second electrode plate b are detected.

For example, the third detection apparatus 73 is disposed on one side of the third composite plate g in the thickness direction F1 to detect information such as defects of the second composite plate f itself. The third detection apparatus 73 may detect multiple parts in the material length direction in sequence during the movement of the material, or may perform continuous detection in the material length direction.

For example, the third detection apparatus 73 may be a photoelectric sensor, an X-ray camera, a charge coupled device (CCD) visual sensor, etc., and the types of different detection apparatuses can be the same or different. For example, the third detection apparatus 73 may include a single-scanline camera or an area-array camera, wherein an image acquisition range of the single-scanline camera is narrow but the acquisition precision is high. Therefore, the single-scanline cameras may be respectively disposed on both sides of the material width direction F2 to improve the detection precision. The image acquisition range of the area-array camera is large but the acquisition precision is low. Therefore, the area-array camera may be disposed in the middle of the material width direction F2 to reduce costs.

When the first combining mechanism 31 is the edge sealing mechanism and the third combining mechanism 33 is the composite mechanism, the edge sealing state and the composite state are detected by the first detection apparatus 71 and the third detection apparatus 73 respectively, so that more comprehensive detection can be achieved. The third detection apparatus 73 may detect whether the relative position of the second electrode plate b and the second separator d is accurate before the edge sealing of the first separator c and the second separator d, thereby improving the position accuracy of the second electrode plate c and the second separator d. The two sides of the second separator d in the width direction F2 can exceed beyond the edge of the second electrode plate b by a sufficient size, so as to provide sufficient space for edge sealing, thereby improving an effect of the first separator c in separating the second electrode plate b and the first electrode plate a. The risk of missed detection of defects during the production of the electrode assembly 200 is reduced. The second electrode plate b and the first electrode plate a in the produced electrode assembly 200 are not prone to being overlapped and short-circuited, and the second electrode plate b is not prone to being overlapped with the shell 3011 of the battery cell 301, resulting in corrosion and liquid leakage.

In conjunction FIG. 10, when the winding device 100 includes the third combining mechanism 33, in some embodiments, the winding device 100 may further include a second temporary storage mechanism 82. The second temporary storage mechanism 82 is disposed between the third combining mechanism 33 and the first combining mechanism 31, and is configured to temporarily store the third composite plate g.

It is worth noting that "the second temporary storage mechanism 82 being disposed between the third combining mechanism 33 and the first combining mechanism 31" is not a limitation on a spatial position (that is, in space, the relative positions of the second temporary storage mechanism 82, the first combining mechanism 31, and the third combining mechanism 33 are not limited), but a limitation on the order of workstations. That is, the third composite plate g formed by the combining of the third combining mechanism 33 can first be temporarily stored by the second temporary storage mechanism 82 before entering the first combining mechanism 31.

Therefore, the second temporary storage mechanism 82 can play a role in temporarily storing the third composite plate g. When there is a speed difference before and after the second temporary storage mechanism 82, the second temporary storage mechanism 82 can temporarily store and release part of the third composite plate g in time, thereby solving a speed reduction problem or a wrinkle problem caused by insufficient tension, and improving the production capacity and the product quality.

In conjunction with FIG. 10, the second temporary storage mechanism 82 is disposed between the third combining mechanism 33 and the first combining mechanism 31. The second temporary storage mechanism 82 may temporarily store part of the third composite plate g after the second electrode plate b and the second separator d are combined. The second temporary storage mechanism 82 can temporarily store part of the third composite plate g when the winding needle 42 switches or other pulling force is reduced, and release the temporarily stored third composite plate g when the pulling force is normal, so as to reduce the negative impact of switching of the winding needle 42, electrode plate cutting-off or other situations on the feeding of the second feeding mechanism 12 and the fourth feeding mechanism 22, and reduce the occurrence of deceleration or shutdown of the second feeding mechanism 12 and the fourth feeding mechanism 22, so that the second feeding mechanism 12 and the fourth feeding mechanism 22 can continue feeding, and the production efficiency is improved.

In conjunction with FIG. 10, the second temporary storage mechanism 82 is disposed between the third combining mechanism 33 and the first combining mechanism 31, and the second temporary storage mechanism 82 is configured to wind the third composite plate g formed by the second electrode plate b and the second separator d. The second temporary storage mechanism 82 refers to a structure in the winding device 100 for temporarily storing the electrode plate and the separator. The second temporary storage mechanism 82 can further release the temporarily stored electrode plate and separator. The second temporary storage mechanism 82 is disposed between the third combining mechanism 33 and the first combining mechanism 31 for winding the third composite plate g. Exemplarily, after the first composite plate e is wound on the winding needle 42, a turret 41 drives the winding needle 42 to move, so that the empty winding needle 42 moves to one side of the first combining mechanism 31. During this process, the third composite plate g lacks the pulling force provided by the winding needle 42, which can be prone to leading to insufficient tension and feed rate. At this time, the second temporary storage mechanism 82 can temporarily store part of the third composite plate g to supplement the tension of the third composite plate g and reduce the occurrence of wrinkling in the third composite plate g.

The second temporary storage mechanism 82 can store the third composite plate g composited by the third combining mechanism 33 by winding, stacking, etc. For example, the structure of the second temporary storage mechanism 82 may be the same as or similar to that of the first temporary storage mechanism 81 above, and will not be repeated here.

In conjunction with FIG. 10, in some embodiments, when the winding device 100 includes the second temporary storage mechanism 82, the second cut-off mechanism 62 for cutting off the second electrode plate b may be disposed between the second feeding mechanism 12 and the third feeding mechanism 33.

It is worth noting that "the second cut-off mechanism 62 being disposed between the second feeding mechanism 12 and the third combining mechanism 33" is not a limitation on the spatial position (that is, in space, the relative positions of the second cut-off mechanism 62, the second feeding mechanism 12, and the third combining mechanism 33 are not limited), but a limitation on the order of workstations. That is, the second electrode plate b outputted by the second feeding mechanism 12 can be cut off by the second cut-off mechanism 62 before entering the third combining mechanism 33.

Exemplarily, in conjunction with FIG. 10, the second cut-off mechanism 62 may cut off the second electrode plate b, and then feed it to the third combining mechanism 33 in segments, or feed the segmented second electrode plate b to the third combining mechanism 33 in segments in an insert manner. For example, the second cut-off mechanism 62 may include components such as a feeding roller and a cutting knife.

During the production process, the second temporary storage mechanism 82 temporarily stores the materials and can continuously convey the materials downstream, so that the winding needle 42 can operate without deceleration and is not affected by the operation of the second cut-off mechanism 62 upstream of the second temporary storage mechanism 82. For example, as shown in FIG. 5, the precision requirement for the first cut-off mechanism 61 to cut off the first electrode plate a is high, resulting in a slow operating speed. The first temporary storage mechanism 81 is configured to temporarily store the second composite plate f after the first electrode plate a and the first separator c are combined, and the winding needle 42 operates at a high rate. By temporary storage through the first temporary storage mechanism 81, the first temporary storage mechanism 81 can still deliver the second composite plate f to the first combining mechanism 31 without reducing the rate of the winding needle 42 in a process that the first cut-off mechanism 61 cuts off the first electrode plate a, thereby improving the winding efficiency and thus improving the overall production capacity. Moreover, the second cut-off mechanism 62 can be disposed spatially away from the winding mechanism 40, so as to alleviate the adverse effect on the quality of the electrode assembly 200 caused by chips formed by cutting falling into the electrode assembly 200 wound on the winding needle 42, thereby helping to further improve the quality of the electrode assembly 200.

When the winding device 100 includes the second temporary storage mechanism 82, the third detection apparatus 73 may be disposed upstream of the second temporary storage mechanism 82 (for example, the embodiment shown in FIG. 10), and the third detection apparatus 73 may further be disposed downstream of the second temporary storage mechanism 82. When the third detection apparatus 73 is disposed downstream of the second temporary storage mechanism 82, the third detection apparatus 73 can detect the third composite plate g released by the second temporary storage mechanism 82. Thus, defects of the third composite plate g generated during the combining process and the temporary storage process can be detected by the third detection apparatus 73, which is beneficial to improving the quality of the electrode assembly 200 used in production.

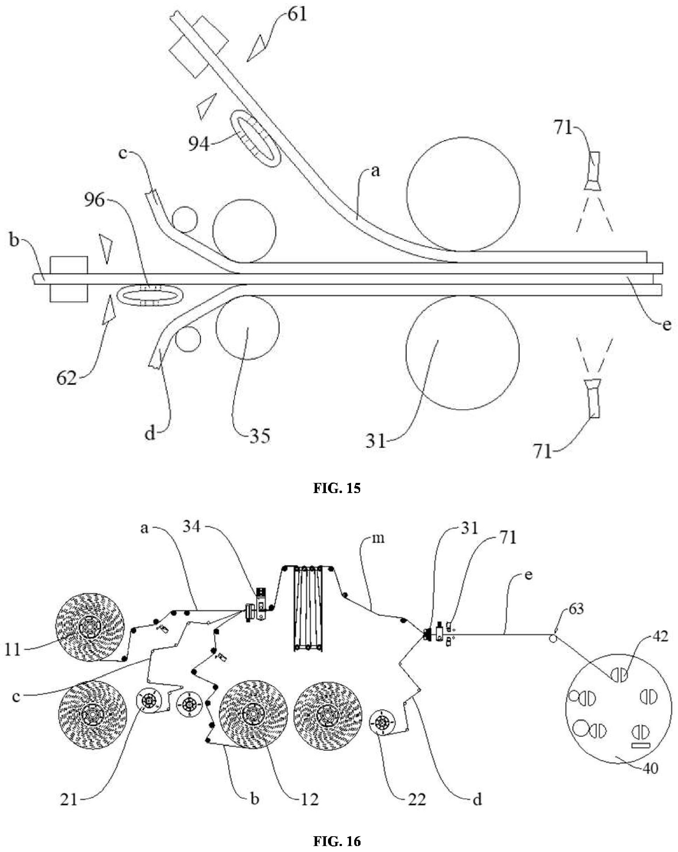

When the fourth feeding mechanism 22 is disposed upstream of the first combining mechanism 31, it is not necessary to combine one electrode plate and one separator first. For example, the first separator c, the second electrode plate b and the second separator d may be combined first (for example, referring to FIG. 11 to FIG. 15); or the first electrode plate a, the first separator c and the second electrode plate b may be combined first (for example, referring to FIG. 16).

In conjunction with FIG. 11 to FIG. 15, in some embodiments, when the fourth feeding mechanism 22 is disposed upstream of the first combining mechanism 31, the winding device 100 may further include a fifth combining mechanism 35, the fifth combining mechanism 35 is located upstream of the first combining mechanism 31, and the fifth combining mechanism 35 is located downstream of the third feeding mechanism 21, the second feeding mechanism 12 and the fourth feeding mechanism 22, and the fifth combining mechanism 35 is configured to combine the first separator c, the second electrode plate b and the second separator d into a fifth composite plate j.

In the fifth composite plate j, the second electrode plate b is stacked between the first separator c and the second separator d, but the connection state of the first separator c, the second electrode plate b and the second separator d is not limited. For example, the second electrode plate b and the second separator d in the fifth composite plate j may be in contact but not connected, or may be in contact and connected. That is, the second electrode plate b and the second separator d in the fifth composite plate j are in a connected or non-connected bonding state. The second electrode plate b and the first separator c in the fifth composite plate j may be in contact but not connected, or in contact and connected. That is, the second electrode plate b and the first separator c in the fifth composite plate j are in a connected or non-connected bonding state. The edge of the second separator d and the edge of the first separator c in the fifth composite plate j may be in contact but not connected, or may be in contact and in edge sealing and connection.

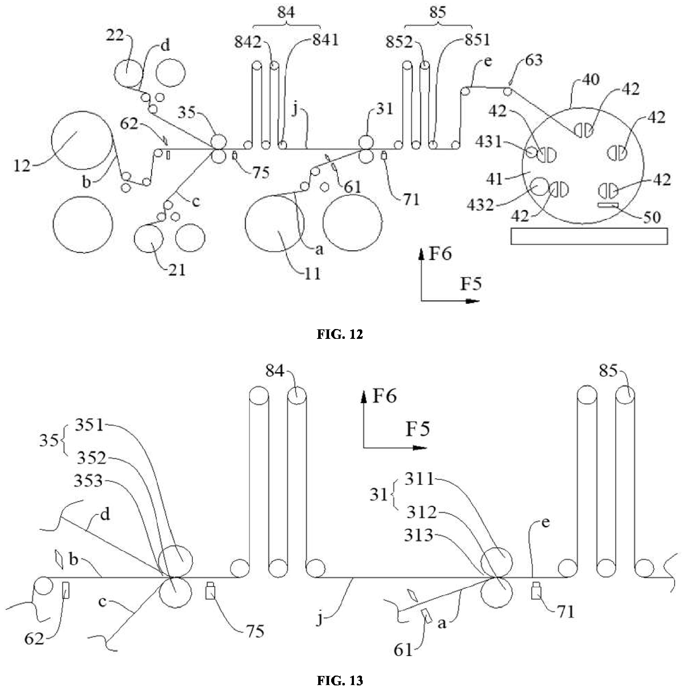

In conjunction with FIG. 11 and FIG. 12, the second electrode plate b may be pulled from the second feeding mechanism 12 to the fifth combining mechanism 35, the second separator d may be pulled from the fourth feeding mechanism 22 to the fifth combining mechanism 35, the first separator c may be pulled from the third feeding mechanism 21 to the fifth combining mechanism 35, and the first electrode plate a may be pulled from the first feeding mechanism 11 to the first combining mechanism 31. The fifth combining mechanism 35 is configured to stack and composite the second separator d, the second electrode plate b, and the first separator c in sequence to form the fifth composite plate j. The first combining mechanism 31 is configured to stack and composite the first electrode plate a and the fifth composite plate j to form the first composite plate e. The first composite plate e is pulled from the first combining mechanism 31 to the winding mechanism 40 and is wound by the winding mechanism 40 to form the electrode assembly 20.

Therefore, by disposing the fifth combining mechanism 35 and the first combining mechanism 31, the second separator d, the second electrode plate b, the first separator c and the first electrode plate a are formed into the first composite plate e through two steps in succession. In this way, the operation of forming the first composite plate e from the second separator d, the second electrode plate b, the first separator c and the first electrode plate a can be more strictly controlled, which helps to improve the quality of the first composite plate e and further helps to improve the quality of the electrode assembly 200. By adopting the above technical solution, the fifth composite plate j including the second electrode plate b can be formed by the fifth combining mechanism 35 first, and then the first composite plate e including the first electrode plate a can be formed by the first combining mechanism 31. The second electrode plate b and the first electrode plate a are combined successively. In this way, the combining quality of the second electrode plate b and the first electrode plate a can be controlled separately, which can help improve the quality of the first composite plate e and thus improve the quality of the electrode assembly 200.

In addition, by disposing the fifth combining mechanism 35 and the first combining mechanism 31, the second separator d, the second electrode plate b, the first separator c and the first electrode plate a are composited into the first composite plate e through two composite steps in succession. Moreover, there can be a larger space between the fifth combining mechanism 35 and the first combining mechanism 31, which can improve the layout rationality of the winding device 100. For example, it is conducive to the layout of the fifth detection apparatus 75, the fourth temporary storage mechanism 84, the fifth temporary storage mechanism 85, etc. described later.

According to a connection relationship between the first separator c, the second electrode plate b and the second separator d in the fifth composite plate j, the form of the fifth combining mechanism 35 can be designed accordingly.

Exemplarily, the fifth combining mechanism 35 is an edge sealing mechanism, and is configured to seal and connect at least one of two side edges of the first separator c and the second separator d in a width direction. Therefore, the edge sealing mechanism can connect edges of the first separator c and the second separator d together to achieve edge sealing. When an external force is removed, the first separator c and the second separator d are not separated, causing the second electrode plate b to be exposed. In the winding process of the electrode assembly 200, the separator is not prone to folding, and is not prone to being disturbed by holes in a solution injection process, so that the risk of overlapping of the second electrode plate b with the first electrode plate a and overlapping of the second electrode plate b with a shell 3011 of a battery cell 301 is effectively reduced, thereby mitigating a lithium plating problem. For example, the edge sealing mechanism may include two edge sealing rollers disposed opposite to each other, and the two edge sealing rollers can heat the two side edges of the first separator c and the second separator d and apply a predetermined pressure in a thickness direction F1 to achieve edge sealing and connection of the first separator c and the second separator d.

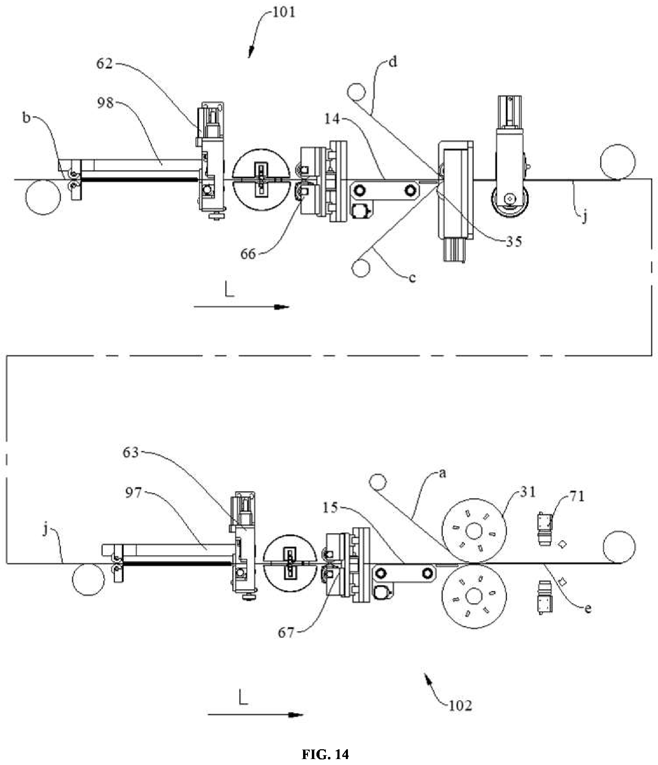

In conjunction with FIG. 14, when the fifth combining mechanism 35 is the edge sealing mechanism, the fifth composite plate j is formed as a plate body formed by the second electrode plate b being subjected to edge sealing and covered by the first separator c and the second separator d on two sides in the thickness direction F1, so that the second electrode plate b, the first separator c and the second separator d are stable in relative position, and can be synchronously conveyed to the first combining mechanism 31 without being prone to causing problems such as offset, folding of the first separator c, folding of the second separator d, and exposure of the second electrode plate b, which is beneficial to improving the position accuracy of the second electrode plate b during conveying and subsequent processes, and reducing the risk of overlapping of the second electrode plate b and the first electrode plate a.

Exemplarily, the fifth combining mechanism 35 is a composite mechanism, and is configured to fixedly connect the second electrode plate b in the fifth composite plate j with the first separator c and the second separator d respectively. Therefore, the offset of the first electrode plate a relative to the first separator c and the second separator d in the winding and use processes is reduced, which is beneficial to improving the accuracy of the relative position between the materials, thereby improving the product quality. The method of fixed connection is not limited. For example, connection may be achieved by cold pressing, hot pressing, gluing, etc. Furthermore, the position of the fixed connection is not limited and may be the entire surface or a part thereof, such as a part in the center or a part at the edge.

For example, when the fifth combining mechanism 35 is the composite structure, the second electrode plate b may be pressed between the first separator c and the second separator d by pressure, or the second electrode plate b may be bonded to the first separator c and the second separator d by gluing or other methods. For example, the fifth combining mechanism 35 may include two rollers disposed opposite to each other and spaced apart from each other, or may include one roller and a support disposed opposite to the roller and spaced apart from the roller, or may include a plurality of rollers or other structures. The roller in the fifth combining mechanism 35 may be of a rotatable structure, or a fixed structure, and may further be floatable. The roller in the fifth combining mechanism 35 may also be an active roller or a passive roller.

In some embodiments, in conjunction with FIG. 12 and FIG. 13, the fifth combining mechanism 35 includes a first composite roller of fifth mechanism 351 and a second composite roller of fifth mechanism 352, and the rotation directions of the first composite roller of fifth mechanism 351 and the second composite roller of fifth mechanism 352 are opposite. The first composite roller of fifth mechanism 351 and the second composite roller of fifth mechanism 352 are configured to cooperate in rolling to composite the second separator d, the second electrode plate b, and the first separator c.

In conjunction with FIG. 12 and 13, the first composite roller of fifth mechanism 351 and the second composite roller of fifth mechanism 352 are both of roller-shaped structures. The first composite roller of fifth mechanism 351 and the second composite roller of fifth mechanism 352 are disposed in parallel. Specifically, a central axis of the first composite roller of fifth mechanism 351 and a central axis of the second composite roller of fifth mechanism 352 are disposed in parallel, and the rotation direction of the first composite roller of fifth mechanism 351 and the rotation direction of the second composite roller of fifth mechanism 352 are opposite. The first composite roller of fifth mechanism 351 and the second composite roller of fifth mechanism 352 are distributed at intervals, so as to be spaced apart to form a fifth composite gap 353.

In conjunction with FIG. 12 and 13, the first composite roller of fifth mechanism 351 and the second composite roller of fifth mechanism 352 are distributed at intervals, so as to be spaced apart in a second direction F6 to form the fifth composite gap 353 above.

Based on the above structure, the second separator d, the second electrode plate b, and the first separator c can pass through the fifth composite gap 353 and be rolled by the first composite roller of fifth mechanism 351 and the second composite roller of fifth mechanism 352, thereby being composited to form the fifth composite plate j. With such an arrangement, the composite effect of the fifth combining mechanism 35 can be achieved.

According to the connection relationship between the first separator c, the second electrode plate b and the second separator d in the fifth composite plate j, the rolling position and rolling pressure of the first composite roller of fifth mechanism 351 and the second composite roller of fifth mechanism 352 can be specifically designed to meet the requirements of only being stacked without being connected, or composite fixed connection, or edge sealing and connection.

In some embodiments, in conjunction with FIG. 12 and FIG. 13, when the winding device 100 includes the fifth combining mechanism 35, the type of the first combining mechanism 31 is not limited. For example, the first combining mechanism 31 may be a composite mechanism and is configured to fixedly connect the fifth composite plate j with the first electrode plate a. Alternatively, the first combining mechanism 31 may also be a mechanism for allowing the fifth composite plate j and the first electrode plate a to be merely stacked together without being connected.

When the first combining mechanism 31 is the composite mechanism, and is configured to fixedly connect the fifth composite plate j with the first electrode plate a, the offset of the first electrode plate a relative to the fifth composite plate j in the winding and use processes can be reduced, which is beneficial to improving the accuracy of the relative position between the materials, thereby improving the product quality. The method of fixed connection is not limited. For example, connection may be achieved by cold pressing, hot pressing, gluing, etc. Furthermore, the position of the fixed connection is not limited and may be the entire surface or a part thereof, such as a part in the center or a part at the edge.

In some embodiments, in conjunction with FIG. 12 and FIG. 13, the first combining mechanism 31 includes a first composite roller of first mechanism 311 and a second composite roller of first mechanism 312, and the rotation directions of the first composite roller of first mechanism 311 and the second composite roller of first mechanism 312 are opposite. The first composite roller of first mechanism 311 and the second composite roller of first mechanism 312 are configured to cooperate in rolling to composite the first electrode plate a and the fifth composite plate j. The first composite roller of first mechanism 311 and the second composite roller of first mechanism 312 are both of roller-shaped structures.

The first composite roller of first mechanism 311 and the second composite roller of first mechanism 312 are disposed in parallel. Specifically, a central axis of the first composite roller of first mechanism 311 and a central axis of the second composite roller of first mechanism 312 are disposed in parallel, and the rotation direction of the first composite roller of first mechanism 311 and the rotation direction of the second composite roller of first mechanism 312 are opposite. The first composite roller of first mechanism 311 and the second composite roller of first mechanism 312 are distributed at intervals, so as to be spaced apart to form a first composite gap 313.

The first composite roller of first mechanism 311 and the second composite roller of first mechanism 312 are distributed at intervals, so as to be spaced apart in a second direction F6 to form the first composite gap 313 above.

Based on the above structure, the first electrode plate a and the fifth composite plate j can pass through the first composite gap 313 and be rolled by the first composite roller of first mechanism 311 and the second composite roller of first mechanism 312, thereby being composited to form the first composite plate e. With such an arrangement, the composite effect of the first combining mechanism 31 can be achieved.

According to the connection relationship between the first electrode plate a and the fifth composite plate j in the first composite plate e, the rolling position and rolling pressure of the first composite roller of first mechanism 311 and the second composite roller of first mechanism 312 can be specifically designed to meet the requirements of only being stacked without being connected, or composite fixed connection.

In conjunction with FIG. 11 and FIG. 12, in some embodiments, when the winding device 100 includes the fifth combining mechanism 35, the winding device 100 may further include a fifth detection apparatus 75, and the fifth detection apparatus 75 is located between the fifth combining mechanism 35 and the first combining mechanism 31 and configured to detect the fifth composite plate j.

It is worth noting that "the fifth detection apparatus 75 being located between the fifth combining mechanism 35 and the first combining mechanism 31" is not a limitation on a spatial position (that is, in space, the relative positions of the fifth detection apparatus 75, the fifth combining mechanism 35, and the first combining mechanism 31 are not limited), but a limitation on the order of workstations. That is, the fifth composite plate j formed by the combining of the fifth combining mechanism 35 can first be detected by the fifth detection apparatus 75 before entering the first combining mechanism 31.

The fifth detection apparatus 75 may be, but is not limited to, a charge coupled device (CCD) camera. Exemplarily, the fifth detection apparatus 75 may include a camera, a machine vision detection device or other structures. Exemplarily, the fifth detection apparatus 75 may further include other devices such as a control device. The fifth detection apparatus 75 may acquire image information (such as a position, a color, and a shape) of the corresponding fifth composite plate j, and can convert the image information into a digital signal and send the digital signal to the control device, so that the control device judges whether the fifth composite plate j meets the requirements according to a preset program.

In conjunction with FIG. 11 and 12, by disposing the fifth detection apparatus 75 between the fifth combining mechanism 35 and the first combining mechanism 31, the fifth composite plate j can be detected, thereby acquiring the quality of the fifth composite plate j.

The fifth detection apparatus 75 can detect the fifth composite plate j, so as to obtain the combining status of the first separator a, the second electrode plate b, and the second separator c, and thus strictly control the quality of the fifth composite plate j, which can help improve the quality of the electrode assembly 200.
for example, in conjunction with FIG. 11 and FIG. 12, the fifth detection apparatus 75 may be configured to detect the relative position of the first separator c and the second electrode plate b in the fifth composite plate j. Thus, the fifth detection apparatus 75 can detect the OH of the first separator c exceeding beyond the second electrode plate b. "The OH of the first separator c exceeding beyond the second electrode plate b" means that a size of the edge of the first separator c exceeds the edge of the active material region of the second electrode plate b in the width direction of the electrode plate. The defective OH means that the size of the overhang does not meet the required size range. Thus, the first separator c can play a more reliable insulating role between the second electrode plate b and the first electrode plate a.

Exemplarily, the fifth detection apparatus 75 is disposed on one side or both sides of the fifth composite plate j in the thickness direction F1 to detect information such as defects of the fifth composite plate j itself. The fifth detection apparatus 75 may detect multiple parts in the material length direction in sequence during the movement of the material, or may perform continuous detection in the material length direction.

Exemplarily, in conjunction with FIG. 11 and FIG. 12, when the fifth combining mechanism 35 is a composite mechanism, the fifth detection apparatus 75 is disposed downstream of the fifth combining mechanism 35 and can detect the composite state of the fifth composite plate j. For example, composite defects such as corner folding and damage of the second electrode plate b are detected.

Exemplarily, in conjunction with FIG. 11 and FIG. 12, when the fifth combining mechanism 35 is an edge sealing mechanism, the fifth detection apparatus 75 may be configured to detect an edge-sealing state of the fifth composite plate j. Thus, the fifth composite plate j can be conveyed to the fifth detection apparatus 75 after edge sealing, so as to detect the state of the formed sealed edge by using the fifth detection apparatus 75. For example, edge sealing defects such as corner folding of the second electrode plate b, wrinkling of the first separator c and the second separator d, failure of the sealed edge, misalignment of the sealed edge, a size of the sealed edge, and grayscale difference can be detected. For example, the width and position of the sealed edge in a width direction F2 of the first separator c and the second separator d can be detected, so that the first separator c, the second separator d and the edge sealing mechanism can be adjusted according to the detection results. Thus, the width of the formed sealed edge is in a range from 0.5 mm to 1 mm, and the sealed edge is roughly in a middle of the edge part of the first separator c and the second separator d that exceeds beyond the second electrode plate b, thereby improving the reliability of the edge sealing. The first separator c and the second separator d can reliably limit and protect the second electrode plate b.

When the fifth combining mechanism 35 is the edge sealing mechanism, the fifth detection apparatus 75 is configured to detect the relative position of the first separator c, the second separator d and the second electrode plate b. For example, the fifth detection apparatus 75 can further detect the OH of the first separator c and the second separator d exceeding beyond the second electrode plate b. "The OH of the first separator c and the second separator d exceeding beyond the second electrode plate b" means that a size of the edge of the first separator c exceeds the edge of the active material region of the second electrode plate b, and a size of the edge of the second separator d exceeds the edge of the active material region of the second electrode plate b in the width direction of the electrode plate.

Therefore, the fifth detection apparatus 75 may detect whether the relative position of the second electrode plate b and the first separator c as well as the second separator d is accurate, thereby improving the position accuracy of the first separator c, the second separator d and the second electrode plate b. The two sides of the first separator c and the second separator d in the width direction F2 can exceed the edge of the second electrode plate b by a sufficient size, thereby improving the edge sealing effect and reducing the risk of overlapping of the second electrode plate b and the first electrode plate a.

Exemplarily, when the fifth combining mechanism 35 is the edge sealing mechanism and the first combining mechanism 31 is a composite mechanism, the edge sealing mechanism is disposed upstream of the composite mechanism. The edge sealing mechanism is configured to perform edge sealing on the second electrode plate b, the first separator c and the second separator d to form the fifth composite plate j. After the fifth composite plate j is conveyed to the composite mechanism, the composite mechanism can attach the first electrode plate a to one side of the fifth composite plate j and combine them to form an unwound electrode assembly 200.

At this time, the first detection apparatus 71 is further configured to detect the relative position of the second electrode plate b and the first electrode plate a. After the fifth composite plate j and the first electrode plate a are stacked and composited, the obtained relative position of the second electrode plate b and the first electrode plate a of the electrode assembly 200 is accurate. For example, the requirement that the two sides of the width of the second electrode plate b exceeds the edge of the first electrode plate a by a certain distance is met, thereby reducing the risk of OH missed detection and better solving the lithium plating problem.

For example, the fifth detection apparatus 75 may be a photoelectric sensor, an X-ray camera, a charge coupled device (CCD) visual sensor, etc., and the types of different detection apparatuses can be the same or different. For example, the fifth detection apparatus 75 may include a CCD. The CCD can acquire an optical image of the material to achieve detection. Furthermore, the CCD can also convert the optical image into a digital signal, so that the optical image is analyzed, processed and stored. For example, the fifth detection apparatus 75 may include the X-ray camera, and the X-ray camera can penetrate the first separator c and the second separator d to detect the position of the second electrode plate b located in the inner layer. The X-ray camera has high resolution and can penetrate objects for detection, thereby improving the detection precision.

In some embodiments, in conjunction with FIG. 11 and FIG. 12, when the winding device 100 includes the fifth combining mechanism 35, the winding device 100 may further include a fourth temporary storage mechanism 84. The fourth temporary storage mechanism 84 is disposed between the fifth combining mechanism 35 and the first combining mechanism 31, and is configured to temporarily store the fifth composite plate j.

In some embodiments, in conjunction with FIG. 12, the fourth temporary storage mechanism 84 is disposed between the fifth combining mechanism 35 and the first combining mechanism 31 and configured to temporarily store the fifth composite plate j. The fourth temporary storage mechanism 84 is disposed between the fifth combining mechanism 35 and the first combining mechanism 31 and is configured to temporarily store the fifth composite plate j, so that the fourth temporary storage mechanism 84 can temporarily store the fifth composite plate j located between the fifth combining mechanism 35 and the first combining mechanism 31.

Therefore, the fourth temporary storage mechanism 84 can play a role in temporarily storing the fifth composite plate j. When there is a speed difference before and after the fourth temporary storage mechanism 84, the fourth temporary storage mechanism 84 can temporarily store and release part of the fifth composite plate j in time, thereby solving a speed reduction problem or a wrinkle problem caused by insufficient tension, and improving the production capacity and the product quality.

In some embodiments, in conjunction with FIG. 11 and FIG. 12, when the winding device 100 includes the fourth temporary storage mechanism 84, the second cut-off mechanism 62 for cutting off the second electrode plate b may be disposed between the second feeding mechanism 12 and the fifth combining mechanism 35.

It is worth noting that "the second cut-off mechanism 62 being disposed between the second feeding mechanism 12 and the fifth combining mechanism 35" is not a limitation on the spatial position (that is, in space, the relative positions of the second cut-off mechanism 62, the second feeding mechanism 12, and the fifth combining mechanism 35 are not limited), but a limitation on the order of workstations. That is, the second electrode plate b outputted by the second feeding mechanism 12 can be cut off by the second cut-off mechanism 62 before entering the fifth combining mechanism 35.

In this way, when the second cut-off mechanism 62 needs to decelerate to cut off the second electrode plate b, the fourth temporary storage mechanism 84 can release the temporarily stored fifth composite plate j to be supplied to the first combining mechanism 31, so that the first combining mechanism 31 can continuously and uninterruptedly composite the fifth composite plate j and the first electrode plate a to form the first composite plate e without stopping, and further the winding mechanism 40 can continuously and uninterruptedly wind the first composite plate e without stopping. In this way, the winding efficiency of the winding device 100 can be improved, thereby improving the production efficiency of the electrode assembly.

Moreover, the second cut-off mechanism 62 can be disposed spatially away from the winding mechanism 40, so as to alleviate the adverse effect on the quality of the electrode assembly 200 caused by chips formed by cutting falling into the electrode assembly 200 wound on the winding needle 42, thereby helping to further improve the quality of the electrode assembly 200.

For example, the feeding of the second electrode plate b can be stopped. That is, the first feeding mechanism 11 can stop the winding and unwinding operation of the second electrode plate b and cut off the second electrode plate b, thereby ensuring the cutting operation of the second electrode plate b to a certain extent. Moreover, in a process that the second electrode plate b stops feeding and performs the cutting operation, since the fourth temporary storage mechanism 84 temporarily stores the fifth composite plate j located between the fifth combining mechanism 35 and the first combining mechanism 31, the first combining mechanism 31 can continuously and uninterruptedly composite the fifth composite plate j and the first electrode plate a to form the first composite plate e without stopping, and further the winding mechanism 40 can continuously and uninterruptedly wind the first composite plate e without stopping. In this way, the winding efficiency of the winding device 100 can be improved, thereby improving the production efficiency of the electrode assembly.

In some embodiments, in conjunction with FIG. 12, the fourth temporary storage mechanism 84 may include a fourth floating roller 842 and a plurality of fourth fixed rollers 841. The fourth floating roller 842 and the fourth fixed rollers 841 are configured to alternately bypass the fifth composite plate j, and the fourth floating roller 842 can move relative to the fourth fixed rollers 841 to temporarily store the fifth composite plate j. The fourth fixed rollers 841 are pulleys that are rotatable and fixed in position. The fourth floating roller 842 is a pulley that cannot rotate and is not fixed in position. The number of the fourth floating roller 842 may be at least one.

The fourth floating roller 842 and the fourth fixed rollers 841 are configured to alternately bypass the fifth composite plate j, which means that the fifth composite plate j can alternately bypass the fourth floating roller 842 and the fourth fixed rollers 841. Taking an example that there are two fourth fixed rollers 841 and one fourth floating roller 842, the fifth composite plate j can bypass one of the fourth fixed rollers 841, the fourth floating roller 842 and the other fourth fixed roller 841 in sequence. Taking an example that there are three fourth fixed rollers 841 and two fourth floating rollers 842, as shown in FIG. 2 and FIG. 3, the fifth composite plate j can bypass the 1st fourth fixed roller 841, the 1st fourth floating roller 842, the 2nd fourth fixed roller 841, the 2nd fourth floating roller 842 and the 3rd fourth fixed roller 841 in sequence.

The plurality of fourth fixed rollers 841 are distributed at intervals in the first direction F5. In the first direction F5, the fourth floating roller 842 is disposed between the two adjacent fourth fixed rollers 841. Furthermore, the fourth fixed rollers 841 and the fourth floating roller 842 are also distributed at intervals in the second direction F6. The fifth composite plate j alternately bypasses the fourth fixed rollers 841 and the fourth floating roller 842 and is pulled to the first combining mechanism 31. When the second electrode plate b stops to be fed for performing a cutting operation, the fourth floating roller 842 can move in the second direction F6 toward the fourth fixed rollers 841 to shorten a distance between the fourth fixed rollers 841 and the fourth floating roller 842, so that the first combining mechanism 31 can continuously and uninterruptedly composite the fifth composite plate j to form the first composite plate e. Accordingly, the winding mechanism 40 can continuously and uninterruptedly perform a winding operation on the first composite plate e.

By disposing the fourth fixed rollers 841 and the fourth floating roller 842 that can move relative to the fourth fixed rollers 841, and making the fourth fixed rollers 841 and the fourth floating roller 842 be capable of alternately bypassing the fifth composite plate j, a temporarily storing effect for the fifth composite plate j can be achieved.

It should be noted that the length of the fifth composite plate j that can be temporarily stored by the fourth temporary storage mechanism 84 can be adjusted by adjusting the fourth floating roller 842, the number of the fourth floating roller 842, and the distance between the fourth floating roller 842 and the fourth fixed rollers 841.

When the winding device 100 includes the fourth temporary storage mechanism 84, the fifth detection apparatus 75 can be disposed between the fifth combining mechanism 35 and the fourth temporary storage mechanism 84; or, the fifth detection apparatus 75 can also be disposed between the fourth temporary storage mechanism 84 and the first combining mechanism 31. When the fifth detection apparatus 75 is disposed between the fourth temporary storage mechanism 84 and the first combining mechanism 31, the defects generated by the fifth composite plate j during the combining process and the temporary storage process can be detected by the fifth detection apparatus 75, which is beneficial to improving the quality of the electrode assembly 200 used in production.

In conjunction with FIG. 11 and FIG. 12, in some embodiments, when the winding device 100 includes the fifth combining mechanism 35, the winding device 100 may further include a fifth temporary storage mechanism 85. The fifth temporary storage mechanism 85 is disposed between the first combining mechanism 31 and the winding mechanism 40 and configured to temporarily store the first composite plate e.

In this way, the fifth temporary storage mechanism 85 may temporarily store the first composite plate e located between the first combining mechanism 31 and the winding mechanism 40. When there is a speed difference before and after the fifth temporary storage mechanism 85, the fifth temporary storage mechanism 85 can temporarily store and release part of the first composite plate e in time, thereby solving a speed reduction problem or a wrinkle problem caused by insufficient tension, and improving the production capacity and the product quality.

In conjunction with FIG. 11 and FIG. 12, in some embodiments, when the winding device 100 includes the fifth temporary storage mechanism 85, the first cut-off mechanism 61 for cutting off the first electrode plate a may be disposed between the first feeding mechanism 11 and the first combining mechanism 31.

It is worth noting that "the first cut-off mechanism 61 being disposed between the first feeding mechanism 11 and the first combining mechanism 31" is not a limitation on the spatial position (that is, in space, the relative positions of the first cut-off mechanism 61, the first feeding mechanism 11, and the first combining mechanism 31 are not limited), but a limitation on the order of workstations. That is, the first electrode plate a outputted by the first feeding mechanism 11 can be cut off by the first cut-off mechanism 61 before entering the first combining mechanism 31.

In this way, when the first cut-off mechanism 61 needs to decelerate to cut off the first electrode plate a, the fifth temporary storage mechanism 85 can release the temporarily stored first composite plate e to be supplied to the winding mechanism 40, so that the winding mechanism 40 can continuously and uninterruptedly wind the first composite plate e without stopping. In this way, the winding efficiency of the winding device 100 can be improved, thereby improving the production efficiency of the electrode assembly. Moreover, the first cut-off mechanism 61 can be disposed spatially away from the winding mechanism 40, so as to alleviate the adverse effect on the quality of the electrode assembly 200 caused by chips formed by cutting falling into the electrode assembly 200 wound on the winding needle 42, thereby helping to further improve the quality of the electrode assembly 200.

For example, the feeding of the second electrode plate b and the first electrode plate a can be stopped. That is, the first feeding mechanism 11 and the third feeding mechanism 21 can stop the winding and unwinding operation of the first electrode plate a and the second electrode plate b respectively and cut off the first electrode plate a and the second electrode plate b, thereby ensuring the cutting operation of the second electrode plate b and the first electrode plate a to a certain extent. Moreover, in a process that the second electrode plate b and the first electrode plate a stop feeding and perform the cutting operation, since the fifth temporary storage mechanism 85 temporarily stores the first composite plate e located between the first combining mechanism 31 and the winding mechanism 40, the winding mechanism 40 can continuously wind the first composite plate e without stopping. In this way, the winding mechanism 40 can perform the winding operation without stopping the machine, thereby improving the winding efficiency of the winding device 100 and improving the production efficiency of the electrode assembly.

In some embodiments, in conjunction with FIG. 12, the fifth temporary storage mechanism 85 may include a fifth floating roller 852 and a plurality of fifth fixed rollers 851. The fifth floating roller 852 and the fifth fixed rollers 851 are configured to alternately bypass the first composite plate e, and the fifth floating roller 852 can move relative to the fifth fixed rollers 851 to temporarily store the first composite plate e.

The fifth fixed rollers 851 are pulleys that are rotatable and fixed in position. The fifth floating roller 852 is pulley that cannot rotate and is not fixed in position. The number of the fifth floating roller 852 may be at least one.

The fifth floating roller 852 and the fifth fixed rollers 851 are configured to alternately bypass the first composite plate e, which means that the first composite plate e can alternately bypass the fifth floating roller 852 and the fifth fixed rollers 851. Taking an example that there are two fifth fixed rollers 851 and one fifth floating roller 852, the first composite plate e can bypass one of the fifth fixed rollers 851, the fifth floating roller 852 and the other fifth fixed roller 851 in sequence.

Taking an example that there are three fifth fixed rollers 851 and two fifth floating rollers 852, the first composite plate e can bypass the 1st fifth fixed roller 851, the 1st fifth floating roller 852, the 2nd fifth fixed roller 851, the 2nd fifth floating roller 852 and the 3rd fifth fixed roller 851 in sequence.

The plurality of fifth fixed rollers 851 are distributed at intervals in the first direction F5. In the first direction F5, the fifth floating roller 852 is disposed between the two adjacent fifth fixed rollers 851. Furthermore, the fifth fixed rollers 851 and the fifth floating roller 852 are also distributed at intervals in the second direction F6. The first composite plate e alternately bypasses the fifth fixed rollers 851 and the fifth floating roller 852 and is pulled to the winding mechanism 40. When at least one of the second electrode plate b and the first electrode plate a stops to be fed for performing a cutting operation, the fifth floating roller 852 can move in the second direction F6 toward the fifth fixed rollers 851 to shorten a distance between the fifth fixed rollers 851 and the fifth floating roller 852, so that the winding mechanism 40 can continuously and uninterruptedly perform a winding operation on the first composite plate e. The first direction F5 is perpendicular to the second direction F6.

By disposing the fifth fixed rollers 851 and the fifth floating roller 852 that can move relative to the fifth fixed rollers 851, and making the fifth fixed rollers 851 and the fifth floating roller 852 be capable of alternately bypassing the first composite plate e, a temporarily storing effect for the first composite plate e can be achieved.

It should be noted that the length of the first composite plate e that can be temporarily stored by the fifth temporary storage mechanism 85 can be adjusted by adjusting the fifth floating roller 852, the number of the fifth floating roller 852, and the distance between the fifth floating roller 852 and the fifth fixed rollers 851.

When the winding device 100 includes the fifth temporary storage mechanism 85, the first detection apparatus 71 can be disposed between the fifth temporary storage mechanism 85 and the first combining mechanism 31; or, the first detection apparatus 71 can also be disposed between the fifth temporary storage mechanism 85 and the winding mechanism 40. When the first detection apparatus 71 is disposed between the fifth temporary storage mechanism 85 and the winding mechanism 40, the defects generated by the first composite plate g during the combining process and the temporary storage process can be detected by the first detection apparatus 71, which is beneficial to improving the quality of the electrode assembly 200 used in production.

Exemplarily, in conjunction with FIG. 12 and FIG. 13, when the fourth feeding mechanism 22 is disposed upstream of the first combining mechanism 31 so that the second separator d is also combined in the first composite plate e, and when the winding device 100 includes a fifth combining mechanism 35, a third cut-off mechanism 63 may be disposed between the first combining mechanism 31 and the winding mechanism 40, and configured to cut off the second separator d and the first separator c. Therefore, a length of the separator can be made longer than a length of the electrode plate relatively easily, thereby meeting the design requirements of the electrode assembly 200, and only one third cut-off mechanism 63 needs to be disposed, which can simplify the device, reduce costs and save space. Exemplarily, in conjunction with FIG. 12 and FIG. 13, when the winding device 100 includes the fifth temporary storage mechanism 85, the third cut-off mechanism 63 is specifically disposed between the fifth temporary storage mechanism 85 and the winding mechanism 40.

In conjunction with FIG. 16, in some embodiments, when the fourth feeding mechanism 22 is disposed upstream of the first combining mechanism 31, the winding device 100 may further include the fourth combining mechanism 34. The fourth combining mechanism 34 is located upstream of the first combining mechanism 31 and downstream of the third feeding mechanism 21, the second feeding mechanism 12, and the first feeding mechanism 11. The fourth combining mechanism 34 is configured to combine the first electrode plate a, the first separator c, and the second electrode plate b into a seventh composite plate m. The seventh composite plate m and the second separator d are combined into the first composite plate e through the first combining mechanism 31. The first detection apparatus 71 is disposed downstream of the first combining mechanism 31 and configured detect the first composite plate e.

At this time, the first detection apparatus 71 may be configured to detect the relative position of the second electrode plate b and the first electrode plate a. For example, the requirement that the two sides of the width of the second electrode plate b exceeds the edge of the first electrode plate a by a certain distance is met, thereby reducing the risk of OH missed detection and better solving the lithium plating problem. Alternatively, the first detection apparatus 71 may further be configured to detect the OH of the separator covering the electrode plate.

When the winding device 100 includes the fourth combining mechanism 34, the first combining mechanism 31 may be an edge sealing mechanism, and is configured to seal and connect at least one of two side edges of the first separator c and the second separator d in a width direction. At this time, the first detection apparatus 71 may detect an edge sealing state. Alternatively, the first combining mechanism 31 may also be a composite mechanism, etc.

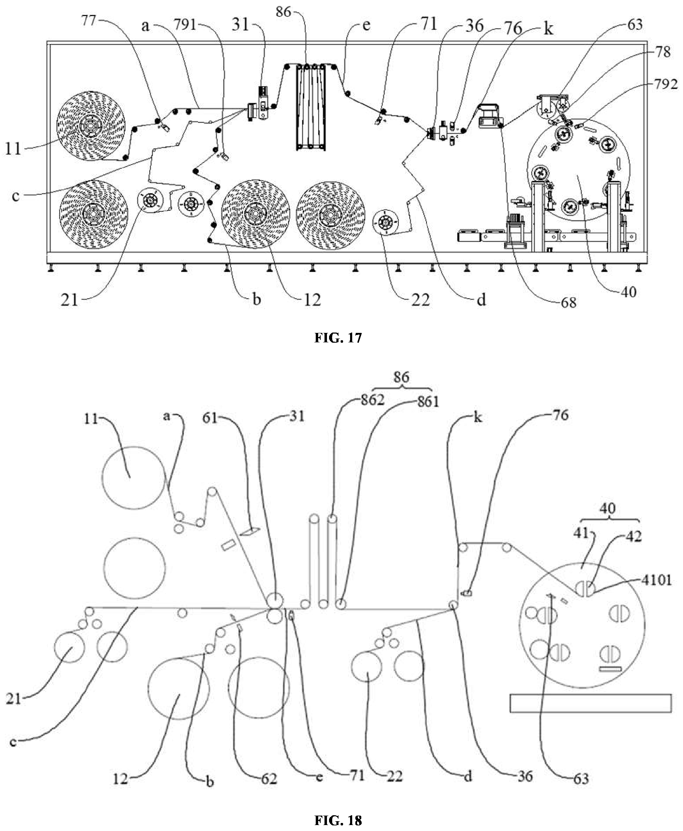

Of course, the present application is not limited to this. In other embodiments of the present application, the first composite plate e may not include the second separator d. For example, in conjunction with FIG. 17, in some embodiments, the combining position of the second separator d and the first composite plate e is located downstream of the first detection apparatus 71.

The fourth feeding mechanism 22 is no longer disposed upstream of the first combining mechanism 31, so that the second separator d released by the fourth feeding mechanism 22 cannot be delivered to the first combining mechanism 31. For example, the fourth feeding mechanism 22 may convey the second separator d between the first combining mechanism 31 and the winding mechanism 40; or, for another example, the fourth feeding mechanism 22 can further deliver the second separator d directly to the winding mechanism 40.

The first combining mechanism 31 can combine the first electrode plate a, the first separator c and the second electrode plate b at one time, or the first combining mechanism 31 can also combine the first electrode plate a, the first separator c and the second electrode plate b in batches. For example, other combining mechanisms can further be disposed upstream of the first combining mechanism 31 to first combine the first electrode plate a and the first separator c, and then combine the second electrode plate b and the combined plate through the first combining mechanism 31 to form the first composite plate e.

In the first composite plate e, the first electrode plate a, the first separator c and the second electrode plate b are stacked in sequence. After the first composite plate e is formed, the first composite plate e can be detected using the first detection apparatus 71. The detection items may include: whether the first separator c can cover the first electrode plate a and the second electrode plate b, whether the first composite plate e has the problem of head swing or tail swing, etc.

For example, in conjunction with FIG. 17, the first detection apparatus 71 may be configured to detect the state of the first electrode plate a in the first composite plate e. The state of the first electrode plate a includes but is not limited to the width of the active material layer of the first electrode plate a, known defective electrode plate products (such as defective products with yellow labels), electrode plate damage, etc.

For example, in conjunction with FIG.17, the first detection apparatus 71 may be configured to detect the state of the first separator c in the first composite plate e. The state of the first separator c includes but is not limited to corner folding of the separator, breakage, and the state of the second electrode plate b and the first separator c.

For example, in conjunction with FIG. 17, the first detection apparatus 71 may be configured to detect the state of the second electrode plate b in the first composite plate e. The state of the second electrode plate b includes but is not limited to the width of the active material layer of the second electrode plate b, known defective electrode plate products (such as defective products with yellow labels), electrode plate damage, etc.

For example, in conjunction with FIG. 17, the first detection apparatus 71 may be configured to detect a relative position relationship between the first electrode plate a and the first separator c in the first composite plate e, including but not limited to the OH of the first separator c covering the first electrode plate a, namely, the size of the edge of the first separator c exceeding beyond the edge of the first electrode plate a in at least one direction of the width direction F2 and the length direction F3. The defective OH means that the size of the overhang does not meet the required size range.

For example, in conjunction with FIG. 17, the first detection apparatus 71 may be configured to detect a relative position relationship between the second electrode plate b and the first separator c in the first composite plate e, including but not limited to the OH of the first separator c covering the second electrode plate b, namely, the size of the edge of the first separator c exceeding beyond the edge of the second electrode plate b in at least one direction of the width direction F2 and the length direction F3. The defective OH means that the size of the overhang does not meet the required size range.

Therefore, in conjunction with FIG. 17, the first detection apparatus 71 can be configured to detect whether the width of the active material layer of the first electrode plate a and the second electrode plate b in the first composite plate e meets the set range, and whether the first electrode plate a, the second electrode plate b and the first separator c have defects such as composite defects such as crushing so as to be discovered in time and eliminated. The first detection apparatus 71 can further detect whether the relative position of the second electrode plate b and the first separator c is accurate, and whether the relative position of the first electrode plate a and the first separator c is accurate, so as to facilitate subsequent processing and reduce the risk of overlapping of the second electrode plate b and the first electrode plate a.

For example, the first detection apparatus 71 may include a camera, a machine vision detection device or other structures. The camera is, for example, a CCD camera. The first detection apparatus 71 may further include other elements such as a controller. The first detection apparatus 71 can acquire image information (such as a position, a color, and a shape) of the corresponding electrode plate, separator, and first composite plate e, can convert the image information into a digital signal and send the digital signal to the controller, so that the controller judges whether the electrode plate, the separator, and the first composite plate e meet the requirements according to a preset program. For example, the first composite plate e may be conveyed in a straight line, the first detection apparatus 71 can more comprehensively detect the state of the entire first composite plate e passing through, and the detection result can have a higher accuracy.

In the related art, the winding device winds the electrode plate and the separator at the winding needle, which makes it difficult for the head and tail of the electrode plate and the separator entering the winding needle to be detected by the detection device. in the present embodiment, the winding device 100 includes the first detection apparatus 71 disposed between the first combining mechanism 31 and the winding mechanism 40. Disposing the first detection apparatus 71 upstream of the winding mechanism 40 can more comprehensively detect the first composite plate e formed by the three-in-one stacking of the first electrode plate a, the first separator c and the second electrode plate b, thereby reducing the detection blind zone and improving the detection accuracy. Moreover, since the first composite plate e is a three-in-one stacked form in which the first electrode plate a, the first separator c and the second electrode plate b are stacked in sequence, it is conducive to early and accurate detection.

Exemplarily, in conjunction with FIG. 17, the winding device 100 includes the first combining mechanism 31, the fourth feeding mechanism 22 and the winding mechanism 40. The first combining mechanism 31 is configured to press the first electrode plate a, the first separator c and the second electrode plate b to form the first composite plate e. The fourth feeding mechanism 22 is configured to unwind the second separator d. The winding mechanism 40 is configured to wind the first composite plate e and the second separator d to form the electrode assembly 200. The first combining mechanism 31 first combines the first electrode plate a, the first separator c and the second electrode plate b into the first composite plate e, and then winds the first composite plate e and the second separator d on the winding mechanism 40. The first combining mechanism 31 and the winding mechanism 40 of the winding device 100 can be disposed at intervals, and each can obtain a larger space. Moreover, the winding device 100 does not need to feed the cathode electrode plate, the anode electrode plate and the separator to the winding mechanism 40 separately, which solves the problem of crowded space above the winding mechanism 40, optimizes the layout of the winding device 100, and is conducive to the flexible arrangement of various components. In addition, since the first combining mechanism 31 presses the first electrode plate a, the first separator c and the second electrode plate b to form the first composite plate e, the first composite plate e can be comprehensively detected before entering the winding mechanism 40, thereby solving the problem of detection blind zone in the detection of the wound electrode assembly 200 at the winding mechanism 40.

In addition, both sides of the first composite plate e are electrode plates. During the conveying of the first composite plate e, friction force on both sides of the first composite plate e in its thickness direction is consistent is size. When passing through a conveying roller, it is not prone for the roller to detach from the electrode plate.

When the first composite plate e does not include the second separator d, the first electrode plate a and the first separator c in the first composite plate e may be in contact but not connected, or may be in contact and connected. That is, the first electrode plate a and the first separator c are in a connected or non-connected bonding state. At the same time, the second electrode plate b and the first separator c in the first composite plate e may be in contact but not connected, or may be in contact and connected. That is, the second electrode plate b and the first separator c are in a connected or non-connected bonding state.

In conjunction with FIG. 17, when the first composite plate e does not include the second separator d, the unwinding of the second separator d is not affected by processes such as cut-off and defect removal of the first composite plate e upstream. As needed, the second separator d can be continuously unwound (i.e., uninterruptedly unwound), so that the second separator d can extend beyond the heads and the tails (for example, on two sides of the electrode plate in the length direction F3) of the electrode plate of each electrode assembly 200, thereby improving the effect of the second separator d in separating the first electrode assembly a and the second electrode assembly b during the process of winding the electrode assembly 200, which is beneficial to reducing the risk of short circuit caused by overlapping of the second electrode plate b and the first electrode plate a. Moreover, the second separators d of multiple electrode assemblies 200 can be connected during the conveying process, thereby improving the stability of the conveying and reducing the offset of the electrode assembly 200 in the production process. In addition, the continuous unwinding of the second separator d can omit the continuous unwinding of the first separator c. Only by unwinding the second separator d, it is possible to exceed beyond the head and tail of the electrode plate and connect the multiple electrode assemblies 200, which is beneficial to saving materials and has better economy.

Exemplarily, in conjunction with FIG. 17, the first combining mechanism 31 is a composite mechanism, and is configured to fixedly connect both the first electrode plate a and the second electrode plate b in the first composite plate e with the first separator c. Therefore, the offset of the first electrode plate a relative to the first separator c, the offset of the second electrode plate b relative to the first separator c, and the offset of the first electrode plate a relative to the second electrode plate b in the winding and use processes can be reduced, which is beneficial to improving the accuracy of the relative position between the materials, thereby improving the product quality. The method of fixed connection is not limited. For example, connection may be achieved by cold pressing, hot pressing, gluing, etc. Furthermore, the position of the fixed connection is not limited and may be the entire surface or a part thereof, such as a part in the center or a part at the edge.

Exemplarily, when the first combining mechanism 31 is a composite mechanism, the first combining mechanism 31 may press the first electrode plate a and the second electrode plate b onto the first separator c by pressure, or may bond the first electrode plate a and the second electrode plate b to the first separator c by gluing or other methods. For example, the first combining mechanism 31 may include two rollers disposed opposite to each other and spaced apart from each other, or may include one roller and a support disposed opposite to the roller and spaced apart from the roller, or may include a plurality of rollers or other structures. The roller in the first combining mechanism 31 may be of a rotatable structure, or a fixed structure, and may further be floatable. The roller in the first combining mechanism 31 may also be an active roller or a passive roller.

Exemplarily, in conjunction with FIG. 17, when the first combining mechanism 31 is the composite mechanism, the first combining mechanism 31 is configured to composite the first electrode plate a, the first separator c and the second electrode plate b to form the first composite plate e, wherein the first separator c is located between the second electrode plate b and the first electrode plate a. The first combining mechanism 31 is disposed downstream of the first feeding mechanism 11, the third feeding mechanism 21 and the second feeding mechanism 12, so that the first electrode plate a, the first separator c and the second electrode plate b can be conveyed to the first combining mechanism 31 for compositing to form the first composite plate e. The first combining mechanism 31 can composite the first electrode plate a with one side of the first separator c facing away from the second electrode plate b, and composite the second electrode plate b with one side of the first separator c facing away from the first electrode plate a. The first separator c is located between the second electrode plate b and the first electrode plate a. That is, the first electrode plate a, the first separator c and the second electrode plate b are connected together. This enables the relative position of the first electrode plate a, the first separator c, the second electrode plate b be fixed, and the first electrode plate a, the first separator c, the second electrode plate b can be conveyed synchronously without being prone to offset, which is beneficial to improving the position accuracy of the first electrode plate a and the second electrode plate b during the production process.

For example, in conjunction with FIG. 17, when the first combining mechanism 31 is the composite mechanism, the first electrode plate a, the first separator c, the second electrode plate b can be connected by heating, pressurizing, etc., and the viscosity of the first separator c can further be improved by adopting a first separator c with a higher content (for example, a content of 1 mg, 1.5 mg, or 2 mg) of polyvinylidene fluoride (PVDF). For example, the content of the PVDF in the first separator c is higher than the content of the PVDF in the second separator d, so as to improve the connection tightness between the first separator c and the first electrode plate a as well as the second electrode plate b respectively, and reduce the offset of the first electrode plate a relative to the first separator c and the offset of the second electrode plate b relative to the first separator c during conveying, winding and use, which is beneficial to improving the accuracy of the relative position between the materials.

For example, in conjunction with FIG. 17, when the first combining mechanism 31 is the composite mechanism, the first combining mechanism 31 may include two composite rollers disposed opposite to each other. The two composite rollers can heat the first electrode plate a, the first separator c and the second electrode plate b and apply a predetermined pressure in the thickness direction F1 to bond the first electrode plate a, the first separator c and the second electrode plate b together, thereby realizing a composite connection between the first electrode plate a, the first separator c and the second electrode plate b.

Exemplarily, in conjunction with FIG. 18, when the first combining mechanism 31 is the composite mechanism, the first combining mechanism 31 includes two composite rollers disposed opposite to each other. When the first electrode plate a, the first separator c and the second electrode plate b are conveyed between the two composite rollers, the two composite rollers press the first electrode plate a, the first separator c and the second electrode plate b. That is, the two composite rollers cooperate with each other to apply a certain pressure to the first electrode plate a, the first separator c and the second electrode plate b, so that the first electrode plate a, the first separator c and the second electrode plate b are composited to form the first composite plate e. Both sides of the first separator c are sticky. The first electrode plate a and the second electrode plate b are fixed together by an adhesive on the first separator c, so that the first electrode plate a, the first separator c and the second electrode plate b are bonded in sequence, and the relative position of the first electrode plate a, the first separator c and the second electrode plate b are fixed and is not prone to moving relative to each other.

Exemplarily, in conjunction with FIG. 17, when the first combining mechanism 31 is the composite mechanism, the first detection apparatus 71 is disposed downstream of the first combining mechanism 31, and the first detection apparatus 71 may be configured to detect the composite state of the first composite plate e. That is, when the first combining mechanism 31 is the composite mechanism, the first detection apparatus 71 is disposed downstream of the first combining mechanism 31, so that the first electrode plate a, the first separator c and the second electrode plate b can be conveyed to the first detection apparatus 71 after being composited to form the first composite plate e, and thus the composite state can be detected by the first detection apparatus 71. For example, composite defects such as folded corners, damage, crushing, and wrinkling of the electrode plate and the separator are detected.

For example, in conjunction with FIG. 17, the first detection apparatus 71 may be a photoelectric sensor, an X-ray camera, a charge coupled device (CCD) visual sensor, etc., and the types of different detection apparatuses can be the same or different. For example, the detection apparatus may include a CCD. The CCD can acquire an optical image of the material to achieve detection. Furthermore, the CCD can also convert the optical image into a digital signal, so that the optical image is analyzed, processed and stored. For example, the detection apparatus may include an X-ray camera. The X-ray camera has high resolution and can penetrate objects for detection, thereby improving the detection precision.

In addition, in conjunction with FIG. 17, the first detection apparatus 71 may be disposed on one side or both sides of the material thickness direction F1 according to actual needs. For example, the first detection apparatuses 71 are disposed on both sides of the first composite plate e in the thickness direction F1 to detect the relative position of the first electrode plate a and the second electrode plate b, and detect information such as defects of the second electrode plate b and the first electrode plate a. The first detection apparatus 71 may detect multiple parts in the material length direction F3 in sequence during the movement of the material, or may perform continuous detection in the material length direction F3.

Of course, the present application is not limited to this. In other embodiments of the present application, the first combining mechanism 31 is not limited to being the composite mechanism. For example, the first combining mechanism 31 may also be a mechanism for making the first electrode plate a, the second electrode plate b and the first separator c in the first composite plate e only stacked together without being connected.

In some embodiments, in conjunction with FIG. 17, since the first separator c needs to be disposed between the first electrode plate a and the second electrode plate b, the third feeding mechanism 21 may be spatially located between the first feeding mechanism 11 and the second feeding mechanism 12, so that the spatial layout of the first combining mechanism 31 is more rational. It can be understood that the feeding mechanisms and the combining mechanisms can be flexibly disposed and are not limited to the above-mentioned arrangement. Exemplarily, in a height direction of the winding device 100, the first feeding mechanism 11, the third feeding mechanism 21, and the second feeding mechanism 12 are disposed in sequence from top to bottom, so that the first electrode plate a, the first separator c, and the second electrode plate b are stacked from top to bottom.

In conjunction with FIG. 17, when the first composite plate e does not include the second separator d, in some embodiments, the winding device 100 may further includes a sixth combining mechanism 36. The sixth combining mechanism 36 is located between the first combining mechanism 31 and the winding mechanism 40, the fourth feeding mechanism 22 is located upstream of the sixth combining mechanism 36, and the sixth combining mechanism 36 is configured to combine the first composite plate e and the second separator d into a sixth composite plate k.

It is worth noting that "the sixth combining mechanism 36 being located between the first combining mechanism 31 and the winding mechanism 40" is not a limitation on a spatial position (that is, in space, the relative positions of the sixth combining mechanism 36, the first combining mechanism 31, and the winding mechanism 40 are not limited), but a limitation on the order of workstations. That is, the first composite plate e formed by the combining of the first combining mechanism 31 needs to be first delivered to the sixth combining mechanism 36 to participate in combining before entering the winding mechanism 40.

The fourth feeding mechanism 22 is disposed upstream of the sixth combining mechanism 36, so that the second separator d released by the fourth feeding mechanism 22 can be delivered to the sixth combining mechanism 36, and thus the second separator d may serve as the incoming material of the sixth combining mechanism 36. Thus, the sixth combining mechanism can combine the first composite plate e delivered by the first combining mechanism 31 and the second separator d delivered by the fourth feeding mechanism 22 into the sixth composite plate k.

Therefore, by disposing the sixth combining mechanism 36 downstream of the first combining mechanism 31, the second separator d provided by the sixth combining mechanism 36 can be first combined with the first composite plate e and then fed into the winding mechanism 40 together, so that the relative position of the second separator d and the sixth composite plate k is more reliable and not prone to moving, which is beneficial to improving the reliability of insulating the first electrode plate a from the second electrode plate b by the second separator d in the electrode assembly 200 after winding. Furthermore, by disposing the sixth combining mechanism 36 and the winding mechanism 40 in a spacing mode, a problem of crowded space around (such as the upper portion) the winding mechanism 40 can be avoided. In addition, the winding device 100 separates unwinding mechanisms from the winding mechanism 40, making the layout flexible and convenient.

When the winding device 100 includes the sixth combining mechanism 36, in some embodiments, in conjunction with FIG. 17, the sixth combining mechanism 36 is an edge sealing mechanism, and is configured to seal and connect two side edges of the first separator c and the second separator d in a width direction.

In conjunction with FIG. 17, when the sixth combining mechanism 36 is the edge sealing mechanism, the sixth combining mechanism 36 is disposed downstream of the first combining mechanism 31 and the fourth feeding mechanism 22, and is configured to seal and connect the second separator with the edge of the first separator c of the first composite plate e to obtain the sixth composite plate k. For example, the second separator d and the first separator c in the first composite plate e may be connected by heating, pressurizing, gluing, etc. The winding mechanism 40 is disposed downstream of the sixth combining mechanism 36 and is configured to wind the sixth composite plate k. This is beneficial to reducing the risk of short circuit caused by overlapping of the second electrode plate b and the first electrode plate a, and reducing the risk of corrosion and liquid leakage caused by overlapping of the second electrode plate b and the shell 3011 of the battery cell 301.

In some embodiments, in conjunction with FIG. 17, when the sixth combining mechanism 36 is the edge sealing mechanism, the sixth combining mechanism 36 includes four edge sealing rollers disposed in two opposing pairs. The four edge sealing rollers can heat four side edges of the separator and apply a predetermined pressure in the thickness direction F1 to achieve edge sealing and connection of the two layers of separators.

When performing edge sealing and connection, in conjunction with FIG. 17, when the sixth combining mechanism 36 is the edge sealing mechanism, the portion where the two layers of separators are connected is the sealed edge. According to actual needs, the sealed edges of the two sides of the two layers of separators in the width direction F2 may extend continuously or discontinuously in the material conveying direction, which falls within the protection scope of the present application.

In some related arts, the electrode plate and the separator are tightly bonded by a bonding roller before winding. Here, no connection is formed between the materials and the membranes, but only a bonding contact relationship. After the external force is removed, the electrode plate and the separator are prone to separating from each other, and there is a risk of overlapping of the anode electrode plate and the cathode electrode plate.

In some embodiments of the present application, in conjunction with FIG. 17, when the first combining mechanism 31 is the composite mechanism and the sixth combining mechanism 36 is the edge sealing mechanism, the first combining mechanism 31 is used to composite the first electrode plate a, the first separator c and the second electrode plate b to form a tightly connected first composite plate e, and the sixth combining mechanism 36 is used to connect the edges of the first separator c and the second separator d together to achieve edge sealing. Even if the external force is removed, the first electrode plate a, the first separator c and the second electrode plate b are not prone to separating, and the first separator c and the second separator d will not separate to expose the second electrode plate b. The separator is not prone to folding during the winding process of the electrode assembly 200, and is not prone to being disturbed by holes in a solution injection process, so that the risk of overlapping of the second electrode plate b with the first electrode plate a and overlapping of the second electrode plate b with a shell 3011 of a battery cell 301 is effectively reduced, thereby mitigating a lithium plating problem.

In addition, when the sixth combining mechanism 36 is the edge sealing mechanism, the detection of the first composite plate e by the first detection apparatus 71 is helpful to ensure that the first separator c has sufficient edge to be subjected to edge sealing with the second separator d, thereby improving the edge sealing quality.

Of course, the present application is not limited to this. The sixth combining mechanism 36 may not be the edge sealing mechanism. For example, in conjunction with FIG. 18, the sixth combining mechanism 36 may also be just a conveying roller. The fourth feeding mechanism 22 is configured to unwind the second separator d, and the sixth combining mechanism 36 is configured to allow the second separator d to be converged with the first composite plate e to form a laminated plate body, and the laminated plate body is conveyed to the winding mechanism 40. The sixth combining mechanism 36 is configured to allow the first composite plate e to be converged with the second separator d, so that the first composite plate e and the second separator d can be stacked and formed into a laminated plate body, and then the laminated plate body is conveyed to the winding mechanism 40 for winding. Thereby, the mechanism can be simplified.

In conjunction with FIG. 17 and FIG. 18, when the winding device 100 includes the sixth combining mechanism 36, in some embodiments, the winding device 100 further includes: a sixth detection apparatus 76, and the sixth detection apparatus 76 is located between the sixth combining mechanism 36 and the winding mechanism 40 and is configured to detect the sixth composite plate k.

It is worth noting that "the sixth detection apparatus 76 being located between the sixth combining mechanism 36 and the winding mechanism 40" is not a limitation on a spatial position (that is, in space, the relative positions of the sixth detection apparatus 76, the sixth combining mechanism 36, and the winding mechanism 40 are not limited), but a limitation on the order of workstations. That is, the sixth composite plate k formed by the combining of the sixth combining mechanism 36 can first be detected by the sixth detection apparatus 76 before entering the winding mechanism 40.

For example, the sixth detection apparatus 76 may include a camera, a machine vision detection device or other structures. The camera may be a CCD camera. The sixth detection apparatus 76 may further include other elements such as a controller. The sixth detection apparatus 76 can acquire image information (such as a position, a color, and a shape) of the sixth composite plate k, can convert the image information into a digital signal and send the digital signal to the controller, so that the controller judges whether the sixth composite plate k meet the requirements according to a preset program, for example, the controller judges whether the second separator d is deviated, and whether the second separator d can cover the first electrode plate a and the second electrode plate b. By using the above technical solution, the sixth detection apparatus 76 is disposed between the sixth combining mechanism 36 and the winding mechanism 40, and can comprehensively detect a state of the sixth composite plate k, and the detection result can have a high accuracy.

The sixth detection apparatus 76 may include a single-scanline camera or an area-array camera, wherein the image acquisition range of the single-scanline camera is larger. For example, one single-scanline camera may be centered on both sides of the material thickness direction F1. The image acquisition range of the area-array camera is smaller. For example, one area-array camera may be disposed at both ends of the electrode plate on one side of the material thickness direction F1.

Exemplarily, the sixth detection apparatus 76 may be configured to detect the relative position of the second separator d and the second electrode plate b, such as detecting the OH of the second separator d covering the second electrode plate b, namely, the size of the edge of the second separator d exceeds the edge of the first electrode plate a in the width direction F2 and the length direction F3. The defective OH means that the size of the overhang does not meet the required size range. In addition, in some embodiments, the sixth detection apparatus 76 may further be configured to detect the relative position of the first electrode plate a and the second electrode plate b, the relative position of the first separator c and the first electrode plate a, etc.

As shown in FIG. 17, exemplarily, when the sixth combining mechanism 36 is the edge sealing mechanism, the sixth detection apparatus 76 may be configured to detect the edge sealing state of the sixth composite plate k. For example, edge sealing defects such as corner folding of the electrode plate, wrinkles at the head and tail, and separator misalignment can be detected. For example, the relative position of the sealed edge formed by the first separator c and the second separator d and the second electrode plate b may be detected, so that the separator and the sixth combining mechanism 36 are adjusted according to the detection result, and thus the width and position of the formed sealed edge meet the requirements of the separator wrapping the second electrode plate b, thereby improving the reliability of the sealed edge and enabling the separator to reliably limit and protect the second electrode plate b. Therefore, by using the sixth detection apparatus 76 to detect the edge sealing state after the first electrode plate a, the first separator c, the second electrode plate b and the second separator d are stacked and the separator is subjected to edge sealing to form the electrode assembly 200, more comprehensive detection can be achieved, the reliability of the edge sealing and connection can be improved, and the risk of missed detection of the defects during the production process of the electrode assembly 200 can be reduced. The position accuracy of the first electrode plate a, the first separator c, the second electrode plate b and the second separator d is improved.

In some embodiments, in conjunction with FIG. 17, when the winding device 100 includes the sixth combining mechanism 36, the third cut-off mechanism 63may be disposed between the sixth combining mechanism 36 and the winding mechanism 40. That is, the third cut-off mechanism 63 cuts off the first separator c and the second separator d after the sixth combining mechanism 36 combines the first composite plate e and the second separator d into the sixth composite plate k. Therefore, a length of the separator can be made longer than a length of the electrode plate relatively easily, thereby meeting the design requirements of the electrode assembly 200, and only one third cut-off mechanism 63 needs to be disposed, which can simplify the device, reduce costs and save space. Furthermore, the winding device 100 can cut off the separator before or after the sixth composite plate k is wound, without wasting separate time on cut-off of the separator, thereby improving the overall winding efficiency.

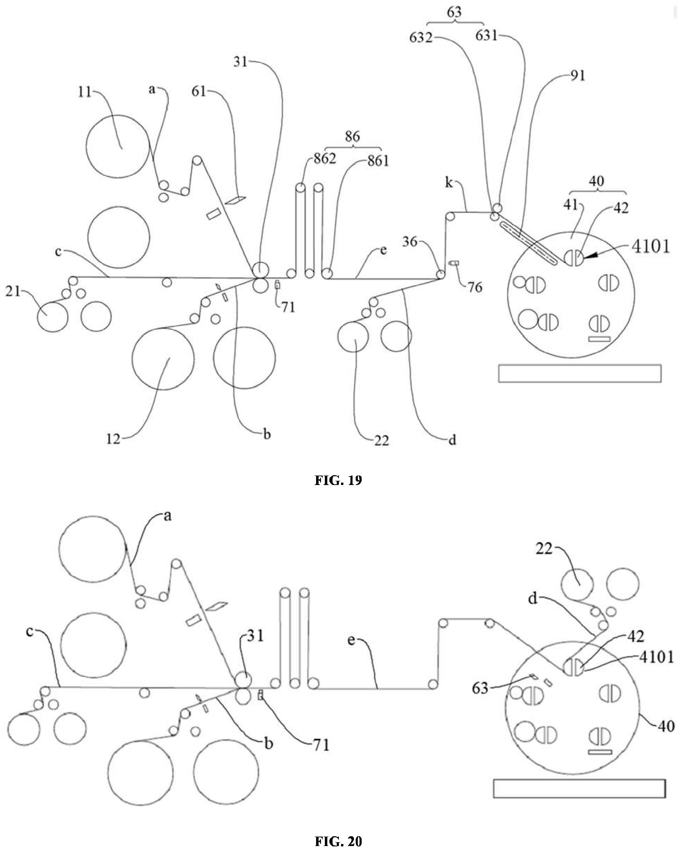

In conjunction with FIG. 19, when the third cut-off mechanism 63 is disposed between the sixth combining mechanism 36 and the winding mechanism 40, the winding device 100 further includes a first transmission member 91 disposed between the third cut-off mechanism 63 and the winding mechanism 40, and the first transmission member 91 is configured to convey the sixth composite plate k to the winding mechanism 40.

In conjunction with FIG. 19, the sixth combining mechanism 36 is configured to allow the second separator d to be converged with the first composite plate e to form the sixth composite plate k. The third cut-off mechanism 63 is located upstream of the winding mechanism 40. The third cut-off mechanism 63 can cut off the first separator c and the second separator d before the sixth composite plate k is fed. The third cut-off mechanism 63 may include a variety of cut-off structures, such as a linear cutter that reciprocates along a straight line, a cam cutter 81 that rotates around an axis, and a laser cutting structure. The first transmission member 91 delivers the sixth composite plate k from the third cut-off mechanism 63 to the winding needle 42. The first transmission member 91 may include various delivery structures, such as a clamping jaw, and a conveying belt.

In conjunction with FIG. 19, after the current winding needle 42 winds the electrode assembly 200, the third cut-off mechanism 63 cuts off the first separator c and the second separator d, and the first transmission member 91 delivers the head end of the next electrode assembly 200 to the empty winding needle 42, so that the winding needle 42 can wind the next electrode assembly 200.

In conjunction with FIG. 19, the third cut-off mechanism 63 provided in the embodiment of the present application is disposed on a feed side of the winding mechanism 40, and uses the first transmission member 91 to deliver the separator or the plate body to the winding mechanism 40, so that the winding mechanism 40 winds the electrode assembly 200. By adopting the above technical solution, the third cut-off mechanism 63 does not need to avoid the winding needle 42, which is conducive to simplifying the structure of the device. The winding device 100 can convey the membrane while cutting off the membrane, which significantly improves the winding efficiency compared to the method of cutting off the membrane first and then conveying the membrane.

In conjunction with FIG. 18, in other embodiments, the first transmission member 91 may be omitted. For example, the third cut-off mechanism 63 is adjacent to a winding workstation 4101, and the cut-off membrane can be directly fixed and wound by the winding needle 42.

In conjunction with FIG. 19, in some embodiments, the first transmission member 91 is a vacuum adsorption transmission belt.

The vacuum adsorption transmission belt refers to a transmission belt with a function of vacuum adsorption of the membrane. The vacuum adsorption transmission belt is connected to a vacuum pumping apparatus. A surface of the transmission belt is provided with vacuum adsorption holes. Under the suction action of the vacuum pumping apparatus, the vacuum adsorption holes adsorb the membrane to prevent the membrane from warping or shifting during the transmission process. In addition to absorbing the membrane, the vacuum adsorption transmission belt can also absorb impurities such as debris and dust, thereby reducing the negative impact that the impurities may have on the membrane and the processing environment.

During operation, after the third cut-off mechanism 63 cuts off the membrane, the first transmission member 91 conveys the separator at the head of the electrode assembly 200 to the winding needle 42. For example, the head of the separator falls vertically and enters an accommodating gap. The winding needle 42 can clamp the separator at the head through the accommodating gap and then start winding. The first transmission member 91 can further convey the separator at the tail of the electrode assembly 200 to the winding needle 42, and then the separator may be finished by a finishing roller.

The first transmission member 91 of the embodiment of the present application is the vacuum adsorption transmission belt, which can improve the stability of delivering the membrane and reduce the probability of the membrane being warped or deviated during the transmission process.

In some embodiments, in conjunction with FIG. 19, a conveying speed of the vacuum adsorption transmission belt is equal to a winding speed of the winding needle 42 at the winding workstation 4101. The winding speed of the winding needle 42 refers to the winding speed of the electrode assembly 200 wound by the winding needle 42 at the winding workstation 4101. That is, a ratio of the length of the electrode assembly 200 to the time used for winding indicates a length of the membrane wound by the winding needle 42 per unit time. The conveying speed of the vacuum adsorption transmission belt is the length of the membrane conveyed per unit time. By setting the conveying speed of the vacuum adsorption transmission belt equal to the winding speed of the winding needle 42, the tension of the separator can be made zero, reducing the probability of separator deformation due to excessive tension. In addition, the vacuum adsorption transmission belt has a higher transmission speed and high transmission efficiency. It is understandable that the conveying speed of the vacuum adsorption transmission belt and the winding speed of the winding needle 42 may also be different, as long as the two are adapted to keep the tension of the membrane within a certain range.

In conjunction with FIG. 17 and FIG. 18, in some embodiments, when the first composite plate e does not include the second separator d, the winding device 100 further includes a sixth temporary storage mechanism 86, and the sixth temporary storage mechanism 86 is disposed between the first combining mechanism 31 and the winding mechanism 40 and configured to temporarily store the first composite plate e.

In conjunction with FIG. 17 and FIG. 18, the sixth temporary storage mechanism 86 refers to a structure in the winding device 100 for temporarily storing the first composite plate e. The sixth temporary storage mechanism 86 can also release the temporarily stored first composite plate e. The sixth temporary storage mechanism 86 is disposed between the first combining mechanism 31 and the winding mechanism 40 for the first composite plate e to be wound.

By adopting the above technical solution, the sixth temporary storage mechanism 86 can temporarily store and release the first composite plate e, so that the winding mechanism 40 can continuously obtain material supply, thereby improving the winding efficiency. For example, the sixth temporary storage mechanism 86 may temporarily store the first composite plate e located between the first combining mechanism 31 and the winding mechanism 40. When there is a speed difference before and after the sixth temporary storage mechanism 86, the sixth temporary storage mechanism 86 can temporarily store and release part of the first composite plate e in time, thereby solving a speed reduction problem or a wrinkle problem caused by insufficient tension, and improving the production capacity and the product quality.

Exemplarily, in conjunction with FIG. 17 and FIG. 18, the sixth temporary storage mechanism 86 may include one or more rollers, and the first composite plate e may enter the winding mechanism 40 after bypassing the one or more rollers of the sixth temporary storage mechanism 86. A length of the first composite plate e temporarily stored in the sixth temporary storage mechanism 86 can be flexibly adjusted. Exemplarily, the sixth temporary storage mechanism 86 may store the first composite plate e by winding, stacking, or the like.

Exemplarily, in conjunction with FIG. 18, the sixth temporary storage mechanism 86 includes a sixth fixed roller 861 and a sixth floating roller 862 which are disposed at intervals, the sixth fixed roller 861 is fixedly disposed relative to the first combining mechanism 31, and the sixth floating roller 862 can approach or move away from the sixth fixed roller 861 to change the length of the first composite plate e temporarily stored by the sixth temporary storage mechanism 86, wherein a movement direction of the sixth floating roller 862 intersects with a conveying direction of the first combining mechanism 31.

The sixth fixed roller 861 refers to a roller fixedly disposed relative to the first combining mechanism 31 in the sixth temporary storage mechanism 86, that is, the position of the first fixed roller 861 is also fixed relative to a rack. The sixth fixed roller 861 may be a cylindrical roller, or a prismatic roller or a roller in other shapes. The sixth fixed roller 861 may be made of plastic, metal or other materials. The sixth fixed roller 861 may rotate relative to the rack or may be fixed relative to the rack. The first fixed roller 861 may be a passive roller and rotates with the movement of the first composite plate e, and the first fixed roller 861 may also be an active roller and rotates by being driven by a driving device such as a motor.

The sixth floating roller 862 refers to a roller in the first temporary storage mechanism 86 that can move relative to the sixth fixed roller 861, that is, the position of the movable roller can be changed on the rack. The sixth floating roller 862 may be a cylindrical roller, or a prismatic roller or a roller in other shapes. The sixth floating roller 862 may be made of plastic, metal or other materials. The sixth floating roller 862 may rotate relative to the rack or may be fixed relative to the rack. The sixth floating roller 862 may be a passive roller and rotates with the movement of the electrode plate and the separator, and the sixth floating roller 862 may also be an active roller and rotates by being driven by a driving device such as a motor.

The sixth floating roller 862 can move in directions close to and away from the sixth fixed roller 861. When the sixth floating roller 862 moves in the direction away from the sixth fixed roller 861, the length of the first composite plate e stored in the sixth temporary storage mechanism 86 increases. When the sixth floating roller 862 moves in the direction close to the sixth fixed roller 861, the length of the first composite plate e stored in the sixth temporary storage mechanism 86 decreases, thereby releasing part of the first composite plate e.

The floating of the sixth floating roller 862 may be passively floating or actively floating. In some embodiments, the floating of the sixth floating roller 862 is achieved by elastic parts such as a spring and a rubber strip. In this case, the sixth floating roller 862 is passively floating. In some other embodiments, the floating of the sixth floating roller 862 is achieved by active power devices such as an air cylinder and a hydraulic cylinder. In this case, the sixth floating roller 862 is actively floating.

The number of the sixth fixed rollers 861 may be one, or two or more; and the number of the floating rollers may be one, or two or more. When the number of both the sixth fixed rollers 861 and the sixth floating rollers 862 is two or more, the sixth fixed rollers 861 and the sixth floating rollers 862 may be alternately disposed along a delivery path of the first composite plate e in sequence.

The present embodiment provides some specific structures of the sixth temporary storage mechanism 86, which realizes the temporarily storing and releasing effect of the first composite plate e through the movement of the sixth floating roller 862. The sixth temporary storage mechanism 86 can adjust the length of the temporarily stored first composite plate e to adapt to the winding speed of the winding mechanism 40 and the speed of cutting off the electrode plate.

During the production process, the sixth temporary storage mechanism 86 temporarily stores the materials and can continuously convey the materials downstream, so that the third cut-off mechanism 63 can perform a cut-off operation without deceleration and is not affected by the composite operation upstream of the sixth temporary storage mechanism 86. For example, as shown in FIG. 17, the composite precision requirement is relatively high, resulting in a slow operating speed. The sixth temporary storage mechanism 86 is configured to temporarily store the first composite plate e after the first electrode plate a, the first separator c and the second electrode plate b are composited. The third cut-off mechanism 63 is configured to cut the second separator d connected between the adjacent electrode assemblies 200, which has the low precision requirement and the high operating rate. Through the temporary storage of the sixth temporary storage mechanism 86, in a process of reducing the composite speed of the first combining mechanism 31, the sixth temporary storage mechanism 86 can stably and continuously convey the first composite plate e to the sixth combining mechanism 36 without reducing the edge sealing rate, and then the third cut-off mechanism 63 can cut off the strip-shaped electrode assembly 200 without deceleration, thereby improving the winding efficiency and thus improving the overall production capacity.

In some embodiments, in conjunction with FIG. 18, when the winding device 100 includes the sixth temporary storage mechanism 86, the first cut-off mechanism 61 may be disposed between the first feeding mechanism 11 and the first combining mechanism 31, and the second cut-off mechanism 62 may be disposed between the second feeding mechanism 12 and the first combining mechanism 31.

In this way, when the first electrode plate a and the second electrode plate b are cut off in advance before the first combining mechanism 31, the sixth temporary storage mechanism 86 can temporarily store and release the first composite plate e, thereby ensuring that winding of electrode plate by the winding mechanism 40 is not affected when the electrode plate is cut off, thereby significantly improving the winding efficiency. Moreover, both the first cut-off mechanism 61 and the second cut-off mechanism 62 can be disposed spatially away from the winding mechanism 40, so as to alleviate the adverse effect on the quality of the electrode assembly 200 caused by chips formed by cutting falling into the electrode assembly 200 wound on the winding needle 42, thereby helping to further improve the quality of the electrode assembly 200.

In some embodiments, in conjunction with FIG. 18, when the first composite plate e does not include the second separator d, for example, in some embodiments, in conjunction with FIG. 20, the first electrode plate a, the first separator c, and the second electrode plate b can be separately fed into the first combining mechanism 31. That is, before feeding into the first combining mechanism 31, the first separator c is not pre-stacked with either the first electrode plate a or the second electrode plate b, thereby simplifying the mechanism, eliminating the need for disposing a combining mechanism upstream of the first combining mechanism 31, and saving space occupation.

When the winding device 100 includes the sixth temporary storage mechanism 86, the first detection apparatus 71 may be located between the first combining mechanism 31 and the sixth temporary storage mechanism 86, and the first detection apparatus 71 may further be located between the sixth temporary storage mechanism 86 and the sixth combining mechanism 36. When the first detection apparatus 71 is disposed between the sixth temporary storage mechanism 86 and the sixth combining mechanism 36, the defects generated by the first composite plate e during the combining process and the temporary storage process can be detected by the first detection apparatus 71, which is beneficial to improving the quality of the electrode assembly 200 used in production.

Of course, when the first composite plate e does not include the second separator d, the first electrode plate a, the first separator c and the second electrode plate b may not be fed separately into the first combining mechanism 31. For example, a seventh combining mechanism may also be disposed upstream of the first combining mechanism 31 to preferentially combine the first electrode plate a and the first separator c. Alternatively, an eighth combining mechanism may be disposed upstream of the first combining mechanism 31 to preferentially combine the first separator c and the second electrode plate b, which will not be repeated here.

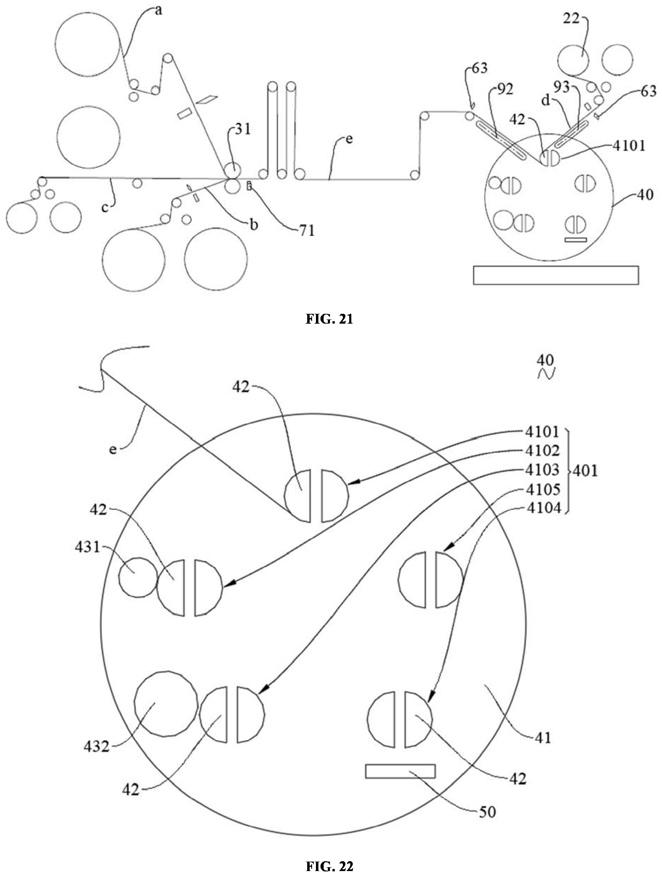

The winding device 100 may also not include the sixth combining mechanism 36. For example, in conjunction with FIG. 20 and FIG. 21, in some embodiments, the fourth feeding mechanism 22 and the first composite plate e are combined at the winding mechanism 40. At this time, the fourth feeding mechanism 22 is not disposed downstream of the first combining mechanism 31, but is disposed on one side of the winding mechanism 40.

In conjunction with FIG. 20 and 21, the fourth feeding mechanism 22 is disposed on one side of the winding mechanism 40, the fourth feeding mechanism 22 is configured to convey the second separator d to the winding needle 42 located at the winding workstation 4101, and the first composite plate e and the second separator d are converged on the winding needle 42 of the winding workstation 301.

In this way, in conjunction with FIG. 20 and FIG. 21, the fourth feeding mechanism 22 directly conveys the second separator d to the winding mechanism 40, so that the first composite plate e conveyed by the first combining mechanism 31 and the second separator d conveyed by the fourth feeding mechanism 22 are wound together. In this way, the fourth feeding mechanism 22 can directly convey the second separator d to the winding device 100, and the winding needle 42 located at the winding workstation 4101 can wind the first composite plate e and the second separator d together to form the electrode assembly 200. Therefore, the mechanism can be simplified, and the need to dispose a combining mechanism downstream of the first combining mechanism 31 is eliminated, thereby saving space occupation.

In conjunction with FIG. 21, two third cut-off mechanisms 63 may be provided. One third cut-off mechanism 63 is disposed between the first combining mechanism 31 and the winding mechanism 40 and is configured to cut off the first separator c, and the other third cut-off mechanism 63 is disposed between the fourth feeding mechanism 22 and the winding mechanism 40 and is configured to cut off the second separator d. In conjunction with FIG. 21, the winding device 100 may further include a second transmission member 92 and a third transmission member 93. The second transmission member 92 and the third transmission member 93 are respectively and correspondingly disposed between the two third cut-off mechanisms 63 and the winding mechanism 40. The second transmission member 92 is configured to deliver the first composite plate e, and the third transmission member 93 is configured to deliver the second separator d. The third cut-off mechanism 63 may include a cam cutter, and may further include a cutter that reciprocates along a straight line, a laser cutter, or the like. By adopting the above technical solution, the first separator c and the second separator d are cut off before being wound, the third cut-off mechanism 63 does not occupy the space of the winding mechanism 40, and there is no need to avoid the winding needle 42 rotating with the turret 41.

The winding device 100 according to some specific embodiments of the present application is described below with reference to FIG. 4.

Referring to FIG. 4, the winding device 100 mainly includes a feeding mechanism, a cut-off mechanism, a combining mechanism, a detection assembly, a temporary storage mechanism, a winding mechanism, and the like.

Referring to FIG. 4, the feeding mechanism includes an electrode plate feeding mechanism and a separator feeding mechanism. The electrode plate feeding mechanism includes a first feeding mechanism 11 (which may be an electrode plate roller, for example) and a second feeding mechanism 12 (which may be an electrode plate roller, for example). The separator feeding mechanism includes a third feeding mechanism 21 (which may be a separator roller, for example) and a fourth feeding mechanism 22 (which may be a separator roller, for example).

The first feeding mechanism 11 is configured to wind the first electrode plate a and release the first electrode plate a; the second feeding mechanism 12 is configured to wind the second electrode plate b and release the second electrode plate b; the third feeding mechanism 21 is configured to wind the first separator c and release the first separator c; and the fourth feeding mechanism 22 is configured to wind the second separator d and release the second separator d.

Referring to FIG. 4, the combining mechanism may include a first combining mechanism 31 and a second combining mechanism 32, the winding mechanism 40 may include a turret 41 and five winding needles 42 disposed on the turret 41, and the winding needles 42 are configured to wind the stacked electrode plates and separators. The winding mechanism 40 further includes a finishing assembly 43, the finishing assembly 43 includes a finishing roller 431 and a taping roller 432, and an unloading mechanism 50 is further disposed next to the turret 41. The unloading mechanism 50 may include a clamping jaw 51 and a platform 52, or may also include a manipulator or other structures. The clamping jaw 51 is configured to remove the wound electrode assembly 200 from the winding needle 42, and the platform 52 is configured to carry and transport the electrode assembly 200 removed by the clamping jaw 51, so as to facilitate subsequent processes to acquire the wound electrode assembly 200 from the platform 52.

Referring to FIG. 4, the finishing roller 431 is used to configured to press the electrode plate and the separator together. The finishing roller 431 refers to a structure in the finishing structure 43 that presses the first composite plate e wound on the winding needle 42. Because the tail end of the electrode plate and the tail end of the separator are prone to separating and curling up after the first composite plate e is wound on the winding needle 42, the main function of the finishing roller 431 is to press the tail end of the first composite plate e to reduce the separation of the electrode plate and the separator at the tail end of the first composite plate e, and increase the stability of the bonding between the electrode plate and the separator in the first composite plate e. The finishing structure 43 in the present embodiment includes the finishing roller 431, so as to press the electrode plate and the separator onto the winding needle 42 through the finishing roller 431, and press the electrode plate and the separator together through the pressure of the finishing roller 431, thereby reducing the occurrence of separation between the electrode plate and the separator.

Referring to FIG. 4, the taping roller 432 is configured to fix the separator to the electrode plate. The taping roller 432 refers to a structure in the finishing structure 43 for taping on the electrode plate. The taping roller 432 can stick adhesive paper, an adhesive tape and other fixing structures on the tail end of the first composite plate e to fix the tail end of the first composite plate e, thereby further reducing the situation where the tail end of the first composite plate e is curled up, and can further reduce the situation where the electrode plate and the separator are separated at the tail end of the first composite plate e. The finishing structure 43 in the present embodiment further includes a taping roller 432. After the finishing roller 431 presses the electrode plate and the separator together, the taping roller 432 is configured for taping at the tail end of the first composite plate e to further fix the electrode plate and the separator and obtain a first composite plate e with a relatively stable connection that is not prone to falling apart, thereby reducing the occurrence of separation between the electrode plate and the separator.

Referring to FIG. 4, the cut-off mechanism includes a first cut-off mechanism 61, a second cut-off mechanism 62, and a third cut-off mechanism 63. The first cut-off mechanism 61 and the second cut-off mechanism 62 are both electrode plate cut-off mechanisms. The first cut-off mechanism 61 refers to a mechanism in the winding device 100 for cutting off the first electrode plate a, and the first cut-off mechanism 61 is disposed between the first feeding mechanism 11 and the first combining mechanism 31. The second cut-off mechanism 62 refers to a mechanism in the winding device 100 for cutting off the second electrode plate b, and the second cut-off mechanism 62 is disposed between the second feeding mechanism 12 and the first combining mechanism 31. The third cut-off mechanism 63 is a separator cut-off mechanism in the winding device 100 for cutting off the separator, and the third cut-off mechanism 63 is disposed upstream of the winding mechanism 40.

The electrode plate cut-off mechanism may include a variety of cut-off mechanisms, such as a linear cutter that reciprocates along a straight line, and a cam cutter that rotates around an axis. The electrode plate cut-off mechanism can choose to use a cut-off mechanism for cutting the cathode electrode plate or a cut-off mechanism for cutting off the anode electrode plate as needed. The separator cut-off mechanism may include a variety of cut-off mechanism, such as a linear cutter that reciprocates along a straight line, and a cam cutter that rotates around an axis.

According to a structure of the electrode assembly 200, the electrode assembly 200 generally includes a first separator c and a second separator d. At this time, the third cut-off mechanism 63 may only include a cut-off mechanism for cutting off the first separator c, or only include a cut-off mechanism for cutting off the second separator d, or may include a cut-off mechanism for cutting off the first separator c and a cut-off mechanism for cutting off the second separator d at the same time, or may be a cut-off mechanism that can cut off the first separator c and the second separator d at the same time. The third cut-off mechanism 63 is disposed upstream of the winding mechanism 40, so that the third cut-off mechanism 63 can cut off the separator before the separator enters the winding mechanism 40. The third cut-off mechanism 63 can be chosen to be disposed downstream of the first combining mechanism 31 or upstream of the first combining mechanism 31 as needed.

Referring to FIG. 4, the electrode plate cut-off mechanism is located upstream of the first combining mechanism 31, and the separator cut-off mechanism is disposed between the first combining mechanism 31 and the winding mechanism 40. The electrode plate cut-off mechanism can cut off the electrode plate before the electrode plate and the separator are combined, and the separator cut-off mechanism can cut off the separator after the electrode plate and the separator are combined. This setting can more easily make the length of the separator greater than the length of the electrode plate, thereby meeting the design requirements of the electrode assembly 200.

Referring to FIG. 4, the first cut-off mechanism 61 includes a first cutter 611 and a first abutting member 612 that are disposed opposite to each other and spaced apart from each other. The second cut-off mechanism 62 includes a second cam cutter 621 and a second abutting member 622 that are disposed opposite to each other. The third cut-off mechanism 63 include a second cam cutter 631 and a third abutting member 632 that are disposed opposite to each other and spaced apart from each other.

Referring to FIG. 4, the first electrode plate a and the first separator c wound on the first feeding mechanism 11 and the third feeding mechanism 21 are combined at the second combining mechanism 32 to form a second composite plate f. The first combining mechanism 31 is configured to combine the second composite plate f, the second separator d, and the second electrode plate b into the first composite plate e. After the first electrode plate a and the first separator c are composited by the second combining mechanism 32, the first electrode plate a and the first separator c are combined with the second electrode plate b and the second separator d at the first combining mechanism 31 through the first temporary storage mechanism 81 to form the first composite plate e. In the first composite plate e, the first electrode plate a, the first separator c, the second electrode plate b, and the second separator d are stacked in sequence. The second cam cutter 631 disposed between the first combining mechanism 31 and the winding mechanism 40 cooperates with the third abutting member 632 to cut off the first separator c and the second separator d in the first composite plate e to form a separate and complete first composite plate e.

Referring to FIG. 4, the first composite plate e cut off by the second cam cutter 631 and the third abutting member 632 is wound by the winding needle 42. When the winding needle 42 finishes winding, the winding needle 42 passes through the finishing roller 431, the taping roller 432, the unloading mechanism 50 and an empty position in sequence. The unloading mechanism 50 removes the electrode assembly 200 on the winding needle 42 and forms an empty winding needle 42. The empty winding needle 42 may move through the empty position to the winding workstation 4101 to wind the first composite plate e again.

Referring to FIG. 4, the detection assembly is disposed upstream of the winding mechanism 40. The detection assembly includes a first detection apparatus 71 and a second detection apparatus 72. The first detection apparatus 71 is disposed between the first combining mechanism 31 and the winding mechanism 40, and the second detection apparatus 72 is disposed between the second combining mechanism 32 and the first temporary storage mechanism 81. The detection assembly may include a camera, a machine vision detection device or other structures. The detection assembly may also include other devices such as a control device. The detection assembly can acquire image information (such as a position, a color, and a shape), can convert the image information into a digital signal and send the digital signal to the control device, so that the control device judges whether the electrode plate, the separator, or the composite plate meets the requirements according to a preset program.

Disposing the detection assembly between the combining mechanism and the winding mechanism 40 can more comprehensively detect the state of the entire passed first composite plate e. Because the first composite plate e will enter the winding needle 42 for winding, a head end of the first composite plate e is difficult to detect after entering the winding needle 42, and because the electrode plate and the separator in the combined first composite plate e are relatively stable in position, and are not prone to be displaced or misaligned, the state of the first composite plate e detected by the detection assembly located between the combining mechanism and the winding mechanism 40 has a small difference or is the same as the state of the electrode assembly 200 after winding. The detection result of the detection assembly can have higher accuracy.

Exemplarily, the first electrode plate a is the cathode electrode plate, and the second electrode plate b is the anode electrode plate. In the first composite plate e, the second electrode plate b is stacked between the first separator c and the second separator d. There are detection apparatuses (i.e., the second detection apparatus 72 and the first detection apparatus 71) after the second combining mechanism 32 and after the first combining mechanism 31, so that full OH detection of the electrode plate winding and finishing can be achieved. The problem of missed detection of OH at the head and tail when the anode electrode plate and the cathode electrode plate are respectively wound and detected at the winding needle in the related art is solved.

In some embodiments, referring to FIG. 4, the winding device 100 may further include a transmission member. For example, the transmission member may include a fourth transmission member 94, a fifth transmission member 95, and a sixth transmission member 96. The fourth transmission member 94 is disposed between the first cut-off mechanism 61 and the second combining mechanism 32 and is configured to deliver the first electrode plate a. The fifth transmission member 95 is disposed between the second feeding mechanism 12 and the second cut-off mechanism 62, and the sixth transmission member 96 is disposed between the second cut-off mechanism 62 and the first combining mechanism 31, and is configured to deliver the second electrode plate b. For example, the transmission member may be a vacuum conveyor belt, a reciprocating conveying trolley, an insert feeding mechanism or other structures.

After the first cut-off mechanism 61 cuts off the first electrode plate a, the tail end of the first electrode plate a is difficult to fix. Delivering the cut-off first electrode plate a through the fourth transmission member 94 can fix the first electrode plate a, thereby reducing the movement of the tail end of the first electrode plate a. After the second cut-off mechanism 62 cuts off the second electrode plate b, the tail end of the second electrode plate b is difficult to fix. Delivering the cut-off second electrode plate b through the fifth transmission member 95 and the sixth transmission member 96 can fix the second electrode plate b, thereby reducing the movement of the tail end of the second electrode plate b.

For example, the transmission member is a vacuum adsorption conveyor belt. The principle of the vacuum adsorption conveyor belt is to use vacuum adsorption to adsorb the material on the conveyor belt, and deliver the material to the required position through the conveyor belt. The transmission member is the vacuum adsorption conveyor belt, so that in addition to being able to deliver the first electrode plate a and the second electrode plate b, the transmission member can also adsorb impurities such as metal debris and dust that may be generated in the process of cutting off the first electrode plate a and the second electrode plate b, thereby reducing the possible negative impact on the electrode plate, the separator and the processing environment. In the present embodiment, the second electrode plate b and the first electrode plate a are delivered by the transmission member to increase the stability of delivery and reduce the occurrence of situations such as loss of delivery power after the electrode plate are cut off.

The winding device 100 according to some specific embodiments of the present application is described below with reference to FIG. 5.

Referring to FIG. 5, the winding device 100 includes: a second feeding mechanism 12, a first feeding mechanism 11, a third feeding mechanism 21, a fourth feeding mechanism 22, a first combining mechanism 31, a second combining mechanism 32, a second detection apparatus 72, a first detection apparatus 71, a first temporary storage mechanism 81, a first cut-off mechanism 61, a second cut-off mechanism 62, a third cut-off mechanism 63, a winding mechanism 40, and conveying rollers disposed between the mechanisms. The conveying rollers are configured to convey materials. The first combining mechanism 31 is an edge sealing mechanism, and the second combining mechanism 32 is a composite mechanism.

Referring to FIG. 5, the first combining mechanism 31 is an edge sealing mechanism for edge sealing and connection of two side edges of a first separator c and a second separator d on two sides of a second electrode plate b in a width direction F2 to obtain a first composite plate e. The second combining mechanism 32 is configured to composite the first electrode plate a (e.g, a cathode electrode plate) with the first separator c to obtain a second composite plate f. The first detection apparatus 71 is disposed downstream of the first combining mechanism 31 and can detect an edge sealing state of the first composite plate e. The second detection apparatus 72 is disposed downstream of the second combining mechanism 32 and can detect a composite state of the second composite plate f.

Referring to FIG. 5, the composite mechanism is disposed upstream of the edge sealing mechanism. The composite mechanism is configured to composite the first electrode plate a and the first separator c to form the second composite plate f. After the second composite plate f is conveyed to the edge sealing mechanism, the edge sealing mechanism is configured to perform edge sealing on the second electrode plate b, the second composite plate f and the second separator d to form the first composite plate e.

Referring to FIG. 5, the second composite plate f is a plate obtained by compositing and connecting the first electrode plate a and the first separator c through the composite mechanism, so that the relative position of the first electrode plate a and the first separator c are fixed, and the first electrode plate a and the first separator c can be synchronously conveyed to the edge sealing mechanism without being prone to offset, which is beneficial to improving the position accuracy of the first electrode plate a during the conveying and edge sealing process.

Referring to FIG. 5, the first electrode plate a and the first separator c are firstly composited by the second combining mechanism 32 to obtain the second composite plate f, and then the second composite plate f, the second electrode plate b and the second separator d are subjected to edge sealing by the first combining mechanism 31 to obtain an unwound electrode assembly 200, and finally the unwound electrode assembly is wound into the electrode assembly 200 by the winding mechanism 40.

The second detection apparatus 72 is installed behind the first temporary storage mechanism 81 and in front of the first combining mechanism 31, and is configured to detect the OH of the first separator c in the second composite plate f exceeding beyond the first electrode plate a, the corner folding of the first electrode plate a, the electrode plate damage and other composite states. The first detection apparatus 71 is installed after the first combining mechanism 31, and is configured to detect the double-sided OH of the anode electrode plate covering the cathode electrode plate (that is, a size of two side edges of an active material region of the anode electrode plate exceeding two side edges of the active material region of the cathode electrode plate in a width direction), the corner folding of the electrode plate, the wrinkling of the first separator c and the second separator d, and other edge sealing states. In this way, comprehensive detection of the electrode assembly 200 produced by a composite edge-sealing winding method can be achieved, and the missed detection of composite edge-sealing defects such as OH missed detection of the electrode plate, head wrinkling, and electrode plate crushing can be mitigated.

Exemplarily, the first electrode plate a is the cathode electrode plate, and the second electrode plate b is the anode electrode plate. In the first composite plate e, the second electrode plate b is stacked between the first separator c and the second separator d. There are detection apparatuses (i.e., the second detection apparatus 72 and the first detection apparatus 71) after the second combining mechanism 32 and after the first combining mechanism 31. The second detection apparatus 72 is installed behind the first temporary storage mechanism 81 and in front of the first combining mechanism 31, and can detect composite defects such as OH of the separator exceeding the cathode, corner folding of the cathode, and electrode plate damage. The first detection apparatus 71 is installed behind the first combining mechanism 31 and in front of a serpentine deviation-rectifying device, and can detect edge-sealing defects such as double-sided OH of the anode electrode plate covering the cathode electrode plate in the first composite plate e, the corner folding of the electrode plate, and wrinkling of the separator. In addition, the winding device 100 may further include a seventh detection apparatus 77 and an eighth detection apparatus 78. The seventh detection apparatus 77 is installed behind the cathode electrode plate is unwound and in front of the first cut-off mechanism 61,and can detect a width of front and back surfaces AT11 of the cathode and defects such as defective products (such as defective products with yellow labels)and electrode plate damage. The eighth detection apparatus 78is installed behind the third cut-off mechanism 63 and in front of the winding needle 42, and is configured to detect double-sided OH of the anode covering cathode of two adjacent circles of first composite plate e on the winding mechanism 40 to avoid OH missed detection.

The winding device 100 according to some specific embodiments of the present application is described below with reference to FIG. 11.

Referring to FIG. 11, the winding device 100 includes: a second feeding mechanism 12, a first feeding mechanism 11, a third feeding mechanism 21, a fourth feeding mechanism 22, a first combining mechanism 31, a fifth combining mechanism 35, a first detection apparatus 71, a fifth detection apparatus 75, a first cutting mechanism 61, a second cut-off mechanism 62, a third cut-off mechanism 63, a fifth temporary storage mechanism 85, a fourth temporary storage mechanism 84, a winding mechanism 40, and conveying rollers disposed between the mechanisms. The conveying rollers are configured to convey materials. The first combining mechanism 31 is a composite mechanism, and the fifth combining mechanism 35 is an edge sealing mechanism.

A first separator c and a second separator d are compositely coated with a second electrode plate b, the parts of the first separator c and the second separator d extending beyond the second electrode plate b are subjected to edge sealing to obtain a fifth composite plate j, and the fifth composite plate j is then composited with the first electrode plate a to form a first composite plate e.

The fifth detection apparatus 75 is installed behind the fifth combining mechanism 35 and in front of the fourth temporary storage mechanism 84, and is configured to detect the OH of the first separator c and the second separator d covering the second electrode plate b, an edge sealing effect, wrinkling of the electrode plate, the first separator c and the second separator d, and other edge sealing states. The first detection apparatus 71 is installed behind the first combining mechanism 31 and in front of the fifth temporary storage mechanism 85, and is configured to detect the double-sided OH of the anode electrode plate covering the cathode electrode plate (that is, a size of two side edges of an active material region of the anode electrode plate exceeding two side edges of the active material region of the cathode electrode plate in a width direction), the corner folding of the electrode plate, the wrinkling of the first separator c and the second separator d, and other states. In this way, comprehensive detection of the electrode assembly 200 produced by a edge-sealing composite winding method can be achieved, and the missed detection of composite edge-sealing defects such as OH missed detection of the electrode plate, head wrinkling, and electrode plate crushing can be avoided.

Exemplarily, the first electrode plate a is the cathode electrode plate, and the second electrode plate b is the anode electrode plate. In the first composite plate e, the second electrode plate b is stacked between the first separator c and the second separator d. There are detection apparatuses (i.e., the fifth detection apparatus 75 and the first detection apparatus 71) behind the fifth combining mechanism 35 and behind the first combining mechanism 31, so that full OH detection of the electrode plate winding and finishing can be achieved. The problem of missed detection of OH at the head and tail when the anode electrode plate and the cathode electrode plate are respectively wound and detected at the winding needle in the related art is solved.

The winding device 100 according to some specific embodiments of the present application is described below with reference to FIG. 12 and FIG. 13.

Referring to FIG. 12 and fig. 13, the winding device 100 includes a first combining mechanism 31, a fifth combining mechanism 35, a winding mechanism 40, a fifth temporary storage mechanism 85, a fourth temporary storage mechanism 84, a fifth detection apparatus 75 and a first detection apparatus 71. The fifth combining mechanism 35 is configured to stack and composite a second separator d, a second electrode plate b and a first separator c in sequence to form a fifth composite plate j. The first combining mechanism 31 is configured to stack and composite the fifth composite plate j and a first electrode plate a to form a first composite plate e. The winding mechanism 40 is configured to wind the first composite plate e to form an electrode assembly 200. The fifth temporary storage mechanism 85 is disposed between the first combining mechanism 31 and the winding mechanism 40, and the first detection apparatus 71 is disposed between the first combining mechanism 31 and the fifth temporary storage mechanism 85. The fourth temporary storage mechanism 84 is disposed between the fifth combining mechanism 35 and the first combining mechanism 31, and the fifth detection apparatus 75 is disposed between the fifth combining mechanism 35 and the fourth temporary storage mechanism 84.

The fifth detection apparatus 75 may detect the fifth composite plate j, so as to acquire the composite condition of at least two components in the fifth composite plate j. The first detection apparatus 71 may detect the first composite plate e, so as to acquire the composite condition of the first electrode plate a and the fifth composite plate j. That is, the fifth detection apparatus 75 may detect the composite condition of the second electrode plate b, the second separator d and the first separator c, and the first detection apparatus 71 may detect the composite condition of the fifth composite plate j and the first electrode plate a. In this way, the quality of the first composite plate e can be strictly controlled, which can help to improve the quality of the electrode assembly 200.

The first detection apparatus 71 and the fifth detection apparatus 75 may be, but are not limited to, a charge coupled device (CCD) camera.

The winding device 100 according to some specific embodiments of the present application is described below with reference to FIG. 14.

Referring to FIG. 14, the winding device 100 includes two production devices, namely a first device 101 and a second device 102. The first device 101 and the second device 102 are disposed in parallel. In the first device 101, a second electrode plate b, a first separator c and a second separator d are pressed together to form a fifth composite plate j. In the second device 102, a first electrode plate a and the fifth composite plate j are pressed together to form a first composite plate e.

Referring to Figure 14, in the first device 101, the first separator c and the second separator d are tightly bonded to the two opposite surfaces of the second electrode plate b in a thickness direction, and the first separator c, the second electrode plate b and the second separator d are pressed together to form the fifth composite plate j. The fifth composite plate j is kept in a flattened state and conveyed to the second device 102. The fifth composite plate j being in a flattened state refers to a state in which the fifth composite plate j is not wound and may extend along a straight line. The fifth composite plate j enters the second device 102 and is pressed together with the first electrode plate a to form the first composite plate e. The first composite plate e is in a flattened state and is conveyed to the winding mechanism 40 to be wound in the winding mechanism 40.

Referring to FIG. 14, in this way, the fifth composite plate j stacked by the first separator c, the second electrode plate b and the second separator d can be made through the first device 101, and the fifth composite plate j and the first electrode plate a are stacked and pressed together through the second device 102, so that the fifth composite plate j and the first electrode plate a are tightly bonded in turn to form the first composite plate e, thereby improving the structural stability and flatness of the first composite plate e.

Referring to FIG. 14, the first detection apparatus 71 is configured to detect the relative position of the second electrode plate b and the first electrode plate a in the first composite plate e. The first detection apparatus 71 may be arranged in the conveying direction L on one side of the first combining mechanism 31. The first detection apparatus 71 may use a laser sensor, an X-ray camera, a charge coupled device ( CCD) visual sensor, etc. to accurately detect the relative position of the second electrode plate b and the first electrode plate a, thereby ensuring that the position of the fifth composite plate j and the first electrode plate a pressed together is correct. The fifth composite plate j and the first electrode plate a are pressed together by the first combining mechanism 31 to form the first composite plate e.

Referring to FIG. 14, in this way, the first detection apparatus 71 confirms that the second electrode plate b and the first electrode plate a are in the correct relative position, thereby avoiding problems occurred after the first composite plate e is wound due to poor relative position of the second electrode plate b and the first electrode plate a.

Before the second cut-off mechanism 62 cuts off the second electrode plate b, the second electrode plate b extends in the conveying direction L, and a second insert feeding mechanism 98, a first conveyor belt 14 and an adsorption plate sequentially adsorb the tail and head of the second electrode plate b in the conveying direction L. After the second electrode plate b is cut off, the second insert feeding mechanism 98 and a first deviation-rectifying apparatus 66 correct the positions of the head and tail of the second electrode plate b, and the first conveyor belt 14 and the adsorption plate adsorb the second electrode plate b. The second electrode plate b, the first separator c and the second separator d are stacked and composited by the fifth combining mechanism 35 to form a three-layer fifth composite plate j.

The fifth composite plate j enters the second device 102 through a conveying roller, and the third cut-off mechanism 63 of the second device 102 cuts the first separator c and the second separator d in the fifth composite plate j, so that sizes of the first separator c and the second separator d match the second electrode plate b. Before cutting off the first separator c and the second separator d, the first insert feeding mechanism 97, a second conveyor belt 15 and the adsorption plate sequentially adsorb the tail and the head of the fifth composite plate j in the conveying direction L. After cutting off the first separator c and the second separator d, the first insert feeding mechanism 97 adsorbs the next fifth composite plate j, a second deviation-rectifying apparatus 67 corrects the positions of the head and tail of the fifth composite plate j, and the second conveyor belt 15 and the adsorption plate adsorb the previous fifth composite plate j. The first combining mechanism 31 in the second device 102 presses the fifth composite plate j and the first electrode plate a to form the first composite plate e. The positions of the head and tail of the electrode component are detected and corrected by the first detection apparatus 71.

The winding device 100 according to some specific embodiments of the present application is described below with reference to FIG. 15.

Please refer to FIG. 15, the winding device 100 includes a fifth combining mechanism 35, a first combining mechanism 31 and a first detection apparatus 71. The fifth combining mechanism 35 is configured for press a second electrode plate b and a separator, and the first combining mechanism 31 is configured to press the second electrode plate b, a first electrode plate a and the separator.

Before the second electrode plate b and the separator are pressed together, a sixth transmission member 96 is provided. The sixth transmission member 96 can convey the second electrode plate b. Adsorption holes formed in the sixth transmission member 96 have a negative pressure. The second electrode plate b can move stably to a region of the fifth combining mechanism 35 under the action of the sixth transmission member 96.

Before the second electrode plate b, the first electrode plate a and the separator are pressed together, a fourth transmission member 94 is provided. The fourth transmission member 94 can convey the first electrode plate a. Adsorption holes formed in the fourth transmission member 94 have a negative pressure. The first electrode plate a can move stably to a region of the first combining mechanism 31 under the action of the fourth transmission member 94, so that the second electrode plate b, the first electrode plate a and the separator form a first composite plate e.

The first detection apparatus 71 uses an X-ray camera to accurately detect the relative position of the second electrode plate b and the first electrode plate a, thereby ensuring that the relative position of the second electrode plate b and the first electrode plate a is correct. Then, the first composite plate e is further conveyed to a region where a winding mechanism 40 is located, thereby completing the winding of an electrode assembly 200.

The first detection apparatus 71 is configured to sequentially detect the relative positions of multiple parts of the second electrode plate b and the first electrode plate a in a length direction during the movement of the first composite plate e.

Specifically, the first detection apparatus 71 may detect the positions of the head, tail and multiple points in the middle of the second electrode plate b in the length direction, and can detect the positions of the head, tail and multiple points in the middle of the first electrode plate a in the length direction. In combination with the positions of multiple parts of the second electrode plate b and the first electrode plate a, the relative positions of multiple parts of the second electrode plate b and the first electrode plate a in the length direction can be determined. For example, the relative position of the head of the second electrode plate b in the length direction and the head of the first electrode plate a in the length direction are determined.

In this way, the first detection apparatus 71 can detect the relative positions of multiple parts of the second electrode plate b and the first electrode plate a in the length direction, thereby improving the detection accuracy to ensure that the second electrode plate b and the first electrode plate a are in the correct position.

The first detection apparatus 71 includes an X-ray camera. Specifically, the X-ray camera can detect the relative positions of multiple parts of the second electrode plate b and the first electrode plate a in the length direction, and the X-ray camera can penetrate the separator to detect the positions of multiple parts of the second electrode plate b located in the inner layer.

It can be understood that the X-ray camera has high resolution and can penetrate objects to detect the multiple parts, thereby improving the detection precision of the relative position of the multiple parts of the second electrode plate b and the first electrode plate a in the length direction.

The winding device 100 according to some specific embodiments of the present application is described below with reference to FIG 17, and FIG. 23-FIG. 28.

Please referring to FIG. 17, the first electrode plate a, the second electrode plate b and the first separator c are unwound. The first electrode plate a and the second electrode plate b covers the first separator c in the middle and are composited together through the first combining mechanism 31 to form the first composite plate e. Then, the first composite plate e passes through the sixth temporary storage mechanism 86 and is subjected to edge sealing with the second separator d through the sixth combining mechanism 36 to form a sixth composite plate k. The winding device 100 further includes a first detection apparatus 71, a sixth detection apparatus 76, a seventh detection apparatus 77, an eighth detection apparatus 78, a ninth detection apparatus 791, and a tenth detection apparatus 792.

Exemplarily, the first electrode plate a is the cathode electrode plate, and the second electrode plate b is the anode electrode plate. In the first composite plate e, the second electrode plate b is stacked between the first separator c and the second separator d.

The seventh detection apparatus 77 is installed after the cathode electrode plate is unwound, and is configured to detect a width of a back surface AT11 of the cathode, a film width of the electrode plate, yellow-labeled defective products, metal leakage/damage of the electrode plate and other incoming material defects.

The ninth detection apparatus 791 is installed after the anode electrode plate is unwound, and is configured to detect anode damage, a film width of the electrode plate, yellow-labeled defective products, cracking/metal leakage of the electrode plate and other incoming material defects.

The first detection apparatus 71 is installed behind the sixth temporary storage mechanism 86 and in front of the sixth combining mechanism 36, and is configured to detect composite defects such as damage, crushing, and wrinkling of the anode electrode plate after compositing.

The sixth detection apparatus 76 is installed behind the sixth combining mechanism 36 and in front of a serpentine deviation-rectifying device. The sixth detection device 76 above is configured to detect the width of the front surface AT11 of the cathode electrode plate, the OH of the cathode and the anode, the OH of the separator and the cathode, the separator misalignment, corner folding and damage of the cathode and other defects after composite edge-sealing; and the sixth detection apparatus 76 below is configured to detect crushing of the anode electrode plate, wrinkling of the separator, sealed edge peeling and other defects after edge sealing.

The eighth detection apparatus 78is installed behind the third cut-off mechanism 63 and in front of the winding needle 42, and is configured to detect double-sided OH of the anode covering cathode of two adjacent circles of first composite plate e on the winding mechanism 40 to avoid OH missed detection.

The tenth detection apparatus 792 is installed behind the third cut-off mechanism 63 and in front of the winding needle 42, and is configured to detect the double-sided OH of the anode covering cathode of the same circle of electrode assembly 200 on the winding mechanism 40, to avoid OH missed detection caused by the offset of the electrode plate or the overall material line after compositing during the winding process.

Please referring to FIG. 17, the first combining mechanism 31 may include two composite rollers disposed opposite to each other. The two composite rollers can heat the first electrode plate a, the first separator c and the second electrode plate b and apply a predetermined pressure in the thickness direction F1 to bond the first electrode plate a, the first separator c and the second electrode plate b together, thereby realizing a composite connection between the first electrode plate a, the first separator c and the second electrode plate b.

Please refer to FIG. 17, the sixth combining mechanism 36 is disposed downstream of the first combining mechanism 31 and the fourth feeding mechanism 22, so that the first composite plate e formed by the first combining mechanism 31 and the second separator d unwound by the fourth feeding mechanism 22 can be conveyed to the sixth combining mechanism 36 for edge sealing to obtain the sixth composite plate k, namely, the unwound electrode assembly 200. That is, the second separator d and the first separator c in the first composite plate e are connected together. For example, the connection between the separators can be achieved by heating, pressurizing, gluing, etc.

The sixth combining mechanism 36 is used to perform edge-sealing processing on the part of the separator that exceeds the edge of the second electrode plate b in the width direction F2 and the length direction F3, that is, the four side edges of the separator are subjected to edge-sealing processing, so that the separator wraps the second electrode plate b more tightly, and the effect of preventing the second electrode plate b from overlapping with the first electrode plate a and the second electrode plate b from overlapping with a shell 320 is better, which is beneficial to reducing the risk of short circuit caused by the overlapping of the second electrode plate b and the first electrode plate a.

The sixth combining mechanism 36 may include four edge sealing rollers disposed in two opposing pairs. The four edge sealing rollers can heat four side edges of the separator and apply a predetermined pressure in the thickness direction F1 to achieve edge sealing and connection of the two layers of separators.

When performing edge sealing and connection, the portion where the two layers of separators are connected is the sealed edge. According to actual needs, the sealed edges of the two sides of the two layers of separators in the width direction F2 may extend continuously or discontinuously in the material conveying direction.

Please refer to FIG. 17, the first detection apparatus 71 is disposed downstream of the first combining mechanism 31 and is at least configured to detect the composite state of the first composite plate e.

The first detection apparatus 71 may be disposed on one side or both sides of a material thickness direction F1 according to actual needs. For example, the first detection apparatuses 71 are disposed on both sides of the first electrode plate a in the thickness direction F1 to detect parameters and other information of the active material layer on both sides of the first electrode plate a (for example, the cathode electrode plate). For example, the first detection apparatuses 71 are disposed on both sides of the material thickness direction F1 to detect information such as the relative position of the second electrode plate b and the first electrode plate a. For example, the first detection apparatus 71 is disposed on one side of the first electrode plate a in the thickness direction F1 to detect information such as defects of the first electrode plate a itself. The first detection apparatus 71 may detect multiple parts in the material length direction F3 in sequence during the movement of the material, or may perform continuous detection in the material length direction F3.

The first detection apparatus 71 is disposed downstream of the first combining mechanism 31, so that the first electrode plate a, the first separator c and the second electrode plate b can be conveyed to the first detection apparatus 71 after being composited to form the first composite plate e, and thus the composite state of the first composite plate e can be detected by the first detection apparatus 71. For example, composite defects such as folded corners, damage, crushing, and wrinkling of the electrode plate and the separator are detected.

In some related arts, the electrode plate detection of a detector is inaccurate, and defects such as overhang (OH) missed detection, and corner folding and crushing of the electrode plate are prone to being missed. The present application detects the composite state through the first detection apparatus 71, which can achieve more comprehensive detection and avoid a situation where defects are blocked and cannot be accurately detected after the first electrode plate a, the first separator c, the second electrode plate b and the second separator d are stacked to form the electrode assembly 200, thereby improving the detection accuracy and reducing the risk of missed detection of the defects during the production process of the electrode assembly 200.

The composite state of the first composite plate e includes the states of the second electrode plate b (e.g, the anode electrode plate) and the first separator c. The state of the second electrode plate b includes but is not limited to the width of the active material layer of the second electrode plate b, known defective electrode plate products (such as defective products with yellow labels), electrode plate damage, etc. The state of the first separator c includes, but is not limited to, corner folding and damage of the separator, etc. The state of the second electrode plate b and the first separator c includes but is not limited to the OH of the first separator c covering the second electrode plate b, namely, the size of the edge of the first separator c exceeding beyond the edge of the second electrode plate b in at least one direction of the width direction F2 and the length direction F3. The defective OH means that the size of the overhang does not meet the required size range.

Therefore, the first detection apparatus 71 can be configured to detect whether the width of the active material layer of the second electrode plate b meets the set range after compositing and before edge sealing, and whether the second electrode plate b and the first separator c have defects such as composite defects such as crushing so as to be discovered and eliminated in time. The first detection apparatus 71 can further detect whether the relative position of the second electrode plate b and the first separator c is accurate. For example, both sides of the first separator c in the width direction F2 and the length direction F3 can exceed the edge of the second electrode plate b by a sufficient size, which is convenient for subsequent edge sealing processing and reduces the risk of overlapping of the second electrode plate b and the first electrode plate a.

Please refer to FIG. 17, the sixth detection apparatus 76 is disposed downstream of the sixth combining mechanism 36 and is at least configured to detect the edge sealing state of the sixth composite plate e.

The sixth detection apparatus 76 is disposed downstream of the sixth combining mechanism 36, so that the first composite plate e and the second separator d can be conveyed to the sixth detection apparatus 76 after edge sealing, so as to use the sixth detection apparatus 76 to detect the state of the formed sealed edge. For example, edge sealing defects such as corner folding of the electrode plate, wrinkles at the head and tail, and separator misalignment can be detected. For example, the relative position of the sealed edge formed by the first separator c and the second separator d and the second electrode plate b may be detected, so that the separator and the sixth combining mechanism 36 are adjusted according to the detection result, and thus the width and position of the formed sealed edge meet the requirements of the separator wrapping the second electrode plate b, thereby improving the reliability of the sealed edge and enabling the separator to reliably limit and protect the second electrode plate b.

By using the sixth detection apparatus 76 to detect the edge sealing state after the first electrode plate a, the first separator c, the second electrode plate b and the second separator d are stacked and the separator is subjected to edge sealing to form the electrode assembly 200, more comprehensive detection can be achieved, the reliability of the edge sealing and connection can be improved, and the risk of missed detection of the defects during the production process of the electrode assembly 200 can be reduced.

Exemplarily, the sixth detection apparatus 76 may further be configured to detect the relative position of the first electrode plate a and the second electrode plate b, the relative position of the first separator c and the first electrode plate a, and the relative position of the second separator d and the second electrode plate b.

The sixth detection apparatus 76 detects the relative position of the first electrode plate a and the second electrode plate b, so that after the first electrode plate a, the first separator c, the second electrode plate b and the second separator d are stacked and subjected to edge sealing, the obtained relative position of the second electrode plate b and the first electrode plate a of the electrode assembly 200 is accurate. For example, the requirement that the two sides of the width direction F2 of the second electrode plate b exceeds the edge of the first electrode plate a by a certain distance is met, thereby reducing the risk of OH missed detection and better solving the lithium plating problem.

The sixth detection apparatus 76 is further configured to detect the relative position of the first separator c and the first electrode plate a, and the relative position of the second separator d and the second electrode plate b. The relative position of the first separator c and the first electrode plate a can be understood as the OH of the first separator c covering the first electrode plate a; and the relative position of the second separator d and the second electrode plate b can be understood as the OH of the second separator d covering the second electrode plate b. The OH of the first separator c covering the first electrode plate a refers to the size of the edge of the first separator c exceeding beyond the edge of the first electrode plate a in the width direction F2 and the length direction F3. The defective OH means that the size of the overhang does not meet the required size range. The same is true for the OH of the second separator d covering the second electrode plate b.

Therefore, the sixth detection apparatus 76 can detect whether the relative position of the first electrode plate a and the first separator c are accurate, and whether the relative position of the second electrode plate b and the second separator d are accurate after edge sealing of the separator, thereby improving the position accuracy of the first electrode plate a, the first separator c, the second electrode plate b and the second separator d. The sixth detection apparatus 76 can also detect whether two sides of the separator in the width direction F2 and the length direction F3 can exceed the edge of the electrode plate by a sufficient size, so as to provide sufficient space for edge sealing and improve the effect of the separator in separating the second electrode plate b and the first electrode plate a.

Please refer to FIG. 17, the seventh detection apparatus 77 is located downstream of the first feeding mechanism 11 and upstream of the first combining mechanism 31, and can detect a single unblocked first electrode plate a that has not been subjected to operations such as compositing, which can detect the state of the first electrode plate a more accurately.

The state of the first electrode plate b includes but is not limited to the width of the active material layer on the surface of at least one side of the first electrode plate a in the thickness direction F1, known defective electrode plate products (such as defective products with yellow labels), electrode plate damage, etc. By detecting the state of the first electrode plate a before compositing of the first combining mechanism 31 by the seventh detection apparatus 77, defective parts of the first electrode plate a can be discovered and removed in time, thereby improving the quality of the first electrode plate a used in the electrode assembly 200.

The seventh detection apparatus 77 may include one or more detectors. For example, in some embodiments, the seventh detection apparatus 77 includes two detectors and the two detectors are respectively disposed on both sides of the first electrode plate a in the thickness direction F1. The two detectors can detect the electrode plate state on the surfaces on both sides of the first electrode plate a in the thickness direction F1, and the detection accuracy of the state of the first electrode plate a is higher.

Please refer to FIG. 17, the seventh detection apparatus 77 is disposed on one side of the first electrode plate a facing the first separator c and is configured to detect the state of one side of the first electrode plate a facing the first separator c. The sixth detection apparatus 76 is configured to detect the state of one side of the first electrode plate a facing away from the first separator c.

The first electrode plate a is composited with the first separator c and the second electrode plate b through the first combining mechanism 31. One side of the first electrode plate a facing the first separator c is blocked by the first separator c and the second electrode plate b and is difficult to be detected. However, the present application uses the seventh detection apparatus 77 disposed between the first feeding mechanism 11 and the first combining mechanism 31 to detect the state of the electrode plate of one side of the first electrode plate a facing the first separator c before the first electrode plate a is composited, thereby preventing the defect of one side of the first electrode plate a facing the first separator c being blocked and unable to be accurately detected after compositing. Combined with the sixth detection apparatus 76 disposed downstream of the first combining mechanism 31 to detect the state of one side of the first electrode plate a facing away from the first separator c, the state of both sides of the first electrode plate a in the thickness direction F1 is detected, thereby improving the detection accuracy and reducing the risk of missed detection of the defects during the production process of the electrode assembly 200.

The seventh detection apparatus 77 can detect the state of the electrode plate on the surface of one side of the first electrode plate a in the thickness direction F1, and the sixth detection apparatus 76 can detect the state of the electrode plate on the surface of the other side of the first electrode plate a in the thickness direction F1. This is beneficial for realizing the detection of the states of the electrode plates on both sides of the first electrode plate a in the thickness direction F1 while eliminating one detector at the seventh detection apparatus 77, which is more economical.

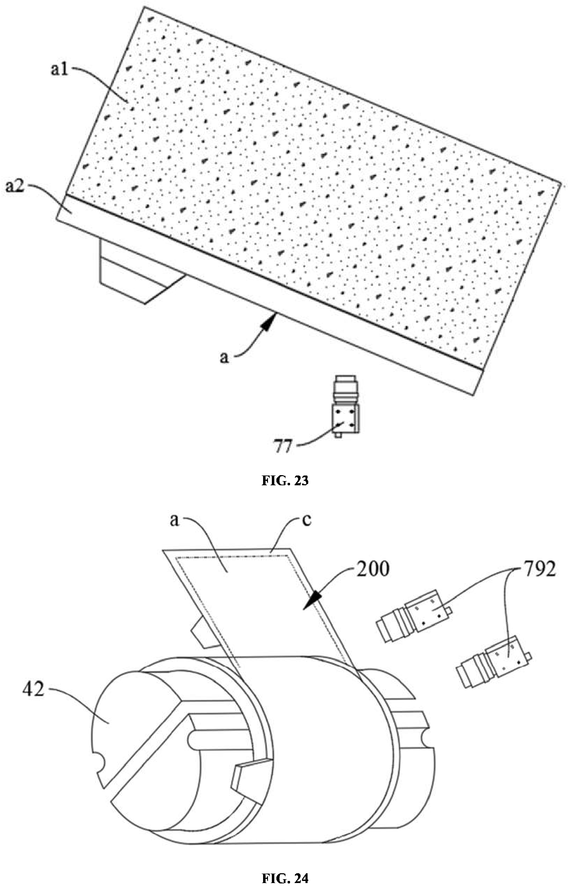

In conjunction with FIG. 23, the active material layer of the first electrode plate a includes a first film region a1 and a second film region a2. The second film region a2 is located on one side of the first film region a1 close to a tab of the first electrode plate a. The state of the first electrode plate a includes: a width of the first film region a1 on one side of the first electrode plate a facing the first separator c, a width of the second film region a2, and defects of the first electrode plate a.

The second film region a2 may be made of an AT11 material, and the first film region a1 may be made of materials such as lithium cobalt oxide, lithium iron phosphate, ternary lithium or lithium manganate. The second film area a2 is disposed to prevent burrs from forming on the first electrode plate a during the process of cutting the tab. The OH of the second electrode plate b covering the first electrode plate a refers to the active material layer of the second electrode plate b and the first film region a1 of the first electrode plate a, but does not include the second film region a2 of the first electrode plate a.

The state of the first electrode plate a includes but is not limited to the width of the first film region a1 on one side of the first electrode plate a facing the first separator c, the width of the second film region a2, known defective electrode plate products (such as defective products with yellow labels), and electrode plate damage. The seventh detection apparatus 77 may be configured to detect whether the widths of the first film region a1 and the second film region a2 meet the set range, so that the first electrode plate a has the first film region a1 and the second film region a2 of appropriate widths. By detecting through the seventh detection apparatus 77, defective parts of the first electrode plate a can be discovered and removed in time, thereby improving the quality of the first electrode plate a used in the electrode assembly 200.

In conjunction with FIG. 17 and FIG. 24, the tenth detection apparatus 792 is disposed on one side of the winding mechanism 40 and is configured to detect the relative position of the second electrode plate b and the first electrode plate a of the same circle of electrode assembly 200 on the winding mechanism 40.

The tenth detection apparatus 792 is used to detect the relative position of the second electrode plate b and the first electrode plate a of the same circle of electrode assembly 200 after winding. For example, whether one side or both sides of the second electrode plate b in the width direction F2 exceeds the edge of the first electrode plate a is detected, so that the second electrode plate b and the first electrode plate a of the electrode assembly 200 after winding are better resistant to lithium plating, further reducing the risk of OH missed detection and improving the quality of the electrode assembly 200. Moreover, the tenth detection apparatus 792 can accurately detect the relative position of the second electrode plate b and the first electrode plate a of the same circle of electrode assembly 200 when the electrode assembly 200 on the winding mechanism 40 is tightened. For example, when the separator in the electrode assembly 200 is tightened, the tenth detection apparatus 792 can more easily detect the position of the electrode plate through the separator, and the detection accuracy is higher.

The active material layer of the first electrode plate a includes a first film region a1 and a second film region a2. The second film region a2 is located on one side of the first film region a1 close to a tab of the first electrode plate a. The tenth detection apparatus 792 is configured to detect a distance between the edge of one side of the second electrode plate b away from the second film region a2 and the edge of the corresponding side of the first separator c, a distance between the edge of one side of the first film region a1 away from the second film region a2 and the edge of the corresponding side of the second electrode plate b, and a distance between the edge of one side of the second film region a2 away from the first film region a1 and the edge of the corresponding side of the first separator c. The sixth detection apparatus 76 is configured to detect a distance between the edge of one side of the first film region a1 close to the second film region a2 and the edge of the corresponding side of the second electrode plate b.

When the unwound electrode assembly 200 is wound by the winding mechanism 40, the second film region a2 of the first electrode plate a may or may not exceed the edge of the second electrode plate b in the width direction F2. When the second film region a2 of the first electrode plate a does not exceed the edge of the second electrode plate b, the OH of the two sides of the second electrode plate b covering the first electrode plate a can be detected by the tenth detection apparatus 792. When the second film region a2 of the first electrode plate a exceeds the edge of the second electrode plate b, the edge of one side of the second electrode plate b close to the second film region a2 is blocked by the first electrode plate a, and the tenth detection apparatus 792 can only detect the OH of one side of the second electrode plate b covering the first electrode plate a. However, in combination with the sixth detection apparatus 76, the sixth detection apparatus 76 can detect the OH of the other side of the second electrode plate b covering the first electrode plate a, so as to obtain the OH of the two sides of the second electrode plate b covering the first electrode plate a. Therefore, the tenth detection apparatus 792 and the sixth detection apparatus 76 can cooperate to detect the OH of the first separator c covering the second electrode plate b, the OH of the second electrode plate b covering the first electrode plate a, and the OH of the first separator c covering the first electrode plate a after compositing and edge sealing.

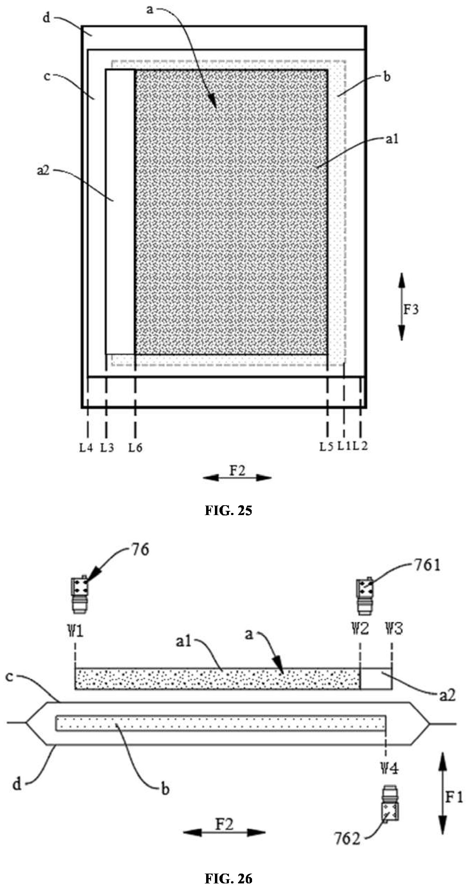

Please refer to FIG. 25, a distance between a dotted line L1 and a dotted line L2 in the figure represents the distance between the edge of one side of the second electrode plate b away from the second film region a2 and the edge of the corresponding side of the first separator c, namely, the OH of one side of the first separator c in the width direction F2 covering the second electrode plate b. A distance between a dotted line L3 and a dotted line L4 in the figure represents the distance between the edge of one side of the second film region a2 away from the first film region a1 and the edge of the corresponding side of the first separator c, namely, the OH of the other side of the first separator c in the width direction F2 covering the first electrode plate a. The tenth detection apparatus 792 is used to detect the OH of one side of the first separator c in the width direction F2 covering the second electrode plate b and the OH of the other side of the first separator c in the width direction F2 covering the first electrode plate a, which is beneficial to ensuring the effect of the first separator c separating the first electrode plate a and the second electrode plate b, and reducing the risk of short circuit caused by overlapping of the second electrode plate b and the first electrode plate a.

A distance between a dotted line L5 and a dotted line L1 in FIG. 25 represents a distance between the edge of one side of the first film region a1 away from the second film region a2 and the edge of the corresponding side of the second electrode plate b, namely, the OH of one side (one side away from the tab of the first electrode plate a) of the second electrode plate b in the width direction F2 covering the first film region a1 of the first electrode plate a. The the OH of one side of the second electrode plate b in the width direction F2 covering the first film region a1 of the first electrode plate a is detected by the tenth detection apparatus 792, which is conducive to meeting the requirement that one side of the second electrode plate b in the width direction F2 exceeds the first film region a1 of the first electrode plate a by a certain distance, thereby reducing the risk of OH missed detection.

Moreover, in combination with the sixth detection apparatus 76, the sixth detection apparatus 76 can detect a distance between the edge of one side of the first film region a1 close to the second film region a2 and the edge of the corresponding side of the second electrode plate b after compositing and edge sealing, namely, the OH of the other side of the second electrode plate b in the width direction F2 covering the second film region a2 of the first electrode plate a, which is conducive to meeting the requirement that the other side of the second electrode plate b in the width direction F2 exceeds the first film region a1 of the first electrode plate a by a certain distance, thereby reducing the risk of OH missed detection.

Therefore, the tenth detection apparatus 792 and the sixth detection apparatus 76 can cooperate to detect the OH of the first separator c covering the second electrode plate b, the OH of the second electrode plate b covering the first electrode plate a, and the OH of the first separator c covering the first electrode plate a after compositing and edge sealing, thereby reducing the risk of OH missed detection.

As shown in FIG. 17 and FIG. 26, the sixth detection apparatus 76 includes a first detector 761 and a second detector 762. The first detector 761 is disposed on one side of the first electrode plate a facing away from the first separator c. The first detector 761 is at least configured to detect an edge position of one side of the first film region a1 away from the second film region a2, an edge position of one side of the first film region a1 close to the second film region a2, and an edge position of one side of the second film region a2 away from the first film region a1. The second detector 762 is disposed on one side of the second separator d facing away from the second electrode plate b. The second detector 762 is at least configured to detect the position of the edge of the second electrode plate b on the side corresponding to the second film region a2.

Please refer to FIG. 26, the first detector 761 and the second detector 762 are disposed on both sides of the unwound electrode assembly 200 in the thickness direction F1. The first detector 761 can detect the edges of the first film region a1 and the second film region a2 on the first electrode plate a in the width direction F2. The second detector 762 can detect the edge of the second electrode plate b close to the second film region a2, which is helpful for detecting whether the relative position of the second electrode plate b and the first electrode plate a is accurate after compositing and edge sealing, for example, whether the requirement that one side of the second electrode plate b in the width direction F2 exceeds the edge of the first electrode plate a by a certain distance is met.

Please refer to FIG. 26, the edge position of one side of the first film region a1 away from the second film region a2 is shown as a dotted line W1 in the figure, the edge position of one side of the first film region a1 close to the second film region a2 is shown as a dotted line W2 in the figure, the edge position of one side of the second film region a2 away from the first film region a1 is shown as a dotted line W3 in the figure, and the position of the edge of the second electrode plate b on the side corresponding to the second film region a2 is shown as a dotted line W4 in the figure. The distance between the dotted line W2 and the dotted line W4 in the figure represents the OH of one side of the second electrode plate b in the width direction F2 exceeding the second film region a2.

Therefore, the first detector 761 and the second detector 762 can cooperate to detect whether the relative position of the second electrode plate b and the first electrode plate a after compositing and edge sealing is accurate. For example, whether the requirement that one side of the second electrode plate b in the width direction F2 exceeds the edge of the first electrode plate a by a certain distance is met, thereby reducing the risk of OH missed detection and better solving the lithium plating problem.

The detection mechanism may include a single-scanline camera or an area-array camera, wherein the image acquisition range of the single-scanline camera is larger. Therefore, as shown in FIG. 5, one single-scanline camera may be centered on both sides of the material thickness direction F1. The image acquisition range of the area-array camera is smaller. Therefore, as shown in FIG. 26, one area-array camera may be disposed at both ends of the electrode plate on one side of the material thickness direction F1, and one area-array camera may be disposed at the corresponding part of the second film region a2 on the other side of the material thickness direction F1. The OH of the edge on the side corresponding to the second film region a2 on the second electrode plate b exceeding the first film region a1 can be detected, and a range of selection for types of the detection mechanism is wide.

It is worth noting that after compositing and edge sealing, the first electrode plate a, the first separator c, the second electrode plate b and the second separator d are stacked together, wherein the first electrode plate a, the first separator c and the second electrode plate b are compositely connected together. In order to clearly show the relative position between the materials, FIG. 26 separates the first electrode plate a, the first separator c and the second electrode plate b by a certain gap.

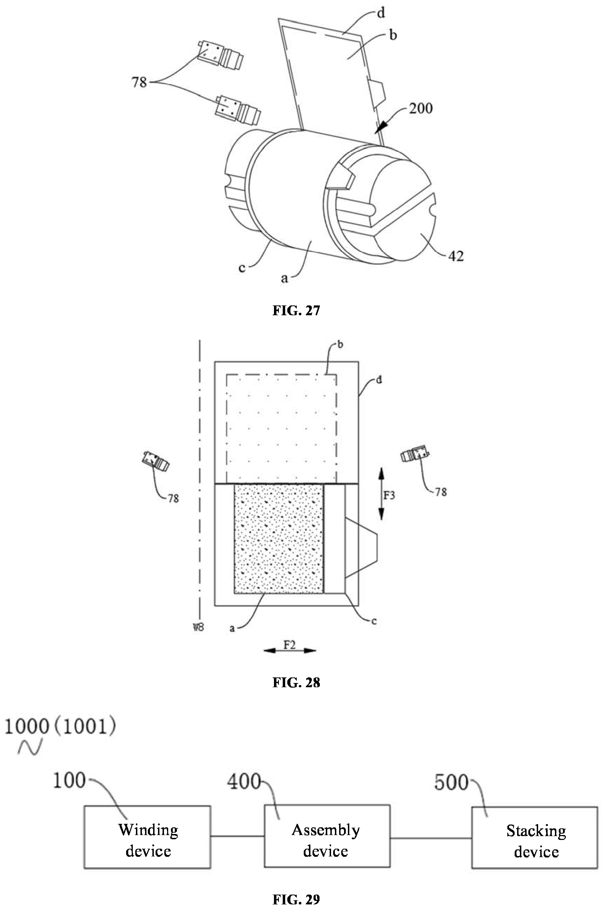

Please refer to FIG. 17 and FIG. 27. The eighth detection apparatus 78 is disposed on one side of the winding mechanism 40 and is configured to detect the relative position of the second electrode plate b and the first electrode plate a of the two adjacent circles of electrode assemblies 200 on the winding mechanism 40.

The eighth detection apparatus 78 is used to detect the relative position of the second electrode plate b and the first electrode plate a of the two adjacent circles of electrode assemblies 200 after winding, so that the second electrode plate b and the first electrode plate a of the electrode assembly 200 after winding are better resistant to lithium plating, further reducing the risk of OH missed detection and improving the quality of the electrode assembly 200.

In some embodiments, as shown in FIG. 27 to FIG. 28, the eighth detection apparatus 78 is disposed toward a connection point 250 of the electrode assembly 200 in front of the winding mechanism 40 and the electrode assembly 200 on the winding mechanism 40. The eighth detection apparatus 78 is configured to detect the position of the second electrode plate b of the electrode assembly 200 in front of the winding mechanism 40 and the position of the first electrode plate a of the electrode assembly 200 on the winding mechanism 40, or the eighth detection apparatus 78 is configured to detect the position of the first electrode plate a of the electrode assembly 200 in front of the winding mechanism 40 and the position of the second electrode plate b of the electrode assembly 200 on the winding mechanism 40.

The electrode assembly 200 in front of the winding mechanism 40 refers to a part that is about to be wound onto the winding mechanism 40, that is, the electrode assembly 200 of the outer circle among the two adjacent circles of electrode assemblies 200; the electrode assembly 200 on the winding mechanism 40 refers to a part that has just been wound onto the winding mechanism 40, that is, the electrode assembly 200 of the inner circle among the two adjacent circles of electrode assemblies 200. Therefore, the eighth detection apparatus 78 can detect the relative position of the second electrode plate b and the first electrode plate a of any two adjacent circles among the multiple circles of electrode assemblies 200 during the winding process, thereby achieving comprehensive detection of the entire wound electrode assembly 200 and better effect of reducing OH missed detection.

The eighth detection apparatus 78 is disposed toward the connection point between the electrode assembly 200 in front of the winding mechanism 40 and the electrode assembly 200 on the winding mechanism 40, which means that a detection region of the eighth detection apparatus 78 faces the connection point. The electrode assembly 200 in front of the winding mechanism 40 and the electrode assembly 200 on the winding mechanism 40 can be simultaneously detected without having to disposing detectors for the electrode assembly 200 in front of the winding mechanism 40 and the electrode assembly 200 on the winding mechanism 40 respectively, which is beneficial to omitting one detector and has better economy.

The eighth detection apparatus 78 is configured to detect the position of the second electrode plate b of the electrode assembly 200 in front of the winding mechanism 40 and the position of the first electrode plate a of the electrode assembly 200 on the winding mechanism 40, or the eighth detection apparatus 78 is configured to detect the position of the second electrode plate b of the electrode assembly 200 in front of the winding mechanism 40 and the position of the first electrode plate a of the electrode assembly 200 on the winding mechanism 40. That is, the stacking order of the second electrode plate b and the first electrode plate a in the electrode assembly 200 can be flexibly set, and the eighth detection apparatus 78 has strong adaptability to the electrode assemblies 200 with different stacking orders.

For example, as shown in FIG. 27 and FIG. 28, in each circle of electrode assembly 200, the first electrode plate a, the first separator c, the second electrode plate b and the second separator d are sequentially disposed from the outside to the inside in a radial direction of the winding mechanism 40. At this time, the second electrode plate b on the radial inner side of the electrode assembly 200 in front of the winding mechanism 40 is easy to detect and the first electrode plate a on the radial outer side of the electrode assembly 200 on the winding mechanism 40 is easy to detect. Therefore, the eighth detection apparatus 78 is configured to detect the position of the second electrode plate b of the electrode assembly 200 in front of the winding mechanism 40 and the position of the first electrode plate a of the electrode assembly 200 on the winding mechanism 40, which is conducive to improving the accuracy of detection.

For example, in each circle of electrode assembly 200, the second separator d, the second electrode plate b, the first separator c and the first electrode plate a are sequentially disposed from the outside to the inside in a radial direction of the winding mechanism 40. At this time, the first electrode plate a on the radial inner side of the electrode assembly 200 in front of the winding mechanism 40 is easy to detect and the second electrode plate b on the radial outer side of the electrode assembly 200 on the winding mechanism 40 is easy to detect. Therefore, the eighth detection apparatus 78 is configured to detect the position of the first electrode plate a of the electrode assembly 200 in front of the winding mechanism 40 and the position of the second electrode plate b of the electrode assembly 200 on the winding mechanism 40, which is conducive to improving the accuracy of detection.

Please refer to FIG. 17, the ninth detection apparatus 791 is disposed between the second feeding mechanism 12 and the first combining mechanism 31, and is configured to detect the state of the second electrode plate b (e.g, the anode electrode plate).

The second feeding mechanism 12 can carry and release the second electrode plate b. The ninth detection apparatus 791 is disposed between the second feeding mechanism 12 and the first combining mechanism 31. That is, the ninth detection apparatus 791 is disposed downstream of the second feeding mechanism 12 and upstream of the first combining mechanism 31, and can detect the unblocked second electrode plate b that has not been subjected to operations such as compositing, which can detect the state of the second electrode plate b more accurately.

The state of the second electrode plate b includes but is not limited to, the width of the active material layer of the second electrode plate b, known defective electrode plate products (such as defective products with yellow labels), electrode plate damage, etc. By detecting through the ninth detection apparatus 791, defective parts of the second electrode plate b can be discovered and removed in time, thereby improving the quality of the second electrode plate b used for the electrode assembly 200 and reducing material waste during subsequent removal. For example, if the defective parts of the second electrode plate b are detected before compositing, only the parts of the second electrode plate b need to be removed. However, if the defective parts of the second electrode plate b in the first composite plate e are detected after compositing, the first electrode plate a and the first separator c composited with the second electrode plate b need to be removed together. Therefore, by detecting the state of the second electrode plate b before compositing through the ninth detection apparatus 791, the waste of the first electrode plate a and the first separator c can be at least reduced, the subsequent continuous unwinding of the second separator d can be facilitated, and the connection between the multiple unwound electrode assemblies 200 can be achieved through the second separator d.

In some embodiments, a mechanism for cutting off the material can be disposed downstream of the first detection apparatus 71, the seventh detection apparatus 77 and the ninth detection apparatus 791, so as to promptly remove the defective parts of the material according to the detection result of the detection mechanism, thereby improving the quality of the material.

Please refer to FIG. 17, the winding device 100 may further include a third deviation-rectifying apparatus 68, and the third deviation-rectifying apparatus 68 is disposed between the sixth combining mechanism 36 and the winding mechanism 40. When the eighth detection apparatus 78 detects that the second electrode plate b and the first electrode plate a of the two adjacent circles of electrode assemblies 200 are offset, the third deviation-rectifying apparatus 68 can be used to rectify the conveying position of the strip-shaped electrode assembly 200, so as to defective parts the relative position of the two circles of electrode assemblies 200 after winding, thereby reducing OH missed detection caused by electrode plate offset or overall offset of the electrode assembly 200 after compositing.

Please refer to FIG. 17, the winding device 100 further includes a third cut-off mechanism 63 and a sixth temporary storage mechanism 86. The third cut-off mechanism 63 is disposed between the sixth combining mechanism 36 and the winding mechanism 40 and is configured to cut off the electrode assembly 200. The sixth temporary storage mechanism 86 is disposed between the first combining mechanism 31 and the sixth combining mechanism 36 and is configured to temporarily store the first composite plate e.

The third cut-off mechanism 63 may include a cutting roller, a cutting knife and other components, which only need to be able to cut off the electrode assembly 200. The third cut-off mechanism 63 is disposed between the sixth combining mechanism 36 and the winding mechanism 40, and can cut the unwound strip-shaped electrode assembly 200 into multiple independent electrode assemblies 200. The sixth temporary storage mechanism 86 can store the first composite plate e composited by the first combining mechanism 31 by winding, stacking, etc.

During the production process, the sixth temporary storage mechanism 86 temporarily stores the materials and can continuously convey the materials downstream, so that the third cut-off mechanism 63 can perform a cut-off operation without deceleration and is not affected by the composite operation upstream of the sixth temporary storage mechanism 86. The composite precision requirement is relatively high, resulting in a slow operating speed. The sixth temporary storage mechanism 86 is configured to temporarily store the first composite plate e after the first electrode plate a, the first separator c and the second electrode plate b are composited. The third cut-off mechanism 63 is configured to cut the second separator d connected between the adjacent electrode assemblies 200, which has the low precision requirement and the high operating rate. Through the temporary storage of the sixth temporary storage mechanism 86, in a process of reducing the composite speed of the first combining mechanism 31, the sixth temporary storage mechanism 86 can stably and continuously convey the first composite plate e to the sixth combining mechanism 36 without reducing the edge sealing rate, and then the third cut-off mechanism 63 can cut off the strip-shaped electrode assembly 200 without deceleration, thereby improving the winding efficiency and thus improving the overall production capacity.

Please refer to FIG. 17, the winding device 100 further includes a detection mechanism and a calibration mechanism. The detection mechanism includes at least one of the first detection apparatus 71, the sixth detection apparatus 76, the seventh detection apparatus 77, the tenth detection apparatus 792, the eighth detection apparatus 78 and the ninth detection apparatus 791. The calibration mechanism is disposed on one side of the detection mechanism and is configured to detect the position of the detection mechanism and issue a prompt message when the position of the detection mechanism is offset. The calibration mechanism is further configured to provide a datum line (for example, as shown by a dotted line W8 in FIG. 28). The detection mechanism detects the positions of the second electrode plate b, the first electrode plate a, the first separator c and the second separator d based on the datum line.

The detection mechanism may include one or more of the first detection apparatus 71, the sixth detection apparatus 76, the seventh detection apparatus 77, the tenth detection apparatus 792, the eighth detection apparatus 78 and the ninth detection apparatus 791. The detection mechanism may also include other detection mechanisms in addition to the first detection apparatus 71, the sixth detection apparatus 76, the seventh detection apparatus 77, the tenth detection apparatus 792, the eighth detection apparatus 78 and the ninth detection apparatus 791, and the calibration mechanism is disposed corresponding to at least one of the detection mechanisms.

In some related arts, the detection mechanism is installed in a mode of a cantilever bracket. During long-term use, the cantilever bracket may be subjected to deformation, looseness, abrasion, and other problems, resulting in distortion of the data collected by the detection mechanism, such as variation in the resolution of the detection mechanism. The present application sets up the calibration mechanism, which can detect the position of the detection mechanism during its use, issue the prompt message and make the detection mechanism stop operation when the position of the detection mechanism is offset, so as to prompt the staff to make adjustments, which is conducive to reducing the risk of problems such as distortion of the data collected by the detection mechanism and improving the detection accuracy of the detection mechanism.

The calibration mechanism is further configured to provide a datum line, so that the detection mechanism can determine the position of the material according to the datum line and the data of the edge of the material such as the second electrode plate b, the first electrode plate a, the first separator c and the second separator d. For example, the datum line and the data of the edge of the second electrode plate b are detected, and the data are theoretically calculated to obtain the distance between the datum line and the edge of the second electrode plate b, thereby determining the position of the second electrode plate b. Moreover, the datum line will not offset due to the position offset of the detection mechanism, the material offset, etc., so that the position of the material acquired through the datum line is more accurate, the detection accuracy of the detection mechanism is improved. Moreover, it is beneficial to calibrate the position of the detection mechanism through the datum line to judge whether the detection mechanism is offset or loose, thereby improving the detection accuracy of the calibration mechanism on the position of the detection mechanism.

For example, in some embodiments, each detection mechanism is disposed corresponding to the calibration mechanism, so that the detection accuracy of each detection mechanism is improved. In some embodiments, the datum line of the calibration mechanism runs through the entire field of view of the detection mechanism, making it easier for the detection mechanism to detect the position of the datum line. In some embodiments, the calibration mechanism includes a laser calibrator or a fixed-size calibration block, so as to detect the position of the calibration mechanism. For example, after adjusting the brightness and angle of a light source of the detection mechanism to the best effect, each pixel point of the detection mechanism is calibrated using the laser calibrator or the fixed-size calibration block to determine a value range of the optimal position of the detection mechanism. When the resolution of a single pixel point of the detection mechanism changes, it means that the detection mechanism has been skewed, and the calibration mechanism issues the prompt message to remind the staff to adjust the position of the detection mechanism.

Therefore, in the above technical solution, by disposing the calibration mechanism, the position of the detection mechanism can be detected during the use of the detection mechanism, reducing the risk of problems such as the offset of the detection mechanism, and helping to reduce the risk of problems such as the distortion of the collected data due to the position offset of the detection mechanism. The calibration mechanism can provide the datum line, which is convenient for the detection mechanism to determine the position of the material based on the datum line. The datum line will not be offset due to the position offset of the detection mechanism, which is conducive to calibrating the position of the detection mechanism through the datum line to judge whether the detection mechanism is offset, thereby improving the position accuracy and detection accuracy of the detection mechanism.

The winding device 100 according to some specific embodiments of the present application is described below with reference to FIG. 18.

Please refer to FIG. 18, the winding device 100 provided in the first embodiment of the present application includes a first feeding mechanism 11, a third feeding mechanism 21, a second feeding mechanism 12, a fourth feeding mechanism 22, a first combining mechanism 31, a sixth combining mechanism 36 and a winding mechanism 40. The winding device 100 further includes a first cut-off mechanism 61, a second cut-off mechanism 62, a third cut-off mechanism 63 and a sixth temporary storage mechanism 86. The first feeding mechanism 11, the third feeding mechanism 21 and the second feeding mechanism 12 are disposed on a feed side of the first combining mechanism 31, the winding mechanism 40 is disposed on a discharge side of the first combining mechanism 31, and the sixth temporary storage mechanism 86 is disposed downstream of the first combining mechanism 31. The fourth feeding mechanism 22 is disposed downstream of the first combining mechanism 31, and the winding mechanism 40 includes a turret 41 and a plurality of winding needles 42.

The working principle of the winding device 100 is as follows: a first electrode plate a, a second electrode plate b and a first separator c are unwound, and the first electrode plate a and the second electrode plate b cover the first separator c in the middle and are composited together through the first combining mechanism 31 to form a first composite plate e. Whether the first composite plate e has defects is detected through a first detection apparatus 71. During subsequent transmission and winding, the first electrode plate a, the second electrode plate b and the first separator c will not move relative to each other. Then, the first composite plate e passes through the sixth temporary storage mechanism 86 and is converged with a second separator d through the sixth combining mechanism 36 to form a sixth composite plate k. Whether the sixth composite plate k has defects is detected through a sixth detection apparatus 76, which can guide deviation rectifying of the separator.

The winding device 100 according to some specific embodiments of the present application is described below with reference to FIG. 19.

Please refer to FIG. 19, compared with the embodiment shown in FIG. 18 above, a third cut-off mechanism 63 is located upstream of a winding mechanism 40, and the winding device 100 further includes a first transmission member 91 disposed between the third cut-off mechanism 63 and the winding mechanism 40.

The working principle of the winding device 100 is as follows: a first electrode plate a, a second electrode plate b and a first separator c are unwound, and the first electrode plate a and the second electrode plate b cover the first separator c in the middle and are composited together through a first combining mechanism 31 to form a first composite plate e. The first composite plate e is detected through a first detection apparatus 71. During subsequent transmission and winding, the first electrode plate a, the second electrode plate b and the first separator c will not move relative to each other. Then, the first composite plate e passes through the sixth temporary storage mechanism 86 and is converged with a second separator d together to form a sixth composite plate k. The sixth composite plate k is detected through a sixth detection apparatus 76, which can guide deviation rectifying of the separator.

The winding device 100 according to some specific embodiments of the present application is described below with reference to FIG. 20.

Please refer to FIG. 20, compared with the embodiment shown in FIG. 19 above, a fourth feeding mechanism 22 is disposed on one side of a winding mechanism 40, and a winding needle 42 on a winding workstation 4101 is configured to allow a second separator d to be converged with a first composite plate e. A first electrode plate a, a second electrode plate b and a first separator c are unwound, and the first electrode plate a and the second electrode plate b cover the first separator c in the middle and are composited together through a first combining mechanism 31 to form a first composite plate e. The first composite plate e is detected through a first detection apparatus 71. The first composite plate e and the second separator d are respectively fed into the winding needle 42.

The winding device 100 according to some specific embodiments of the present application is described below with reference to FIG. 21.

Please refer to FIG. 21, compared with the embodiment shown in FIG. 20 above, two third cut-off mechanisms 63 are provided. One third cut-off mechanism 63 is disposed between a first combining mechanism 31 and a winding mechanism 40 and is configured to cut off a first separator c, and the other third cut-off mechanism 63 is disposed between a fourth feeding mechanism 22 and the winding mechanism 40 and is configured to cut off a second separator d. The winding device 100 further includes a second transmission member 92 and a third transmission member 93, which are respectively disposed between the two third cut-off mechanism 63 and the winding mechanism 40. A first electrode plate a, a second electrode plate b and the first separator c are unwound, and the first electrode plate a and the second electrode plate b cover the first separator c in the middle and are composited together through a first combining mechanism 31 to form a first composite plate e. The first composite plate e is detected through a first detection apparatus 71. Then, the first composite plate e and the second separator d are respectively fed into the winding needle 42.

The winding mechanism 40 according to some specific embodiments of the present application is described below with reference to FIG. 22.

Referring to FIG. 22, in some embodiments, the winding mechanism 40 includes a turret 41 and a winding needle 42. The turret 41 is provided with a plurality of workstations 401, and the plurality of workstations 401 are sequentially distributed in a circumferential direction of the turret 41. The winding needle 42 is disposed on the turret 41 and can rotate along with the turret 41 to each workstation 401 in sequence. The turret 41 refers to an apparatus that can drive the winding needle 42 to rotate. The winding needle 42 refers to a component for rotating to wind an electrode assembly 200.

Based on the above structure, under the rotation of the turret 41, the winding needle 42 can rotate along with the turret 41 to the multiple workstations 401 in sequence, so as to perform corresponding processing operations at each workstation 401. In this way, the first composite plate e can be wound to form the electrode assembly 200 after passing through the multiple workstations 401 in sequence, thereby ensuring the molding quality of the electrode assembly 200 to a certain extent.

In some embodiments, referring to FIG. 22, the plurality of winding needles 42 are provided, the plurality of winding needles 42 are sequentially disposed on the turret 41 in the circumferential direction, and the plurality of winding needles 42 can be located at the multiple workstations 401, respectively.

The plurality of winding needles 42 are respectively located at the multiple workstations 401, so that the plurality of winding needles 42 can perform processing operations at the corresponding workstations 401, thereby improving the winding efficiency of the winding mechanism 40 and improving the production efficiency of the electrode assembly 200.

As an example, as shown in FIG. 22, the number of the workstations 401 is the same as the number of the winding needles 42, and the plurality of winding needles 42 can be located at the multiple workstations 401 in a one-to-one correspondence mode.

Since a combining operation and a winding operation of an anode electrode plate and a cathode electrode plate are set separately, there is no need for the anode electrode plate and the cathode electrode plate to be concentrated at the winding needle 42 of the winding mechanism 40 for combining and winding, so that there may be a larger space between the corresponding feeding mechanism and the winding mechanism 40, and thus there is a larger space near the winding mechanism 40, which can be used for layout of the plurality of winding needles 42 and multiple workstations 401 above. In this way, it is conducive to improving the production efficiency of the electrode assembly 200.

In some embodiments, referring to FIG. 22, the multiple workstations 401 include a winding workstation 4101 and a taping workstation 4103. The winding needles 42 are configured to wind the first composite plate e at the winding workstation 4101, and are configured to tape the electrode assembly 200 at the taping workstation 4103.

It can be understood that the number of the above-mentioned workstations 401 is at least two, wherein the two workstations 401 are the winding workstation 4101 and the taping workstation 4103 respectively.

Based on the above structure, when the winding mechanism 40 is operating, the turret 41 first rotates to rotate the winding needles 42 to the winding workstation 4101, and the winding needles 42 wind the first composite plate e at the winding workstation 4101 to form the electrode assembly 200. Then, the turret 41 rotates to rotate the winding needles 42 and the electrode assembly 200 thereon to the taping workstation 4103 for the electrode assembly 200 to undergo final taping. In this way, the problem of the electrode assembly 200 being scattered can be mitigated, thereby ensuring the quality of the electrode assembly 200 to a certain extent.

In some embodiments, referring to FIG. 22, the winding mechanism 40 may further include a taping roller 432. The taping roller 432 is located at the taping workstation 4103 and is configured to tape the electrode assembly 200.

Based on the above structure, when the winding needles 42 and the electrode assembly 200 thereon rotate to the taping workstation 4103, the electrode assembly 200 will slide relative to the taping roller 432 under the rotation of the turret 41, so that the taping roller 432 may tape the electrode assembly 200.

In some embodiments, referring to FIG. 22, a rotation direction of the taping roller 432 is opposite to that of the turret 41, which facilitates taping of the electrode assembly 200 by the taping roller 432 during the rotation of the turret 41.

In some embodiments, referring to FIG. 22, the multiple workstations 401 may further include a finishing workstation 4102. The winding workstation 4101, the finishing workstation 4102, and the taping workstation 4103 are sequentially distributed in the circumferential direction. The winding needles 42 are configured to finish the electrode assembly 200 at the finishing workstation 4102.

It can be understood that the number of the above-mentioned workstations 401 is at least three, wherein the three workstations 401 are the winding workstation 4101, the finishing workstation 4102 and the taping workstation 4103 respectively.

Based on the above structure, when the winding mechanism 40 is operating, the turret 41 first rotates to rotate the winding needles 42 to the winding workstation 4101, and the winding needles 42 wind the first composite plate e at the winding workstation 4101 to form the electrode assembly 200. Then, the turret 41 rotates to rotate the winding needles 42 and the electrode assembly 200 thereon to the finishing workstation 4102 to finish the electrode assembly 200. Then, the turret 41 rotates to rotate the winding needles 42 and the electrode assembly 200 thereon to the taping workstation 4103 for the electrode assembly 200 to undergo taping.

In this way, by adding the finishing workstation 4102, the electrode assembly 200 can be finished, which facilitates the subsequent taping of the electrode assembly 200. The problem of the electrode assembly 200 being scattered can be mitigated, thereby ensuring the quality of the electrode assembly 200 to a certain extent.

In some embodiments, referring to FIG. 22, the winding mechanism 40 may further include a finishing roller 431. The finishing roller 431 is located at the finishing workstation 4102 and is configured to finish the electrode assembly 200.

Based on the above structure, when the winding needles 42 and the electrode assembly 200 thereon rotate to the finishing workstation 4102, the electrode assembly 200 will slide relative to the finishing roller 431 under the rotation of the turret 41, so that the finishing roller 431 rolls a finishing position of the electrode assembly 200 to achieve the finishing of the electrode assembly 200, thereby facilitating the smooth progress of the subsequent taping operation of the electrode assembly.

In some embodiments, referring to FIG. 22, a rotation direction of the finishing roller 431 is opposite to that of the turret 41, which facilitates the operation of the electrode assembly 200 by the finishing roller 431 during the rotation of the turret 41.

In some embodiments, referring to FIG. 22, the multiple workstations 401 may further include an unloading workstation 4104. The winding workstation 4101, the taping workstation 4103, and the unloading workstation 4104 are sequentially distributed in the circumferential direction. The winding needles 42 are configured to unload the electrode assembly 200 at the unloading workstation 4104.

Based on the above structure, when the winding mechanism 40 is operating, the turret 41 first rotates to rotate the winding needles 42 to the winding workstation 4101, and the winding needles 42 wind the first composite plate e at the winding workstation 4101 to form the electrode assembly 200. Then, the turret 41 rotates to rotate the winding needles 42 and the electrode assembly 200 thereon to the taping workstation 4103 for the electrode assembly 200 to undergo taping. Then, the turret 41 rotates to rotate the winding needles 42 and the electrode assembly 200 thereon to the unloading workstation 4104 for the electrode assembly 200 to be unloaded.

In this way, by adding the unloading workstation 4104, the electrode assembly 200 can be unloaded at the unloading workstation 4104 without affecting the operation of other winding needles 42.

In some embodiments, referring to FIG. 22, the winding mechanism 40 may further include an unloading mechanism 50, and the unloading mechanism 50 is configured to unload the electrode assembly 200 at the unloading workstation 4104.

The unloading mechanism 50 refers to a mechanism for unloading the electrode assembly 200. The unloading mechanism 50 may be, but is not limited to, a clamping jaw 51.

It can be understood that the turret 41 may include a winding workstation 4101, a finishing workstation 4102, a taping workstation 4103 and an unloading workstation 4104. The winding workstation 4101, the finishing workstation 4102, the taping workstation 4103 and the unloading workstation 4104 are distributed in sequence in the circumferential direction. When the winding mechanism 40 is operating, the turret 41 rotates to first rotate the winding needles 42 to the winding workstation 4101, so that the winding needles 42 wind the first composite plate e at the winding workstation 4101 to form the electrode assembly 200. Then, the turret 41 rotates the winding needles 42 and the electrode assembly 200 thereon to the finishing workstation 4102, and the electrode assembly 200 is finished by the finishing roller 431 of the finishing workstation 4102. Then, the turret 41 rotates the winding needles 42 and the electrode assembly 200 thereon to the taping workstation 4103, and the electrode assembly 200 is taped by the taping roller 432. Then, the turret 41 rotates the winding needles 42 and the electrode assembly 200 thereon to the unloading workstation 4104, and the electrode assembly 200 is unloaded by the unloading mechanism 50. Then, the turret 41 rotates the winding needles 42 to the winding workstation 4101, so that the winding needles 42 wind the next electrode assembly 200.

Please refer to FIG. 22, the turret 41 may further include a retraction workstation 4105. The winding workstation 4101, the finishing workstation 4102, the taping workstation 4103, the unloading workstation 4104 and the retraction workstation 4105 are distributed in sequence in the circumferential direction. It can be understood that after the turret 41 rotates the winding needles 42 and the electrode assembly 200 thereon to the unloading workstation 4104 and the electrode assembly 200 is unloaded through the unloading mechanism 50, the turret 41 rotates the winding needles 42 to the retraction workstation 4105, and the winding needles 42 retract into the turret 41. Finally, the turret 41 rotates the winding needles 42 to the winding workstation 4101, and the winding needles 42 extend to wind the first composite plate e to form the electrode assembly 200. By adding the retraction workstation 4105, the winding needles 42 are retracted and then extend, which facilitates the winding needles 42 to clamp and wind the first composite plate e.

Please refer to FIG. 22, five winding needles 42 are provided. The five winding needles 42 can be distributed at the winding workstation 4101, the finishing workstation 4102, the taping workstation 4103, the unloading workstation 4104 and the retracting workstation 4105 in a one-to-one correspondence mode. The five winding needles 42 may be rotated to the winding workstation 4101 in sequence, or to the finishing workstation 4102 in sequence, or to the taping workstation 4103 in sequence, or to the taping workstation 4103 in sequence, or to the unloading workstation 4104 in sequence, or to the retracting workstation 4105 in sequence. In this way, it helps to improve the winding efficiency of the winding mechanism 40, thereby improving the production efficiency of the electrode assembly 200.

Please refer to FIG. 22, the winding mechanism 40 includes a turret 41 and a plurality of winding needles 42 disposed on the turret 41. The plurality of winding needles 42 are distributed on the turret 41 at intervals in the circumferential direction. The turret 41 is provided with a winding workstation 4101, a finishing workstation 4102, a taping workstation 4103, an unloading workstation 4104 and a retraction workstation 4105 which are distributed in sequence in the circumferential direction. The turret 41 can rotate, and the winding needles 42 can rotate along with the turret 41 in sequence to the winding workstation 4101, the finishing workstation 4102, the taping workstation 4103, the unloading workstation 4104 and the retraction workstation 4105. The plurality of winding needles 42 can be located at the winding workstation 4101, the finishing workstation 4102, the taping workstation 4103, the unloading workstation 4104 and the retraction workstation 4105 in a one-to-one correspondence mode. In this way, it helps to improve the winding efficiency of the winding mechanism 40, thereby improving the production efficiency of the electrode assembly 200.

As shown in FIG. 29, the present application further proposes a battery processing device 1001. The battery processing device 1001 includes the winding device 100 according to any of the above embodiments. The winding device 100 is configured to process an electrode assembly 200.

In some embodiments, as shown in FIG. 29, the battery processing device 1001 may further include an assembly device 400, and the assembly device 400 is configured to assemble the electrode assembly 200, a shell 3011, etc. to obtain a battery cell 301.

In some embodiments, as shown in FIG. 29, the battery processing device 1001 may further include a stacking device 500, and the stacking device 500 is configured to stack a plurality of battery cells to form a battery.

Please refer to FIG. 29, the battery processing device 1001 provided by the embodiment of the present application includes a winding device 100. The winding device 100 in the present embodiment may be the winding device 100 of any of the above embodiments, which will not be repeated here.

The battery processing device 1001 provided by the embodiment of the present application can improve the layout rationality of the winding device 100 by adopting the winding device 100 involved in the above embodiments, thereby improving the layout rationality of the battery processing device 1001, helping to improve the quality of the electrode assembly 200, and thus improving the quality of the battery 300.

In some embodiments, referring to FIG. 29, the battery processing device 1001 further includes an assembly device 400 and a stacking device 500. The assembly device 400 is configured to assemble the electrode assembly 200 to obtain a battery cell 301, and the stacking device 500 is configured to stack the plurality of battery cells 301 to form a battery 300. With such arrangement, the battery 300 can be processed.

As shown in FIG. 29, the present application further proposes a battery production line 1000. The battery production line 1000 may includes the winding device 100 according to any of the above embodiments or the battery processing device 1001 according to any of the above embodiments. The battery production line 1000 provided by the embodiment of the present application can improve the layout rationality of the winding device 100 by adopting the winding device 100 or the battery processing device 1001 involved in the above embodiments, thereby improving the layout rationality of the battery processing device 1001, helping to improve the quality of the electrode assembly 200, and thus improving the quality of the battery 300.

It should be noted that the embodiments in the present application and features in the embodiments may be mutually combined in the case of no conflict.

The above descriptions are merely preferred embodiments of the present application and are not intended to limit the present application. For those skilled in the art, the present application may have various modifications and changes. Any modifications, equivalent replacements, improvements, etc. made within the spirit and principle of the present application shall fall within the scope of protection of the present application.

## Claims

1. A winding device, configured to produce an electrode assembly, wherein the electrode assembly comprises a first electrode plate, a second electrode plate, a first separator, and a second separator, and the winding device comprises:
a first feeding mechanism, configured to release the first electrode plate;
a second feeding mechanism, configured to release the second electrode plate;
a third feeding mechanism, configured to release the first separator;
a fourth feeding mechanism, configured to release the second separator;
a first combining mechanism, disposed downstream of the first feeding mechanism, the second feeding mechanism, and the third feeding mechanism, and configured to combine incoming materials comprising at least the first electrode plate, the first separator, and the second electrode plate into a first composite plate;
a winding mechanism, located downstream of the first combining mechanism, and configured to wind an incoming material comprising at least the first composite plate to form the electrode assembly; and
a first detection apparatus, located between the first combining mechanism and the winding mechanism and configured to detect the first composite plate.

2. The winding device according to claim 1, wherein the fourth feeding mechanism is disposed upstream of the first combining mechanism, and the first combining mechanism is configured to combine incoming materials comprising at least the first electrode plate, the first separator, the second electrode plate and the second separator into the first composite plate.

3. The winding device according to claim 2, wherein the first combining mechanism is an edge sealing mechanism, and is configured to seal and connect at least one of two side edges of the first separator and the second separator in a width direction.

4. The winding device according to claim 2 or 3, further comprising:
a second combining mechanism, located upstream of the first combining mechanism and located downstream of the first feeding mechanism and the third feeding mechanism, wherein the second combining mechanism is configured to combine the first electrode plate and the first separator into a second composite plate.

5. The winding device according to claim 4, wherein the second combining mechanism is a composite mechanism, and is configured to fixedly connect the first electrode plate with the first separator in the second composite plate.

6. The winding device according to claim 4 or 5, further comprising:
a second detection apparatus, located between the second combining mechanism and the first combining mechanism and configured to detect the second composite plate.

7. The winding device according to any one of claims 4-6, further comprising:
a first temporary storage mechanism, disposed between the second combining mechanism and the first combining mechanism and configured to temporarily store the second composite plate.

8. The winding device according to claim 7, comprising a first cut-off mechanism for cutting off the first electrode plate, wherein the first cut-off mechanism is disposed between the first feeding mechanism and the second combining mechanism.

9. The winding device according to any one of claims 4-8, wherein the second electrode plate and the second separator are fed into the first combining mechanism separately, the winding device comprises a second cut-off mechanism for cutting off the second electrode plate, and the second cut-off mechanism is disposed between the second feeding mechanism and the first combining mechanism.

10. The winding device according to claim 9, wherein the second cut-off mechanism comprises a cam cutter.

11. The winding device according to any one of claims 3-5, further comprising:
a third combining mechanism, located upstream of the first combining mechanism and located downstream of the second feeding mechanism and the fourth feeding mechanism, wherein the third combining mechanism is configured to combine the second electrode plate and the second separator into a third composite plate.

12. The winding device according to claim 11, wherein the third combining mechanism is a composite mechanism, and is configured to fixedly connect the second electrode plate with the second separator in the third composite plate.

13. The winding device according to claim 11 or 12, further comprising:
a third detection apparatus, located between the third combining mechanism and the first combining mechanism and configured to detect the third composite plate.

14. The winding device according to any one of claims 11-13, further comprising:
a second temporary storage mechanism, disposed between the third combining mechanism and the first combining mechanism and configured to temporarily store the third composite plate.

15. The winding device according to claim 14, comprising a second cut-off mechanism for cutting off the second electrode plate, wherein the second cut-off mechanism is disposed between the second feeding mechanism and the third combining mechanism.

16. The winding device according to claim 2, further comprising:
a fifth combining mechanism, located upstream of the first combining mechanism and located downstream of the third feeding mechanism, the second feeding mechanism and the fourth feeding mechanism, wherein the fifth combining mechanism is configured to combine the first separator, the second electrode plate and the second separator into a fifth composite plate.

17. The winding device according to claim 16, wherein the fifth combining mechanism is an edge sealing mechanism, and is configured to seal and connect at least one of two side edges of the first separator and the second separator in a width direction.

18. The winding device according to claim 16, wherein the fifth combining mechanism is a composite mechanism, and is configured to fixedly connect the second electrode plate in the fifth composite plate with the first separator and the second separator respectively.

19. The winding device according to any one of claims 16-18, wherein the first combining mechanism is a composite mechanism, and is configured to fixedly connect the fifth composite plate with the first electrode plate.

20. The winding device according to any one of claims 16-19, further comprising:
a fifth detection apparatus, located between the fifth combining mechanism and the first combining mechanism and configured to detect the fifth composite plate.

21. The winding device according to any one of claims 16-20, further comprising:
a fourth temporary storage mechanism, disposed between the fifth combining mechanism and the first combining mechanism and configured to temporarily store the fifth composite plate.

22. The winding device according to claim 21, comprising a second cut-off mechanism for cutting off the second electrode plate, wherein the second cut-off mechanism is disposed between the second feeding mechanism and the fifth combining mechanism.

23. The winding device according to any one of claims 16-22, further comprising:
a fifth temporary storage mechanism, disposed between the first combining mechanism and the winding mechanism and configured to temporarily store the first composite plate.

24. The winding device according to claim 23, comprising a first cut-off mechanism for cutting off the first electrode plate, wherein the first cut-off mechanism is disposed between the first feeding mechanism and the first combining mechanism.

25. The winding device according to any one of claims 2-24, comprising a third cut-off mechanism for cutting off the first separator and the second separator, wherein the third cut-off mechanism is disposed between the first combining mechanism and the winding mechanism.

26. The winding device according to claim 1, wherein a position where the second separator and the first composite plate are combined is located downstream of the first detection apparatus.

27. The winding device according to claim 26, wherein the first combining mechanism is a composite mechanism, and is configured to fixedly connect both the first electrode plate and the second electrode plate in the first composite plate with the first separator.

28. The winding device according to claim 26 or 27, further comprising:
a sixth combining mechanism, located between the first combining mechanism and the winding mechanism, wherein the fourth feeding mechanism is located upstream of the sixth combining mechanism, and the sixth combining mechanism is configured to combine the first composite plate and the second separator into a sixth composite plate.

29. The winding device according to claim 28, wherein the sixth combining mechanism is an edge sealing mechanism, and is configured to seal and connect two side edges of the first separator and the second separator in a width direction.

30. The winding device according to claim 28 or 29, further comprising:
a sixth detection apparatus, located between the sixth combining mechanism and the winding mechanism and configured to detect the sixth composite plate.

31. The winding device according to any one of claims 28-30, comprising a third cut-off mechanism for cutting off the first separator and the second separator, wherein the third cut-off mechanism is disposed between the sixth combining mechanism and the winding mechanism.

32. The winding device according to any one of claims 26-31, further comprising:
a sixth mechanism, disposed between the first combining mechanism and the winding mechanism and configured to temporarily store the first composite plate.

33. The winding device according to claim 31, comprising a first cut-off mechanism for cutting the first electrode plate and a second cut-off mechanism for cutting off the second electrode plate, wherein the first cut-off mechanism is disposed between the first feeding mechanism and the first combining mechanism, and the second cut-off mechanism is disposed between the second feeding mechanism and the first combining mechanism.

34. The winding device according to any one of claims 26-33, wherein the first electrode plate, the first separator and the second electrode plate are fed into the first combining mechanism separately.

35. The winding device according to any one of claims 26-34, wherein the fourth feeding mechanism and the first composite plate are combined at the winding mechanism.

36. A battery processing device, comprising the winding device according to any one of claims 1-35.

37. A battery production line, comprising the winding device according to any one of claims 1-35; or comprising the battery processing device according to claim 36.
